(19) Europäisches Patentamt
European Patent Office
Office européen des brevets

(11) **EP 4 546 184 A1**

(12) **EUROPEAN PATENT APPLICATION**
published in accordance with Art. 153(4) EPC

(43) Date of publication:
**30.04.2025  Bulletin 2025/18**

(21) Application number: **23827302.3**

(22) Date of filing: **23.06.2023**

(51) International Patent Classification (IPC):
**G06F 21/44** (2013.01)     **G06F 8/65** (2018.01)
**H04L 9/32** (2006.01)

(52) Cooperative Patent Classification (CPC):
**G06F 8/65; G06F 21/44; H04L 9/32**

(86) International application number:
**PCT/JP2023/023439**

(87) International publication number:
**WO 2023/249120 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **24.06.2022  JP 2022102127
19.08.2022  JP 2022131340
31.08.2022  JP 2022138510**

(71) Applicant: **HONDA MOTOR CO., LTD.
Minato-ku
Tokyo 107-8556 (JP)**

(72) Inventor: **HARADA, Hironori
Wako-shi, Saitama 351-0193 (JP)**

(74) Representative: **Weickmann & Weickmann
PartmbB
Postfach 860 820
81635 München (DE)**

(54) **INFORMATION PROCESSING METHOD, INFORMATION PROCESSING SYSTEM, INFORMATION PROCESSING DEVICE, POWER STORAGE DEVICE, PROGRAM, AND COMPUTER-READABLE STORAGE MEDIUM**

(57) Provided is an information processing method including: performing first confirmation by confirming, by a first apparatus, whether or not a second apparatus is a legitimate apparatus; and performing second confirmation by confirming, by the second apparatus, whether or not the first apparatus is a legitimate apparatus. The performing the second confirmation may have confirming, by the second apparatus confirmed, in the performing the first confirmation, to be a legitimate apparatus, whether or not the first apparatus which has confirmed, in the performing the first confirmation, that the second apparatus is a legitimate apparatus is a legitimate apparatus. It may further include updating to-be-updated information stored in a storing unit of the second apparatus, based on an update request transmitted by the first apparatus, if the first apparatus is confirmed, in the performing the second confirmation, to be a legitimate apparatus.

FIG.12

**Description**

BACKGROUND

1. TECHNICAL FIELD

The present invention relates to an information processing method, an information processing system, an information processing apparatus, an electricity accumulation apparatus, a program, and a computer-readable storage medium.

2. RELATED ART

Patent Document 1 discloses a management device which authenticates a battery by collating an authentication key stored in a battery to be returned to a battery station with an authentication key stored in the battery station. Patent Document 2 discloses a battery station which judges, by using a whitelist method, whether or not a battery can be received.

Prior Art Document

Patent document

Patent document 1: International Publication No. 2019/181661

Patent document 2: International Publication No. 2020/059833

GENERAL DISCLOSURE

A first aspect of the present invention provides an information processing method. The information processing method has, for example, performing first confirmation by confirming, by a first apparatus, whether or not a second apparatus is a legitimate apparatus. The information processing method has, for example, performing second confirmation by confirming, by the second apparatus, whether or not the first apparatus is a legitimate apparatus.

In the information processing method, the performing the second confirmation may include confirming, by the second apparatus confirmed, in the performing the first confirmation, to be a legitimate apparatus, whether or not the first apparatus which has confirmed, in the performing the first confirmation, that the second apparatus is a legitimate apparatus is a legitimate apparatus. The information processing method according to any of the above descriptions may have updating to-be-updated information stored in a storing unit of the second apparatus, based on an update request transmitted by the first apparatus, if the first apparatus is confirmed, in the performing the second confirmation, to be a legitimate apparatus. In the information processing method according to any of the above descriptions, the update request may include: control software or a control program used to control the second apparatus; update software or an update program for updating the control software or the control program; and/or an instruction which causes a computer of the second apparatus to execute the update software or the update program. In the information processing method according to any of the above descriptions, the to-be-updated information may be control software or a control program used to control the second apparatus.

The information processing method according to any of the above descriptions may have performing first storage by storing, by the first apparatus, second apparatus identification information for identifying the second apparatus, if the first apparatus, which has transmitted the update request, cannot confirm that processing of updating the to-be-updated information based on the update request has ended normally. The information processing method according to any of the above descriptions may have performing second storage by storing, by the second apparatus, first apparatus identification information for identifying the first apparatus which has transmitted the update request. The information processing method according to any of the above descriptions may have reading, into the first apparatus, to-be-read information stored in a storing unit of the second apparatus, if the first apparatus is confirmed, in the performing the second confirmation, to be a legitimate apparatus. In the information processing method according to any of the above descriptions, the performing the first confirmation may include generating, by the first apparatus, third information by converting first information based on second information. The performing the first confirmation may include transmitting, by the first apparatus, the third information to the second apparatus. The performing the first confirmation may include receiving, by the first apparatus, from the second apparatus, (i) fifth information generated by the second apparatus by inversely converting the third information based on fourth information paired with the second information or (ii) sixth information generated by the second apparatus by performing information processing on the fifth information in accordance with a predetermined first algorithm. The performing the first confirmation may include (a) comparing, by the first apparatus, the first information with the fifth information if the fifth information is received; or (b) (i) comparing, by the first apparatus, seventh information to be generated by performing information processing on the first information in accordance with the first algorithm with the sixth information or (ii) comparing, by the first apparatus, the first information with eighth information to be generated by performing information processing on the sixth information in accordance with a second algorithm related to the first algorithm, if the sixth information is received.

In the information processing method according to any of the above descriptions, the performing the second confirmation may include generating, by the second apparatus, third information by converting first information based on second information. The performing the second confirmation may include transmitting, by the second apparatus, the third information to the first apparatus. The performing the second confirmation may include receiving, by the second apparatus, from the first apparatus, (i) fifth information generated by the first apparatus by inversely converting the third information based on fourth information paired with the second information or (ii) sixth information generated by the first apparatus by performing information processing on the fifth information in accordance with a predetermined first algorithm. The performing the second confirmation may include (a) comparing, by the second apparatus, the first information with the fifth information if the fifth information is received; or (b) (i) comparing, by the second apparatus, seventh information to be generated by performing information processing on the first information in accordance with the first algorithm with the sixth information or (ii) comparing, by the second apparatus, the first information with eighth information to be generated by performing information processing on the sixth information in accordance with a second algorithm related to the first algorithm, if the sixth information is received. In the information processing method according to any of the above descriptions, the performing the second confirmation may include obtaining, by the second apparatus, from the first apparatus, first apparatus identification information for identifying the first apparatus. The performing the second confirmation may include collating, by the second apparatus, one or more pieces of legitimate apparatus identification information for respectively identifying one or more legitimate apparatuses with the first apparatus identification information obtained from the first apparatus. In the information processing method according to any of the above descriptions, the second apparatus may include an electricity accumulation apparatus which accumulates electrical energy. In the information processing method according to any of the above descriptions, the first apparatus may include a housing apparatus which houses the second apparatus. In the information processing method according to any of the above descriptions, the first apparatus may include an electric power apparatus configured to be able to be electrically connected to the electricity accumulation apparatus of the second apparatus, configured to be able to feed power to the electricity accumulation apparatus of the second apparatus, or configured to be able to receive power from the electricity accumulation apparatus of the second apparatus.

In the information processing method according to any of the above descriptions, the first apparatus may be an electricity accumulation apparatus having: an electricity accumulation unit which accumulates electrical energy; and at least one of a storing unit which stores information or a computer which executes a program.

The second apparatus may be an electric power apparatus configured to be able to be electrically connected to the electricity accumulation apparatus, configured to be able to feed power to the electricity accumulation apparatus, and/or configured to be able to receive power from the electricity accumulation apparatus. The information processing method according to any of the above descriptions may have at least one of: (a) performing a first decision by deciding whether or not to permit reading processing in which the electric power apparatus reads to-be-read information stored in the storing unit of the electricity accumulation apparatus; or (b) performing a second decision by deciding whether or not to permit at least one processing of: writing processing in which the electric power apparatus writes to-be-written information into the storing unit of the electricity accumulation apparatus; modification processing in which the electric power apparatus modifies to-be-modified information stored in the storing unit of the electricity accumulation apparatus; or execution processing in which the electric power apparatus causes the computer of the electricity accumulation apparatus to execute a program. In the information processing method according to any of the above descriptions, the performing the first decision may include: (i) performing first prohibition by deciding to prohibit execution of the reading processing, if the first information and the fifth information do not match, the sixth information and the seventh information do not match, or the first information and the eighth information do not match; or (ii) performing first permission by deciding to permit execution of the reading processing, if the first information and the fifth information match, the sixth information and the seventh information match, or the first information and the eighth information match. In the information processing method according to any of the above descriptions, the performing the second decision may include: (iii) performing second prohibition by deciding to prohibit execution of the at least one processing of the writing processing, the modification processing, or the execution processing, if the first information and the fifth information do not match, the sixth information and the seventh information do not match, or the first information and the eighth information do not match; or (iv) performing second permission by deciding to permit execution of the at least one processing of the writing processing, the modification processing, or the execution processing, if the first information and the fifth information match, the sixth information and the seventh information match, or the first information and the eighth information match. In the information processing method according to any of the above descriptions, the electric power apparatus may be a housing apparatus which houses the electricity accumulation apparatus. The housing apparatus may have an attachment part to which the electricity accumulation apparatus is attached. The information processing method according to any of the above descriptions may have (i) deciding not to attach the electricity accumulation apparatus to the attachment part, if the first information and the fifth information do not match, the sixth information and the seventh information do not match, or the first information and the eighth information do not match; or (ii) deciding to attach the electricity accumulation apparatus to the attachment part, if the first information and the fifth information match, the sixth information and the seventh information match, or the first information and the eighth information match. The information processing method according to any of the above descriptions may have (i) deciding to prohibit or suppress output and input of electric power between the electricity accumulation apparatus and the electric power apparatus, if the first information and the fifth information do not match, the sixth information and the seventh information do not match, or the first information and the eighth information do not match; or (ii) deciding not to prohibit or suppress output and input of electric power between the electricity accumulation apparatus and the electric power apparatus, if the first information and the fifth information match, the sixth information and the seventh information match, or the first information and the eighth information match.

In the information processing method according to any of the above descriptions, the storing unit of the electricity accumulation apparatus may store charging and discharging history. The charging and discharging history may be information which associates (i) one or more pieces of equipment identification information for respectively identifying one or more pieces of equipment electrically connected to the electricity accumulation apparatus during a target period which is a period before the electricity accumulation apparatus executes processing for confirming whether or not the electric power apparatus is a legitimate apparatus, and (ii) information respectively indicating amounts of electric power outputted and inputted between the one or more pieces of equipment and the electricity accumulation apparatus during the target period. The information processing method according to any of the above descriptions may have transmitting the charging and discharging history from the electricity accumulation apparatus to the electric power apparatus if it is decided, in the performing the first permission, to permit the execution of the reading processing. The information processing method according to any of the above descriptions may have receiving, from the electric power apparatus, eleventh information, thirteenth information generated by converting the eleventh information based on twelfth information, and the second information. The information processing method according to any of the above descriptions may have comparing the eleventh information with fifteenth information to be generated by inversely converting the thirteenth information based on fourteenth information paired with the twelfth information. The information processing method according to any of the above descriptions may have confirming that the second information received from the electric power apparatus is the second information which is legitimate, if the eleventh information and the fifteenth information match. The information processing method according to any of the above descriptions may have receiving, from the electric power apparatus, eleventh information, and thirteenth information generated by converting the eleventh information based on twelfth information. The information processing method according to any of the above descriptions may have comparing the eleventh information with fifteenth information to be generated by inversely converting the thirteenth information based on fourteenth information paired with the twelfth information. The information processing method according to any of the above descriptions may have obtaining the eleventh information as the second information if the eleventh information and the fifteenth information match. The information processing method according to any of the above descriptions may have determining whether or not the electric power apparatus is a legitimate apparatus, based on a result of comparing the first information and the fifth information, a result of comparing the sixth information and the seventh information, or a result of comparing the first information and the eighth information. The information processing method according to any of the above descriptions may have confirming that the electric power apparatus is not legitimate or that the electric power apparatus is illegitimate, if the first information and the fifth information do not match, the sixth information and the seventh information do not match, or the first information and the eighth information do not match.

A second aspect of the present invention provides an information processing method. The information processing method is executed by, for example, an information processing apparatus configured to be able to transmit and receive information to and from another information processing apparatus. The information processing method has, for example, confirming whether or not the another information processing apparatus is a legitimate apparatus. The information processing method has, for example, receiving, from the another information processing apparatus, confirmation information indicating that the another information processing apparatus is executing processing for confirming whether or not the information processing apparatus is a legitimate apparatus. The information processing method has, for example, transmitting, to the another information processing apparatus, certification information indicating that the information processing apparatus is a legitimate apparatus, if the confirmation information is received in the receiving the confirmation information.

The information processing method may have: (i) executing at least one of: processing of writing to-be-written information into a storing unit of the another information processing apparatus; processing of modifying to-be-modified information stored in the storing unit; or processing of executing a program running on the another information processing apparatus; or (ii) causing the another information processing apparatus to execute at least one of: the processing of writing the to-be-written information; the processing of modifying the to-be-modified information; or the processing of executing the program. The information processing method according to any of the above descriptions may have receiving, from the another information processing apparatus, an execution request requesting execution of at least one of: processing of writing to-be-written information into a storing unit of the information processing apparatus; processing of modifying to-be-modified information stored in the storing unit; or processing of executing a program running on the information processing apparatus. The information processing method according to any of the above descriptions may have determining execution by determining, if the execution request is received in the receiving the execution request, whether or not to execute processing requested by the execution request, based on a result of confirmation in the confirming. **In** the information processing method according to any of the above descriptions, the determining the execution may include: (i) permitting execution of the processing requested by the execution request, if the execution request is received in the receiving the execution request and the another information processing apparatus is confirmed, in the confirming, to be a legitimate apparatus; and/or (ii) prohibiting execution of the processing requested by the execution request, if the execution request is received in the receiving the execution request and the another information processing apparatus is not confirmed, in the confirming, to be a legitimate apparatus. In the information processing method according to any of the above descriptions, the confirming may be executed before the receiving the confirmation information. In the information processing method according to any of the above descriptions, the confirming may be executed after the receiving the confirmation information.

In the information processing method according to any of the above descriptions, the confirming may have transmitting first verification information to the another information processing apparatus. In the information processing method according to any of the above descriptions, the confirming may have generating third verification information by converting the first verification information based on second verification information. In the information processing method according to any of the above descriptions, the confirming may have receiving, from the another information processing apparatus, (i) fifth verification information generated by the another information processing apparatus by converting the first verification information based on fourth verification information satisfying a first mathematical relationship with the second verification information or (ii) sixth verification information derived by the another information processing apparatus from the first verification information and the fourth verification information or from the fifth verification information by using a second mathematical relationship to be satisfied by the third verification information and the fifth verification information if the another information processing apparatus is a legitimate apparatus. In the information processing method according to any of the above descriptions, the confirming may have determining whether or not the another information processing apparatus is a legitimate apparatus, based on the third verification information and on the fifth verification information or the sixth verification information. In the information processing method according to any of the above descriptions, the determining includes: (a) determining whether or not the third verification information and the fifth verification information satisfy the second mathematical relationship, if the fifth verification information is received; or (b) comparing the third verification information with the sixth verification information if the sixth verification information is received. In the information processing method according to any of the above descriptions, the second mathematical relationship may be determined based on the first mathematical relationship.

In the information processing method according to any of the above descriptions, the information processing apparatus may store a pair of a first private key and a first public key. In the information processing method according to any of the above descriptions, the another information processing apparatus may store a pair of a second private key and a second public key. In the information processing method according to any of the above descriptions, the receiving the confirmation information may include receiving the second public key from the another information processing apparatus. The transmitting the certification information may include transmitting the first public key to the another information processing apparatus. The confirming may include generating a common key based on the first private key and the second public key. The confirming may include transmitting, to the another information processing apparatus, information encrypted using the common key. In the information processing method according to any of the above descriptions, the receiving the confirmation information may include receiving the second public key from the another information processing apparatus. The transmitting the certification information may include generating a common key based on the first private key and the second public key. The transmitting the certification information may include transmitting, to the another information processing apparatus, information encrypted using the common key. The confirming may include receiving, from the another information processing apparatus, information indicating that the information encrypted using the common key has been received by the another information processing apparatus. In the information processing method according to any of the above descriptions, the first private key and the first public key may be a pair of a private key and a public key used in elliptic curve cryptography. In the information processing method according to any of the above descriptions, the second private key and the second public key may be a pair of a private key and a public key used in elliptic curve cryptography. In the information processing method according to any of the above descriptions, the first private key may be one of a pair of parameters representing a specific elliptic curve. In the information processing method according to any of the above descriptions, the second private key may be another of the pair of parameters. In the information processing method according to any of the above descriptions, the first public key may be generated based on a base point, which is a specific point on the specific elliptic curve, and the first private key. In the information processing method according to any of the above descriptions, the second public key may be generated based on the base point and the second private key. In the information processing method according to any of the above descriptions, the information processing apparatus may store information indicating the base point. In the information processing method according to any of the above descriptions, the another information processing apparatus may store information indicating the base point.

A third aspect of the present invention provides an information processing system. The information processing system includes, for example, a first apparatus and a second apparatus. In the information processing system, the first apparatus includes, for example, first confirmation unit which confirms whether or not the second apparatus is a legitimate apparatus. In the information processing system, the second apparatus includes, for example, second confirmation unit which confirms whether or not the first apparatus is a legitimate apparatus. In the information processing system, for example, if the first confirmation unit confirms that the second apparatus is a legitimate apparatus, the second confirmation unit confirms whether or not the first apparatus is a legitimate apparatus.

A fourth aspect of the present invention provides an information processing apparatus. The information processing apparatus is, for example, configured to be able to transmit and receive information to and from another information processing apparatus. The information processing apparatus includes, for example, a confirmation unit which confirms whether or not the another information processing apparatus is a legitimate apparatus. The information processing apparatus includes, for example, a confirmation information reception unit which receives, from the another information processing apparatus, confirmation information indicating that the another information processing apparatus is executing processing for confirming whether or not the information processing apparatus is a legitimate apparatus. The information processing apparatus includes, for example, a certification information transmission unit which, if the confirmation information reception unit receives the confirmation information, transmits, to the another information processing apparatus, certification information indicating that the information processing apparatus is a legitimate apparatus.

A fifth aspect of the present invention provides an electricity accumulation apparatus. The electricity accumulation apparatus includes, for example, the information processing apparatus according to the fourth aspect. The electricity accumulation apparatus includes, for example, an electricity accumulation unit which accumulates electrical energy.

A sixth aspect of the present invention provides an information processing apparatus. The information processing apparatus, for example, confirms whether or not an electric power apparatus is a legitimate apparatus. The information processing apparatus includes, for example, an electricity accumulation apparatus. In the information processing apparatus, the electricity accumulation apparatus has, for example, an electricity accumulation unit which accumulates electrical energy. In the information processing apparatus, the electricity accumulation apparatus has, for example, at least one of a storing unit which stores information or a computer which executes a program. In the information processing apparatus, the electric power apparatus is, for example, an apparatus configured to be able to be electrically connected to the electricity accumulation apparatus, an apparatus configured to be able to feed power to the electricity accumulation apparatus, and/or an apparatus configured to be able to receive power from the electricity accumulation apparatus. The information processing apparatus includes, for example, a third information generation unit which generates third information by converting first information based on second information. The information processing apparatus includes, for example, a third information transmission unit which transmits the third information to the electric power apparatus. The information processing apparatus includes, for example, a response reception unit which receives, from the electric power apparatus, (i) fifth information generated by the electric power apparatus by inversely converting the third information based on fourth information paired with the second information or (ii) sixth information generated by the electric power apparatus by performing information processing on the fifth information in accordance with a predetermined first algorithm. The information processing apparatus includes, for example, a comparison unit which (a) compares the first information with the fifth information if the fifth information is received, or (b) (i) compares seventh information to be generated by performing information processing on the first information in accordance with the first algorithm with the sixth information or (ii) compares the first information with eighth information to be generated by performing information processing on the sixth information in accordance with a second algorithm related to the first algorithm, if the sixth information is received. The information processing apparatus includes, for example, an execution control unit which (c) decides whether or not to permit reading processing in which the electric power apparatus reads to-be-read information stored in the storing unit of the electricity accumulation apparatus, and/or (d) decides whether or not to permit at least one processing of: writing processing in which the electric power apparatus writes to-be-written information into the storing unit of the electricity accumulation apparatus; modification processing in which the electric power apparatus modifies to-be-modified information stored in the storing unit of the electricity accumulation apparatus; or execution processing in which the electric power apparatus causes the computer of the electricity accumulation apparatus to execute a program. In the information processing apparatus, the execution control unit: for example, (i) decides to prohibit execution of the reading processing, if the first information and the fifth information do not match, the sixth information and the seventh information do not match, or the first information and the eighth information do not match, or (ii) decides to permit execution of the reading processing, if the first information and the fifth information match, the sixth information and the seventh information match, or the first information and the eighth information match; and/or (iii) decides to prohibit execution of the at least one processing of the writing processing, the modification processing, or the execution processing, if the first information and the fifth information do not match, the sixth information and the seventh information do not match, or the first information and the eighth information do not match, or (iv) decides to permit execution of the at least one processing of the writing processing, the modification processing, or the execution processing, if the first information and the fifth information match, the sixth information and the seventh information match, or the first information and the eighth information match.

A seventh aspect of the present invention provides a program. The program may be a program which causes a computer to execute any information processing method according to the first aspect or the second aspect. The program may be a program which causes a computer to function as the information processing system according to the third aspect. The program may be a program which causes a computer to function as any information processing apparatus according to the fourth aspect or the sixth aspect.

An eighth aspect of the present invention provides a computer-readable storage medium. The computer-readable storage medium, for example, stores any program according to the seventh aspect. The computer-readable storage medium may be a non-transitory computer-readable medium.

It should be noted that the summary clause does not necessarily describe all necessary features of the embodiments of the present invention. In addition, the invention may also include a sub-combination of the features described above.

BRIEF DESCRIPTION OF THE DRAWINGS

Fig. 1 schematically shows an example of a system configuration of a battery management system 100.

Fig. 2 schematically shows an example of an internal configuration of a mobile battery 20.

Fig. 3 schematically shows an example of an internal configuration of a battery replacement machine 120.

Fig. 4 schematically shows an example of a procedure for authenticating the mobile battery 20.

Fig. 5 schematically shows an example of an internal configuration of a battery authentication unit 378.

Fig. 6 schematically shows an example of an internal configuration of an authentication handling unit 232.

Fig. 7 schematically shows an example of an internal configuration of mounted equipment 330.

Fig. 8 schematically shows an example of an internal configuration of mounted equipment 370.

Fig. 9 schematically shows an example of an internal configuration of a mobile battery 920.

Fig. 10 schematically shows an example of a procedure for obtaining an authentication public key 74.

Fig. 11 schematically shows an example of a procedure for obtaining the authentication public key 74.

Fig. 12 schematically shows an example of interactive authentication processing in the battery management system 100.

Fig. 13 schematically shows an example of an internal configuration of the mobile battery 20.

Fig. 14 schematically shows an example of an internal configuration of the battery replacement machine 120.

Fig. 15 schematically shows an example of a procedure for authenticating the mobile battery 20.

Fig. 16 schematically shows an example of a procedure for authenticating the battery replacement machine 120.

Fig. 17 schematically shows an example of an internal configuration of a station authentication unit 1378.

Fig. 18 schematically shows an example of an internal configuration of an authentication handling unit 1432.

Fig. 19 schematically shows another example of interactive authentication processing in the battery management system 100.

Fig. 20 schematically shows another example of an internal configuration of the mobile battery 20.

Fig. 21 schematically shows another example of an internal configuration of a storage unit 250.

Fig. 22 schematically shows another example of an internal configuration of the mounted equipment 370.

Fig. 23 schematically shows another example of an internal configuration of a storage unit 520.

Fig. 24 schematically shows another example of a procedure for obtaining the authentication public key 74.

Fig. 25 schematically shows another example of a procedure for authenticating the mobile battery 20.

Fig. 26 schematically shows another example of a procedure for obtaining an authentication public key 174.

Fig. 27 schematically shows another example of a procedure for authenticating the battery replacement machine 120.

Fig. 28 schematically shows examples of internal configurations of a control unit 230 and a control unit 376.

Fig. 29 schematically shows an example of a database stored in the storage unit 250.

Fig. 30 schematically shows an example of information processing in the battery management system 100.

Fig. 31 schematically shows another example of a procedure for authenticating the mobile battery 20.

Fig. 32 schematically shows an example of a relationship between a response code and a verification code.

Fig. 33 schematically shows an example of a procedure for verifying a response code and a verification code.

Fig. 34 schematically shows another example of a procedure for verifying a response code and a verification code.

Fig. 35 schematically shows another example of interactive authentication processing in the battery management system 100.

Fig. 36 schematically shows another example of interactive authentication processing in the battery management system 100.

Fig. 37 schematically shows an example of interactive authentication processing using a plurality of electronic certificates.

Fig. 38 schematically shows examples of an electronic certificate for authenticating the mobile battery 20.

Fig. 39 schematically shows examples of an electronic certificate for authenticating the battery replacement machine 120.

Fig. 40 schematically shows another example of interactive authentication processing in the battery management system 100.

Fig. 41 schematically shows an example of an internal configuration of a computer 5000.

DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention. It should be noted that in the drawings, the same or similar parts are assigned with the same reference numbers, and duplicated description may be omitted.

(Overview of battery management system 100)

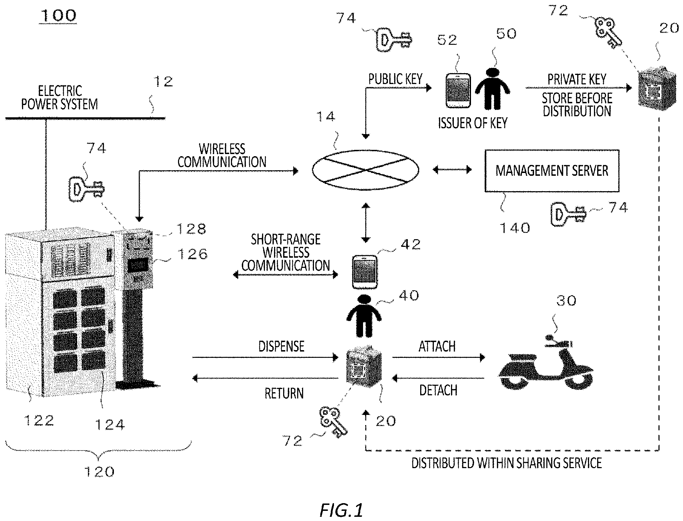

Fig. 1 schematically shows an example of a system configuration of a battery management system 100. In the present embodiment, the battery management system 100 includes one or a plurality of (sometimes simply referred to as one or more) battery replacement machines 120 and a management server 140. In the present embodiment, a battery replacement machine 120 has one or more housing units 122 and a communication unit 126. In the present embodiment, a housing unit 122 includes one or more slots 124. In the present embodiment, the communication unit 126 includes a communication interface 128. The battery replacement machine 120 may be referred to as a battery station.
In the present embodiment, each unit of the battery management system 100 works by consuming electric power received from an electric power system 12. In addition, each unit of the battery management system 100 can transmit and receive information to and from each other via a communication network 14. The one or more housing units 122 and the communication unit 126 can transmit and receive information to and from each other via a wired or wireless communication line (not shown).

In the present embodiment, the battery management system 100 manages one or a plurality of (sometimes referred to as one or more) mobile batteries 20. For ease of explanation, in the present embodiment, the battery management system 100 will be described in detail, by taking as an example a case where the battery management system 100 provides a sharing service of a mobile battery 20 to a user 40 of an electric motorcycle 30.

In the present embodiment, each of the one or more slots 124 arranged in the housing unit 122 of the battery replacement machine 120 can house the one or more mobile batteries 20. In addition, each of the one or more slots 124 arranged in the housing unit 122 of the battery replacement machine 120 can charge the one or more mobile batteries 20.

The user 40 who has subscribed to the sharing service of the mobile battery 20 accesses the battery management system 100 by using, for example, a communications terminal 42, and requests lending/renting of the mobile battery 20. The user 40 may designate a date and time and a place at which the user wishes the lending/renting of the mobile battery 20 as well as the number of mobile batteries 20 the lending/renting of which the user wishes, to make a reservation for the lending/renting of the mobile battery 20. The communications terminal 42 may access the battery management system 100 via the communication network 14 or may access the battery management system 100 via the battery replacement machine 120. It should be noted that the user 40 may operate the battery replacement machine 120 to request the lending/renting of the mobile battery 20.

When the request is accepted, the user 40 can take out the mobile battery 20 accommodated in the battery replacement machine 120 (sometimes referred to as dispensation of the mobile battery 20). This allows the user 40 to replace the mobile battery 20 attached to the electric motorcycle 30 with the mobile battery 20 accommodated in the battery replacement machine 120.

More specifically, the user 40 removes the mobile battery 20 attached to the electric motorcycle 30 from the electric motorcycle 30. The user 40 returns the mobile battery 20 removed from the electric motorcycle 30 to the battery replacement machine 120. When the user 40 returns the mobile battery 20, the battery replacement machine 120 dispenses the mobile battery 20, which has been charged, accommodated in the battery replacement machine 120. The user 40 receives the mobile battery 20, which has been charged, from the battery replacement machine 120, and attaches that mobile battery 20, which has been charged, to the electric motorcycle 30. As such, the mobile batteries 20 are exchanged between the electric motorcycle 30 and the battery replacement machine 120.

(Authentication of mobile battery 20 in battery management system 100)

In the present embodiment, the battery replacement machine 120 may be arranged in a lockable building or site or may be arranged outdoors in an unlocked state. In light of convenience for the user 40, the battery replacement machine 120 is preferably arranged in an environment where many users 40 can freely use it. On the other hand, when the battery replacement machine 120 is arranged in the environment where many users 40 can freely use it, there is a possibility that the mobile battery 20 which is not under control of the battery management system 100 (sometimes referred to as an illegitimate mobile battery 20) is inserted into a slot 124 of the battery replacement machine 120.

When the illegitimate mobile battery 20 having a different specification from that of a legitimate mobile battery 20 is inserted into the slot 124 and an electrical terminal of that illegitimate mobile battery 20 and an electrical terminal of the slot 124 are attached to each other, there is a possibility that a usage condition of the illegitimate mobile battery 20 departs from an appropriate range. In addition, since the battery replacement machine 120 is used by many users 40, there is also a possibility that the illegitimate mobile battery 20 is dispensed to another user 40 different from the user 40 who has inserted the illegitimate mobile battery 20 to the slot 124.

The illegitimate mobile battery 20 is not limited to the mobile battery 20 having a different specification from that of the mobile battery 20 which is under control of the battery management system 100 (sometimes referred to as the legitimate mobile battery 20). The illegitimate mobile battery 20 may have the same specification as that of the legitimate mobile battery 20 or may have a specification conforming to the legitimate mobile battery 20.

For example, in a case where the user 40 of the electric motorcycle 30 has purchased the mobile battery 20, if the user 40 has not subscribed to a charging service of the mobile battery 20 or a replacement service of the mobile battery 20 by the battery management system 100, the mobile battery 20 purchased by the user 40 is treated as the illegitimate mobile battery 20 having the same specification as that of the legitimate mobile battery 20. According to the present embodiment, the battery management system 100 manages a deterioration state of the legitimate mobile battery 20 and maintains or replaces the mobile battery 20 at appropriate timing. This allows the user 40 to safely use the mobile battery 20. In addition, the mobile battery 20 with less deterioration is provided, which improves a usage experience of the user 40.

On the other hand, the battery management system 100 cannot grasp a state of maintenance and management of the illegitimate mobile battery 20. Therefore, if the mobile battery 20 insufficiently maintained and managed is mixed in with the mobile batteries 20 housed in the battery replacement machine 120, there is a possibility that the usage experience of the user 40 is degraded. Therefore, according to the present embodiment, when the mobile battery 20 is attached to the slot 124, the battery replacement machine 120 executes processing of authenticating the mobile battery 20.

Possible techniques for authenticating the mobile battery 20 include (i) a technique which, by the electric motorcycle 30 or the battery replacement machine 120, obtains identification information of the mobile battery 20 to be authenticated (sometimes referred to as a battery ID) and collates the battery ID of the mobile battery 20 to be authenticated with a list of battery IDs of the legitimate mobile batteries 20 (sometimes referred to as a whitelist), (ii) a technique which authenticates, by the electric motorcycle 30 or the battery replacement machine 120, the mobile battery 20 by transmitting and receiving an authentication code by using a common key cryptosystem, and the like.

However, according to the techniques, it is difficult to effectively suppress leakage of the battery IDs or the like due to eavesdropping, repeat attack, or the like. For example, if the mobile battery 20 is authenticated using the whitelist of the battery IDs, the leakage of the battery IDs registered in the whitelist makes it difficult to suppress a counterfeit product of the mobile battery 20 from being distributed. In addition, if the mobile battery 20 is authenticated with the common key cryptosystem, leakage of a common key makes it difficult to suppress the counterfeit product of the mobile battery 20 from being distributed. Particularly, if a plurality of batteries share the same common key, damage caused by counterfeiting will increase.

Therefore, in the present embodiment, the battery management system 100 authenticates the mobile battery 20 with a public key cryptosystem. This allows the battery management system 100 to confirm whether or not the mobile battery 20 attached to the slot 124 is a legitimate mobile battery 20 while solving the issue.

In addition, according to the present embodiment, the battery replacement machine 120 authenticates the mobile battery 20 with the public key cryptosystem. A known method may be adopted as the public key cryptosystem. Examples of cryptography of the public key cryptosystem include RSA cryptography, elliptic curve cryptography, and the like.

Since a processor mounted on the mobile battery 20 or the electric motorcycle 30 has relatively low arithmetic performance, it is difficult for the mobile battery 20 or the electric motorcycle 30 to execute a complicated arithmetic operation. On the other hand, the battery replacement machine 120 can be equipped with a processor having higher arithmetic capacity than the processor mounted on the mobile battery 20 or the electric motorcycle 30. The public key cryptosystem has a larger computational load than the common key cryptosystem. Therefore, if the mobile battery 20 is authenticated with the public key cryptosystem, a processor executing that authentication processing is required to execute the complicated arithmetic operation at a high speed. In this respect, the battery replacement machine 120 can authenticate the mobile battery 20 with the public key cryptosystem by using a high performance processor.

Specifically, first, a key issuer 50 issues a pair of an authentication private key 72 and an authentication public key 74 for each of the one or more mobile batteries 20. The key issuer 50 may be a manufacturer or a transferor of the mobile battery 20, may be a manufacturer or a transferor of the battery replacement machine 120, or may be an administrator or an operator of the battery management system 100. The key issuer 50 may be a natural person, may be a legal entity, may be an organization, or may be an employee of that legal entity or a staff member of that organization, or the like. The key issuer 50 may issue the pair of the authentication private key 72 and the authentication public key 74 by using a communications terminal 52.

Next, the key issuer 50 causes respective storage apparatuses (not shown) of the one or more mobile batteries 20 to store respective authentication private keys 72 of the one or more mobile batteries 20. In one embodiment, the key issuer 50 communicably connects the communications terminal 52 and the mobile battery 20 and causes the authentication private key 72 corresponding to the mobile battery 20 connected to the communications terminal 52 to be transmitted from the communications terminal 52 to the mobile battery 20. The communications terminal 52 and the mobile battery 20 may transmit and receive information through wired communication or may transmit and receive information through wireless communication. In another embodiment, the key issuer 50 may input the authentication private key 72 into an input apparatus arranged in the mobile battery 20 or may attach a storage apparatus storing the authentication private key 72 to the mobile battery 20.

In addition, the key issuer 50 causes the respective storage apparatuses (not shown) of the one or more battery replacement machines 120 to store respective authentication public keys 74 of the one or more mobile batteries 20. In one embodiment, the key issuer 50 puts the respective authentication public keys 74 of the one or more mobile batteries 20 into a state where each of the one or more battery replacement machines 120 can obtain them. For example, the key issuer 50 operates the communications terminal 52 to make setting such that each of the one or more battery replacement machines 120 can access a database which associates and stores the battery ID and the authentication public key 74 for each of the one or more mobile batteries 20. The database may be stored in the communications terminal 52 or may be stored in the management server 140.

In another embodiment, the key issuer 50 communicably connects the communications terminal 52 and the battery replacement machine 120 and causes the database to be transmitted from the communications terminal 52 to the battery replacement machine 120. The communications terminal 52 and the battery replacement machine 120 may transmit and receive information through the wired communication or may transmit and receive information through the wireless communication. In yet another embodiment, the key issuer 50 may input the database from an input apparatus arranged in the battery replacement machine 120 or may attach the storage apparatus storing the database to the battery replacement machine 120. The database is stored in a storage apparatus of the battery replacement machine 120 when the battery replacement machine 120 is manufactured, shipped, transferred, or placed. In addition, the database may be appropriately updated.

In this state, when the user 40 inserts the mobile battery 20 into the slot 124 of the battery replacement machine 120 and the mobile battery 20 is attached to the slot 124, the battery replacement machine 120 first obtains the battery ID of the mobile battery 20 attached to the slot 124. The battery replacement machine 120 may obtain the battery ID of the mobile battery 20 from the mobile battery 20 or may obtain the battery ID of the mobile battery 20 from the communications terminal 42.

Next, the battery replacement machine 120 obtains the authentication public key 74 of the mobile battery 20 attached to the slot 124, based on the battery ID. In one embodiment, the battery replacement machine 120 uses the battery ID as a key to refer to the database stored in the storage apparatus of the battery replacement machine 120, and obtains the authentication public key 74 of the mobile battery 20 attached to the slot 124. In another embodiment, the battery replacement machine 120 accesses the communications terminal 52 or the management server 140, uses the battery ID as a key to refer to the database stored in the communications terminal 52 or the management server 140, and obtains the authentication public key 74 of the mobile battery 20 attached to the slot 124.

Next, the battery replacement machine 120 prepares a code (sometimes referred to as an authentication code) for authenticating the mobile battery 20 attached to the slot 124. The authentication code may be a combination of numbers, letters, and symbols. The authentication code may be image data or may be voice data. The authentication code may be generated each time authentication is performed or may be generated every time a predetermined validated period elapses. The authentication code may be a code predetermined for each of the mobile batteries 20. The battery replacement machine 120, for example, generates a random number each time authentication processing is executed, and uses that random number as the authentication code.

Next, the battery replacement machine 120 converts the authentication code based on the authentication public key 74 of the mobile battery 20 attached to the slot 124. Specifically, the battery replacement machine 120 encrypts the authentication code by using the authentication public key 74 of the mobile battery 20 attached to the slot 124. This generates a challenge code including the encrypted authentication code.

The battery replacement machine 120 transmits the generated challenge code to the mobile battery 20, and requests a response to that challenge code. An example of the response to the challenge code includes transmitting a response code including information indicating that the mobile battery 20 has successfully decrypted the authentication code encrypted with the authentication public key 74.

Examples of the information indicating that the mobile battery 20 has successfully decrypted the authentication code encrypted with the authentication public key 74 include (i) the decrypted authentication code, (ii) information generated by performing information processing on the decrypted authentication code in accordance with a predetermined algorithm (sometimes referred to as a first algorithm), and the like. Examples of the first algorithm include an algorithm relating to arithmetic processing using a predetermined function (sometimes referred to as a first function), an algorithm relating to encryption processing using predetermined information, and the like. An example of the function includes a hash function.

The encryption processing may be common key system encryption processing using a common key or may be public key system encryption processing using a public key and a private key. Examples of the public key system encryption processing include the above-described RSA cryptography, elliptic curve cryptography, and the like.

When the mobile battery 20 receives the challenge code and a request for the response (sometimes referred to as an authentication response request) to the challenge code, the authentication private key 72 of the mobile battery 20 is used to decrypt the authentication code encrypted with the authentication public key 74. When the mobile battery 20 has successfully decrypted the authentication code encrypted with the authentication public key 74, the decrypted authentication code is obtained. This allows the mobile battery 20 to generate the decrypted authentication code by using: the challenge code or the authentication code encrypted with the authentication public key 74 included in that challenge code; and the authentication private key 72 of the mobile battery 20.

Next, the mobile battery 20 generates the response code in accordance with a predetermined rule. The rule may be information indicating a type of or a procedure for generating, the information indicating that the mobile battery 20 has successfully decrypted the authentication code encrypted with the authentication public key 74. In addition, the mobile battery 20 transmits the generated response code to the battery replacement machine 120 as the response to the authentication response request.

In one embodiment, the rule indicates that the decrypted authentication code is used as the information indicating that the mobile battery 20 has successfully decrypted the authentication code encrypted with the authentication public key 74. In this case, the mobile battery 20 generates the response code including the decrypted authentication code.

In another embodiment, the rule indicates that information to be generated by performing the information processing on the decrypted authentication code in accordance with the first algorithm (sometimes referred to as a first processing value of the decrypted authentication code) is used as the information indicating that the mobile battery 20 has successfully decrypted the authentication code encrypted with the authentication public key 74. In this case, the mobile battery 20 generates the first processing value by performing the information processing on the decrypted authentication code in accordance with the first algorithm. In addition, the mobile battery 20 generates the response code including the first processing value. Use of the response code including the first processing value may suppress leakage of the authentication code due to the eavesdropping, the repeat attack, or the like, inverse analysis of an authentication algorithm, or the like.

For example, if the first algorithm is an algorithm relating to arithmetic processing using the hash function, the mobile battery 20 generates the response code including a hash value of the decrypted authentication code. If the first algorithm is the common key system encryption processing using the common key, the mobile battery 20 generates the response code including a ciphertext obtained by encrypting the decrypted authentication code with the common key. If the first algorithm is the public key system encryption processing using the public key and the private key, the mobile battery 20 generates the response code including a ciphertext obtained by encrypting the decrypted authentication code with the private key or the public key.

Next, the battery replacement machine 120 receives the response code which is from the mobile battery 20. The battery replacement machine 120 confirms that the mobile battery 20 has successfully decrypted the authentication code encrypted with the authentication public key 74, based on the response code.

In one embodiment, if the response code includes the decrypted authentication code, the battery replacement machine 120 compares the authentication code generated by the battery replacement machine 120 with the authentication code included in the response code. For example, the battery replacement machine 120 determines whether or not the authentication code generated by the battery replacement machine 120 matches the authentication code included in the response code. In addition, the battery replacement machine 120 confirms whether or not the mobile battery 20 has successfully decrypted the authentication code encrypted with the authentication public key 74, based on a result of comparison. This allows the battery replacement machine 120 to confirm whether or not the mobile battery 20 attached to the slot 124 is a legitimate mobile battery 20.

For example, if the authentication code generated by the battery replacement machine 120 matches a restored authentication code included in the response code, the battery replacement machine 120 confirms that the mobile battery 20 attached to the slot 124 is a legitimate mobile battery 20. On the other hand, if the authentication code generated by the battery replacement machine 120 does not match the restored authentication code included in the response code, the battery replacement machine 120 confirms that the mobile battery 20 attached to the slot 124 is not a legitimate mobile battery 20 or that the mobile battery 20 attached to the slot 124 is an illegitimate mobile battery 20.

In another embodiment, if the response code includes the first processing value of the decrypted authentication code, the battery replacement machine 120 compares information to be generated by performing information processing on the authentication code generated by the battery replacement machine 120 in accordance with the first algorithm (sometimes referred to as the first processing value of the authentication code generated by the battery replacement machine 120) with the first processing value of the decrypted authentication code included in the response code. For example, the battery replacement machine 120 determines whether or not the first processing value of the authentication code generated by the battery replacement machine 120 matches the first processing value of the decrypted authentication code. In addition, the battery replacement machine 120 confirms whether or not the mobile battery 20 has successfully decrypted the authentication code encrypted with the authentication public key 74, based on a result of comparison. This allows the battery replacement machine 120 to confirm whether or not the mobile battery 20 attached to the slot 124 is a legitimate mobile battery 20.

For example, if the first processing value of the authentication code generated by the battery replacement machine 120 matches the first processing value of the restored authentication code included in the response code, the battery replacement machine 120 confirms that the mobile battery 20 attached to the slot 124 is a legitimate mobile battery 20. On the other hand, if the first processing value of the authentication code generated by the battery replacement machine 120 does not match the first processing value of the restored authentication code included in the response code, the battery replacement machine 120 confirms that the mobile battery 20 attached to the slot 124 is not a legitimate mobile battery 20 or that the mobile battery 20 attached to the slot 124 is an illegitimate mobile battery 20.

In yet another embodiment, if the response code includes the first processing value of the decrypted authentication code, the battery replacement machine 120 compares the authentication code generated by the battery replacement machine 120 with information to be generated by performing information processing on the first processing value of the decrypted authentication code included in the response code in accordance with the second algorithm (sometimes referred to as a second processing value of the restored authentication code). For example, the battery replacement machine 120 determines whether or not the authentication code generated by the battery replacement machine 120 matches the second processing value of the decrypted authentication code. In addition, the battery replacement machine 120 confirms whether or not the mobile battery 20 has successfully decrypted the authentication code encrypted with the authentication public key 74, based on a result of comparison. This allows the battery replacement machine 120 to confirm whether or not the mobile battery 20 attached to the slot 124 is a legitimate mobile battery 20.

The second algorithm may be an algorithm relating to arithmetic processing using a second function which is an inverse function of the first function, or an algorithm relating to decryption processing for decrypting information encrypted through encryption processing of the first algorithm. The decryption processing may be decryption processing using key information used for encryption of the first algorithm or key information paired with that key information.

For example, if the authentication code generated by the battery replacement machine 120 matches the second processing value of the restored authentication code included in the response code, the battery replacement machine 120 confirms that the mobile battery 20 attached to the slot 124 is a legitimate mobile battery 20. On the other hand, if the authentication code generated by the battery replacement machine 120 does not match the second processing value of the restored authentication code included in the response code, the battery replacement machine 120 confirms that the mobile battery 20 attached to the slot 124 is not a legitimate mobile battery 20 or that the mobile battery 20 attached to the slot 124 is an illegitimate mobile battery 20.

As described above, the battery replacement machine 120 can confirm that the mobile battery 20 is a legitimate mobile battery 20, while effectively suppressing the leakage of the authentication code. **In** addition, the battery replacement machine 120 can confirm, for example, that the mobile battery 20 attached to the slot 124 is not a legitimate mobile battery 20 or that the mobile battery 20 attached to the slot 124 is an illegitimate mobile battery 20, while effectively suppressing leakage of information used for authentication of a legitimate apparatus (sometimes referred to as authentication information) such as the authentication code.

As described above, the battery replacement machine 120 is configured to allow the replacement of the mobile batteries 20. Therefore, the battery replacement machine 120 may determine whether the mobile battery 20 is to be replaced, based on a result of confirmation. The battery replacement machine 120 may determine whether the mobile battery 20 is to be replaced, based on information for identifying the mobile battery 20 which can be jointly used by aa plurality of mobile batteries 20 (sometimes referred to as a whitelist), among a plurality of mobile batteries 20. The battery replacement machine 120 may determine whether the mobile battery 20 is to be replaced, based on the result of confirmation and on the whitelist.

Similarly, the battery replacement machine 120 is configured to be able to charge or to be able to discharge the mobile battery 20. Therefore, the battery replacement machine 120 may determine whether the mobile battery 20 is to be charged or discharged, based on the result of confirmation. The battery replacement machine 120 may determine whether the mobile battery 20 is to be charged or discharged, based on the whitelist. The battery replacement machine 120 may determine whether the mobile battery 20 is to be charged or discharged, based on the result of confirmation and on the whitelist.

(Overview of each unit related to battery management system 100)

In the present embodiment, the communication network 14 conveys information. The communication network 14 may be a transmission path for the wired communication, or may be a transmission path for the wireless communication, or may be a combination of the transmission path for the wireless communication and the transmission path for the wired communication. The communication network 14 may include a wireless packet communication net, the Internet, a P2P network, a dedicated line, VPN, an electric power line communication line, and the like.

The communication network 14 may include (i) a mobile communication net such as a mobile phone line network or may include (ii) a wireless communication net such as a wireless MAN (for example, a WIMAX (registered trademark)), a wireless LAN (for example, a WIFI (registered trademark), BLUETOOTH (registered trademark), a ZIGBEE (registered trademark), and an NFC (Near Field Communication). The wireless LAN, BLUETOOTH (registered trademark), ZIGBEE (registered trademark), and NFC may be examples of short-range wireless communication.

In the present embodiment, the mobile battery 20 accumulates electrical energy. The mobile battery 20 may be configured to be able to be attached to and detached from (sometimes referred to as freely attached to and detached from) the electric motorcycle 30. The mobile battery 20 may be configured to be able to be attached to and detached from the battery replacement machine 120. This allows the user 40 to replace the mobile battery 20 attached to the electric motorcycle 30 with the mobile battery 20 accommodated in the battery replacement machine 120.

In one embodiment, the mobile battery 20 is attached to the electric motorcycle 30 and supplies electric power to the electric motorcycle 30. As described above, the mobile battery 20 may be detachably attached to the electric motorcycle 30. In another embodiment, the mobile battery 20 is charged by the battery replacement machine 120 while being accommodated in the battery replacement machine 120.

It should be noted that the mobile battery 20 may supply electric power to the battery replacement machine 120 while being accommodated in the battery replacement machine 120. This allows the battery replacement machine 120 to use some of the mobile batteries 20 accommodated in the battery replacement machine 120 as, for example, an uninterruptible power system (sometimes referred to as a UPS).

In the present embodiment, the mobile battery 20 stores the authentication private key 72. The authentication private key 72 may be stored in any type of storage apparatus (not shown) arranged in the mobile battery 20. The mobile battery 20 may store a variety of keys used for a variety of encryption processing and/or decryption processing executed between the mobile battery 20 and the battery replacement machine 120. Examples of the keys include a private key for an electronic signature, a public key for the electronic signature, and the like.

In the present embodiment, the electric motorcycle 30 is equipped with the mobile battery 20. The electric motorcycle 30 may be equipped with the plurality of mobile batteries 20. The electric motorcycle 30 uses electric power accumulated in the mobile battery 20. For example, the electric motorcycle 30 runs by consuming the electric power supplied from the mobile battery 20.

**In** the present embodiment, the communications terminal 42 transmits and receives information to and from each unit of the battery management system 100 via the communication network 14. The communications terminal 42 may function as a user interface for a case where the user 40 accesses the battery management system 100. The communications terminal 42 may be used for user authentication processing performed by the battery management system 100.

Examples of the communications terminal 42 include a personal computer, a portable terminal, and the like. Examples of the portable terminal include a mobile phone, a smartphone, a PDA (registered trademark), a tablet, a notebook computer or a laptop computer, a wearable computer, and the like.

In the present embodiment, the communications terminal 52 transmits and receives information to and from each unit of the battery management system 100 via the communication network 14. The communications terminal 52 may function as a user interface for a case where the key issuer 50 accesses the battery management system 100.

The communications terminal 52 may be used for processing of generating a variety of keys such as the authentication private key 72 or the authentication public key 74. The communications terminal 52 may store the generated authentication private key 72 in a storage apparatus of the mobile battery 20 corresponding to that key. After the authentication private key 72 is stored in the mobile battery 20, the communications terminal 52 may erase the authentication private key 72 from a storage apparatus of the communications terminal 52. The communications terminal 52 may store the generated authentication public key 74 in storage apparatuses of the one or more battery replacement machines 120. The communications terminal 52 may have a database which associates and stores the battery ID and the variety of public keys for each of the one or more mobile batteries 20. The database may associate and store respective battery IDs of the one or more mobile batteries 20 and the respective authentication public keys 74 of the one or more mobile batteries 20.

The communications terminal 52 may be configured to be able to wirelessly communicate with the one or more battery replacement machines 120. The communications terminal 52 may be an information processing apparatus which has confirmed that at least one of the one or more battery replacement machines 120 is legitimate. The communications terminal 52 may be a reliable information processing apparatus for the one or more battery replacement machines 120. The communications terminal 52 may be configured to be able to wirelessly communicate with the one or more mobile batteries 20. The communications terminal 52 may be an information processing apparatus which has confirmed that at least one of the one or more mobile batteries 20 is legitimate. The communications terminal 52 may be a reliable information processing apparatus for the one or more mobile batteries 20.

Examples of the communications terminal 52 include a personal computer, a portable terminal, and the like. Examples of the portable terminal include a mobile phone, a smartphone, a PDA, a tablet, a notebook computer or a laptop computer, a wearable computer, and the like.

In the present embodiment, the battery replacement machine 120 accommodates the mobile battery 20. The battery replacement machine 120 may accommodate the plurality of mobile batteries 20. This allows the battery replacement machine 120 to house the one or more mobile batteries 20. In the present embodiment, the battery replacement machine 120 charges at least one of the one or more mobile batteries 20. The battery replacement machine 120 may charge the mobile battery 20 until a charging rate or voltage of the mobile battery 20 reaches a predetermined set value.

In the present embodiment, the battery replacement machine 120 puts the mobile battery 20, which has been completely charged, into a state where the mobile battery can be taken out (sometimes referred to as dispensed) therefrom. The battery replacement machine 120 may dispense, in response to a request from the user 40, the mobile battery 20 meeting that request. The battery replacement machine 120 may obtain, from the management server 140, information indicating a dispensation condition which is a condition relating to the mobile battery 20 to be dispensed, and decide the mobile battery 20 to be actually dispensed from among the mobile batteries 20 meeting that dispensation condition.

It should be noted that, in another embodiment, the battery replacement machine 120 may discharge at least some of the plurality of mobile batteries 20. The battery replacement machine 120 may use electric power outputted by discharging the mobile batteries 20. For example, the battery replacement machine 120 operates by consuming the electric power outputted by discharging the mobile batteries 20. When operating by consuming electric power outputted by discharging one mobile battery 20, the battery replacement machine 120 may stop or suspend an operation of charging the other mobile batteries 20. Even in this case, the battery replacement machine 120 may continue an operation of dispensing the mobile battery 20.

This allows the battery replacement machine 120 to use some of the mobile batteries 20 accommodated in the battery replacement machine 120 as the uninterruptible power system. According to the battery replacement machine 120 according to the present embodiment, for example, even if an abnormality has occurred in electric power supply from the electric power system 12 to the battery replacement machine 120, electric power supply to a control apparatus may be continued. As a result, for example, the dispensation of the mobile battery 20 by the battery replacement machine 120 may be continued. Therefore, even if the battery replacement machine 120 is placed in, for example, an area where electric power outage occurs relatively frequently, it is possible to provide an environment in which the battery can be stably replaced.

In the present embodiment, the housing unit 122 retains a plurality of slots 124. In the present embodiment, the housing unit 122 is formed separately and independently from the communication unit 126. The housing unit 122 may be placed apart from the communication unit 126 or may be placed so as to abut against the communication unit 126.

In addition, in the present embodiment, the housing unit 122 generates a processing flow including one or more processes for controlling an operation of at least one of the plurality of slots 124, based on a first instruction transmitted from the communication unit 126. The housing unit 122 determines, for each of the one or more processes, whether or not each of the processes can be executed. The housing unit 122 generates, for the process determined to be executable, a second instruction for controlling the slot 124 targeted by that process.

The housing unit 122 controls the operation of the slot 124 based on the generated second instruction. This may restrict execution of some of directions indicated by the first instruction.

For example, if the one or more processes include an operation relating to safety of the mobile battery 20 or safety of the user 40 or maintenance personnel of the battery replacement machine 120, the housing unit 122 determines whether or not a condition is met under which execution of the operation relating to that safety is permitted. If it is determined that the condition is met, the housing unit 122 determines that process to be executable. This controls the operation of the slot 124 based on the second instruction relating to the process. On the other hand, if it is determined that the condition is not met, the housing unit 122 determines that process to be non-executable. In this case, the second instruction relating to the process is not transmitted to the slot 124.

This may ensure the safety of the mobile battery 20, the user 40, or the maintenance personnel even if the communication unit 126 has outputted the first instruction based on a request from the management server 140. For example, even if a state of the battery replacement machine 120 changes after the management server 140 has transmitted the request, when a communication environment of the battery replacement machine 120 is good, the management server 140 can cancel the request. However, if the communication environment of the battery replacement machine 120 is not good, it may take some time for the management server 140 to cancel the request. According to the present embodiment, since the housing unit 122 judges, according to the state of the battery replacement machine 120, whether or not the second instruction can be executed, the battery replacement machine 120 can discontinue or suspend execution of some processing without waiting for a cancellation request from the management server 140.

In the present embodiment, each of the plurality of slots 124 is configured to be able to house at least one of the one or more mobile batteries 20. At least one of the one or more mobile batteries 20 is attached to each of the plurality of slots 124. In addition, each of the plurality of slots 124 includes electrical terminals (not shown) to be electrically connected to electrical terminals (not shown) of the one or more mobile batteries 20. This allows each of the plurality of slots 124 to charge or discharge the mobile battery 20 housed in each of the slots.

It should be noted that the phrase "electrically connected" is not limited to a case where two elements are physically directly connected to each other. A third element may intervene between the two elements. In addition, the phrase is not limited to a case where the two elements are physically connected to each other. For example, an input winding wire and an output winding wire in a converter are not physically connected, but are electrically connected to each other. This allows the slot 124 to support not only wired charge and discharge of the mobile battery 20 but also wireless charge and discharge of the mobile battery 20.

Each of the plurality of slots 124 may include communication terminals to be communicably connected to communication terminals of the one or more mobile batteries 20. A communication system between a communication terminal of the slot 124 and a communication terminal of the mobile battery 20 may be a wired communication system or may be a wireless communication system. This allows each of the plurality of slots 124 to read information from the storage apparatus (not shown) of the mobile battery 20 housed in each of the slots or write information into that storage apparatus.

In the present embodiment, the communication unit 126 is responsible for information processing involving at least one of the user 40 or the management server 140, in information processing in the battery replacement machine 120. For example, the communication unit 126 receives a request which is from at least one of the user 40 or the management server 140 and responds to that request. The communication unit 126 transmits an instruction (sometimes referred to as a command) to the housing unit 122 if it judges that the housing unit 122 is required in order to process the request from at least one of the user 40 or the management server 140. The first instruction may be an example of the instruction.

If the communication unit 126 can process the request from at least one of the user 40 or the management server 140 without cooperating with the housing unit 122, the communication unit 126 may not transmit the instruction to the housing unit 122. This simplifies information processing in the housing unit 122. The communication unit 126 can execute, for example, processing of controlling communication with an outside of the battery replacement machine 120, processing of authenticating the user 40, processing of selecting the slot 124, or the like, without cooperating with the housing unit 122.

As described above, in the present embodiment, the communication unit 126 is formed separately and independently from the housing unit 122. The housing unit 122 may be placed apart from the communication unit 126 or may be placed so as to abut against the communication unit 126.

The communication interface 128 is configured to be able to communicate with the information processing apparatus external to the battery replacement machine 120. The communication interface 128 may support a plurality of communication systems. The communication interface 128 may support the wired communication system or may support the wireless communication system. In one embodiment, the communication interface 128 transmits and receives information to and from the communications terminal 42 used by the user 40. In another embodiment, the communication interface 128 transmits and receives information to and from the management server 140.

In the present embodiment, the management server 140 is arranged outside the battery replacement machine 120. In addition, the management server 140 can transmit and receive information to and from the communication unit 126 of the battery replacement machine 120 via the communication network 14.

In the present embodiment, the management server 140 manages the one or more mobile batteries 20. For example, the management server 140 manages respective states of the one or more mobile batteries 20. The management server 140 may manage return and dispensation of each of the one or more mobile batteries 20. The management server 140 may transmit a variety of requests for managing the mobile battery 20 to at least one of the one or more battery replacement machines 120.

The management server 140 may manage the one or more battery replacement machines 120. The management server 140 may manage the respective states of the one or more battery replacement machines 120. Examples of the states of the battery replacement machine 120 include a supplying state of external electric power, the number of the mobile batteries 20 which can be received, the number of the mobile batteries 20 which can be dispensed, the presence or absence, the number, or identification information of the mobile batteries 20 which can be used as the uninterruptible power system, charging states of the mobile batteries 20, and the like. The management server 140 may transmit a variety of requests for managing the battery replacement machine 120 to at least one of the one or more battery replacement machines 120.

The management server 140 may decide, for at least some of the one or more battery replacement machines 120, the dispensation condition which is the condition relating to the mobile battery 20 to be dispensed. Examples of the dispensation condition include a priority relating to the dispensation of each of the plurality of mobile batteries 20 accommodated in the battery replacement machine 120, identification information of the mobile battery 20 to be preferentially dispensed, a feature of the mobile battery 20 to be preferentially dispensed, and the like.

In the present embodiment, the management server 140 may be used for processing of distributing the variety of keys such as the authentication public key 74. The management server 140 may have a database which associates and stores the battery **ID** and the variety of keys for each of the one or more mobile batteries 20. The database may associate and store the respective battery IDs of the one or more mobile batteries 20 and the respective authentication public keys 74 of the one or more mobile batteries 20. **In** response to a request from each of the one or more battery replacement machines 120, the management server 140 may extract the authentication public key 74 of the mobile battery 20 indicated by that request and transmit the extracted authentication public key 74.

The management server 140 may be configured to be able to wirelessly communicate with the one or more battery replacement machines 120. The management server 140 may be an information processing apparatus which has confirmed that at least one of the one or more battery replacement machines 120 is legitimate. The management server 140 may be a reliable information processing apparatus for the one or more battery replacement machines 120. The management server 140 may be configured to be able to wirelessly communicate with the one or more mobile batteries 20. The management server 140 may be an information processing apparatus which has confirmed that at least one of the one or more mobile batteries 20 is legitimate. The management server 140 may be a reliable information processing apparatus for the one or more mobile batteries 20.

The mobile battery 20 may be an example of a to-be-confirmed apparatus, a second electric power apparatus, or an electricity accumulation apparatus. The key issuer 50 may be an example of a manufacturer or a transferor of a confirmation apparatus, a manufacturer or a transferor of the to-be-confirmed apparatus, or an issuer of second information and fourth information. The communications terminal 52 may be an example of a first external apparatus or a second external apparatus. The battery management system 100 may be an example of the confirmation apparatus or a confirmation system. The battery replacement machine 120 may be an example of the confirmation apparatus, a first electric power apparatus, or a housing apparatus. The housing unit 122 may be an example of the first electric power apparatus or the housing apparatus. The slot 124 may be an example of the first electric power apparatus, the housing apparatus, or the attachment part. The management server 140 may be an example of the first external apparatus or the second external apparatus.

The authentication code may be an example of first information. The authentication public key 74 may be an example of second information. The authentication code encrypted with the authentication public key 74 may be an example of third information. The challenge code may be an example of the third information. The authentication private key 72 may be an example of the fourth information. The decrypted authentication code may be an example of fifth information. The first processing value of the decrypted authentication code may be an example of sixth information. The first processing value of the authentication code generated by the battery replacement machine 120 may be an example of seventh information. The second processing value of the restored authentication code may be an example of eighth information. Information used for the encryption processing of the first algorithm may be an example of ninth information. Information used for the decryption processing of the second algorithm may be an example of the ninth information or tenth information.

Encryption may be an example of conversion of information. Decryption may be an example of inverse conversion of information. The legitimate mobile battery 20 may be an example of a legitimate apparatus. The illegitimate mobile battery 20 may be an example of an illegitimate apparatus. The whitelist may be an example of joint use identification information. A method for authenticating the mobile battery 20 may be an example of a method for confirming the mobile battery 20.

The authentication code may be an example of a first verification information. The authentication public key 74 may be an example of a second verification information. The authentication code encrypted with the authentication public key 74 may be an example of a third verification information. The authentication private key 72 may be an example of a fourth verification information. The authentication private key 72 may be an example of a first private key. The authentication public key 74 may be an example of a first public key corresponding to the first private key.

(Example of another embodiment)

In the present embodiment, the battery management system 100 has been described in detail, by taking as an example a case where the battery management system 100 provides the sharing service of the mobile battery 20. However, the service provided by the battery management system 100 is not limited to the present embodiment. In another embodiment, the battery management system 100 may provide the charging service of the mobile battery 20 to the user 40 of the mobile battery 20.

In the present embodiment, the battery replacement machine 120 has been described in detail, by taking as an example a case where the battery replacement machine 120 works by using the electric power received from the electric power system 12. However, the battery replacement machine 120 is not limited to the present embodiment. In another embodiment, for example, if at least one of the one or more slots 124 arranged in the battery replacement machine 120 includes a bi-directional DC/DC converter, the battery replacement machine 120 may work by using the electric power discharged by at least one of the one or more mobile batteries 20 housed in the battery replacement machine 120.

In the present embodiment, the battery management system 100 has been described in detail, by taking as an example a case where the battery replacement machine 120 includes the one or more housing units 122 and a single communication unit 126. However, the battery replacement machine 120 is not limited to the present embodiment. In another embodiment, the battery replacement machine 120 may include a plurality of housing units 122 and a plurality of communication units 126. In this case, the number of the housing units 122 may be larger than the number of the communication units 126.

In the present embodiment, the battery management system 100 has been described in detail, by taking as an example a case where each of the one or more battery replacement machines 120 obtains the authentication public keys 74 of the one or more mobile batteries 20 from the key issuer 50, the communications terminal 52, or the management server 140. However, a method for obtaining the authentication public key 74 in the battery replacement machine 120 is not limited to the present embodiment. In another embodiment, each of the one or more battery replacement machines 120 may obtain, from the mobile battery 20 attached to the slot 124, the authentication public key 74 of that mobile battery.

In the present embodiment, an example of the method for authenticating the mobile battery 20 has been described, by taking as an example a case where (i) the battery replacement machine 120 generates the authentication code, (ii) the battery replacement machine 120 encrypts the generated authentication code with the authentication public key 74, to generate the challenge code, and (iii) the mobile battery 20 decrypts the encrypted authentication code included in the challenge code with the authentication private key 72, to generate the response code. However, the method for authenticating the mobile battery 20 is not limited to the present embodiment. According to another embodiment, the mobile battery 20 is authenticated using the electronic signature or an electronic certificate. An example of an authentication procedure using the electronic signature is as follows.

For example, first, the mobile battery 20 generates the authentication code. Next, the mobile battery 20 signs the authentication code by using the private key. Specifically, the mobile battery 20 encrypts the authentication code by using the private key. At this time, the mobile battery 20 may use the private key to encrypt data (sometimes referred to as a message) including: the authentication code; and information and/or temporary information (for example, time information indicating time when signature was made) transmitted from the battery replacement machine 120. This suppresses damage caused by repeat attack.

The mobile battery 20, for example, associates the battery ID, the generated authentication code (plaintext), and the encrypted information (sometimes referred to as a ciphertext), and transmits them to the battery replacement machine 120. As described above, the ciphertext may be data obtained by encrypting the authentication code. The ciphertext may be data obtained by encrypting the message.

Next, when the battery replacement machine 120 receives the data from the mobile battery 20, the battery replacement machine 120 executes processing for obtaining a public key of the mobile battery 20. For example, the battery replacement machine 120 accesses a database of a public key stored in any storage apparatus, to obtain a public key associated with the battery ID of the mobile battery 20. The battery replacement machine 120 uses the public key of the mobile battery 20 to decrypt a ciphertext of the authentication code included in the data received from the mobile battery 20.

The battery replacement machine 120 compares the decrypted authentication code with the authentication code (plaintext) received from the mobile battery 20. For example, the battery replacement machine 120 determines whether or not the decrypted authentication code matches the authentication code (plaintext) received from the mobile battery 20. If both match, the battery replacement machine 120 confirms that the mobile battery 20 is authentic.

In the present embodiment, an example of a method for authenticating a to-be-confirmed apparatus by the confirmation apparatus has been described, by taking as an example a case where the challenge code including the encrypted authentication code is generated. However, the challenge code is not limited to the present embodiment. In another embodiment, the challenge code may include an authentication code which has not been encrypted.

(Example of another embodiment relating to subject of confirmation processing)

In the present embodiment, a confirmation method for confirming, by the confirmation apparatus, whether or not the to-be-confirmed apparatus is a legitimate apparatus will be described in detail, by taking as an example a case where the battery replacement machine 120 authenticates the mobile battery 20. However, the confirmation method is not limited to the present embodiment.

Persons skilled in the art who have read description of the present specification could understand that, regardless of a specific combination of the confirmation apparatus and the to-be-confirmed apparatus, the confirmation apparatus can confirm the to-be-confirmed apparatus by a procedure similar to a procedure for confirming, by the battery replacement machine 120, the mobile battery 20. For example, if the confirmation apparatus is the mobile battery 20 and the to-be-confirmed apparatus is the battery replacement machine 120, the mobile battery 20 can confirm whether or not the battery replacement machine 120 is a legitimate apparatus by a procedure similar to the procedure for confirming, by the battery replacement machine 120, the mobile battery 20.

For example, the confirmation apparatus is not limited to the battery replacement machine 120. An subject authenticating the mobile battery 20 may be (i) an apparatus configured to be able to be electrically connected to the mobile battery 20, (ii) an apparatus configured to be able to feed power to the mobile battery 20, or (iii) an apparatus configured to be able to receive power from the mobile battery 20 (these apparatuses may be referred to as electric power apparatuses). Similarly, the to-be-confirmed apparatus is not limited to the mobile battery 20. For example, if the mobile battery 20 authenticates another apparatus, a target authenticated by the mobile battery 20 may be (i) an apparatus configured to be able to be electrically connected to the mobile battery 20, (ii) an apparatus configured to be able to feed power to the mobile battery 20, or (iii) an apparatus configured to be able to receive power from the mobile battery 20 (these apparatuses may be referred to as electric power apparatuses).

Examples of the electric power apparatuses include the electric motorcycle 30, the battery replacement machine 120, and the like. Other examples of the electric power apparatuses include (a) a charger which has a function of charging the mobile battery 20 and does not have a function of supplying electric power to an outside, (b) a power feeding apparatus to which the one or more mobile batteries 20 are attached and which supplies electric power accumulated in the one or more mobile batteries 20 to the outside, (c) an apparatus including both functions: the function of charging the mobile battery 20 (or a function of receiving power from the outside); and a function of discharging the mobile battery 20 (or a function of feeding power to the outside), and the like.

In another embodiment, the confirmation apparatus may be the mobile battery 20, and the to-be-confirmed apparatus may be the electric motorcycle 30, the communications terminal 52, or the battery replacement machine 120. In yet another embodiment, the confirmation apparatus may be the electric motorcycle 30, and the to-be-confirmed apparatus may be the mobile battery 20. In yet another embodiment, the confirmation apparatus may be the battery replacement machine 120, and the to-be-confirmed apparatus may be the communications terminal 52 or the management server 140. In yet another embodiment, the confirmation apparatus may be the communications terminal 52, and the to-be-confirmed apparatus may be the mobile battery 20, the battery replacement machine 120, or the management server 140. In yet another embodiment, the confirmation apparatus may be the management server 140, and the to-be-confirmed apparatus may be the communications terminal 52 or the battery replacement machine 120. In yet another embodiment, if the mobile battery 20 and the management server 140 can transmit and receive information to and from each other, the confirmation apparatus may be the mobile battery 20, and the to-be-confirmed apparatus may be the management server 140. In addition, the confirmation apparatus may be the management server 140, and the to-be-confirmed apparatus may be the mobile battery 20.

As described above, the mobile battery 20 may be an example of the confirmation apparatus. The battery replacement machine 120 may be an example of the to-be-confirmed apparatus. The electric motorcycle 30 may be an example of the confirmation apparatus or the to-be-confirmed apparatus. A legitimate battery replacement machine 120 may be an example of the legitimate apparatus. A legitimate electric motorcycle 30 may be an example of the legitimate apparatus. An authentication method by which one apparatus authenticates another apparatus may be an example of the confirmation method. The battery replacement machine 120 which is not a legitimate apparatus (sometimes referred to as an illegitimate battery replacement machine 120) may be an example of the illegitimate apparatus. The electric motorcycle 30 which is not a legitimate apparatus (sometimes referred to as an illegitimate electric motorcycle 30) may be an example of the illegitimate apparatus.

The confirmation apparatus may be an example of one of the first apparatus or the second apparatus, and the to-be-confirmed apparatus may be an example of another of the first apparatus or the second apparatus. The confirmation apparatus may be an example of one of the information processing apparatus or another information processing apparatus, and the to-be-confirmed apparatus may be an example of another of the information processing apparatus or another information processing apparatus.

The electric power apparatus may be an example of equipment. The storage apparatus of the mobile battery 20 may be an example of a storing unit.

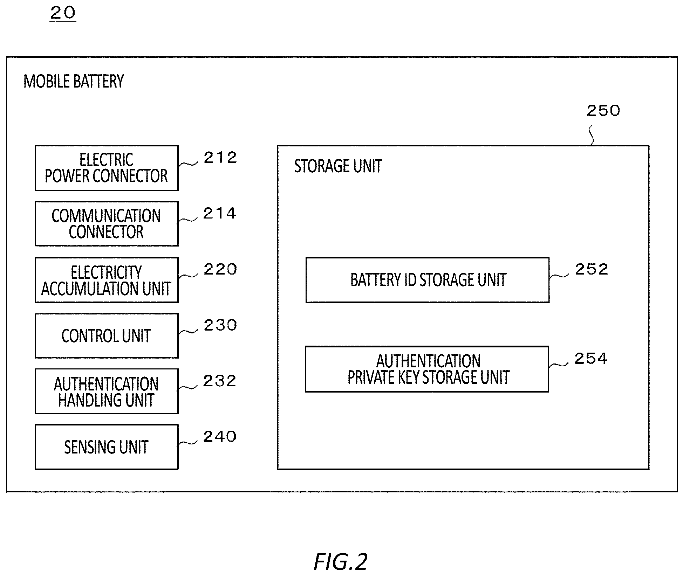

Fig. 2 schematically shows an example of an internal configuration of the mobile battery 20. In the present embodiment, the mobile battery 20 includes an electric power connector 212, a communication connector 214, an electricity accumulation unit 220, a control unit 230, an authentication handling unit 232, a sensing unit 240, and a storage unit 250. In the present embodiment, the storage unit 250 has a battery ID storage unit 252 and an authentication private key storage unit 254.

In the present embodiment, the electric power connector 212 includes an electrical terminal for transmitting and receiving electric power to and from the slot 124 or the electric motorcycle 30. In the present embodiment, the communication connector 214 includes a communication terminal for transmitting and receiving information to and from the slot 124 or the electric motorcycle 30. In the present embodiment, the electricity accumulation unit 220 includes an electricity accumulation cell which accumulates electrical energy.

In the present embodiment, the control unit 230 controls an operation of the mobile battery 20. The control unit 230 may transmit and receive information to and from the housing unit 122 when the mobile battery 20 is housed in the slot 124.

In the present embodiment, the authentication handling unit 232 handles an authentication response request from the battery replacement machine 120. For example, if the mobile battery 20 is attached to one of the slots 124 of the battery replacement machine 120, the authentication handling unit 232 receives a challenge code and the authentication response request from the battery replacement machine 120. The authentication handling unit 232 transmits a response code to the battery replacement machine 120 in response to the authentication response request. The authentication handling unit 232 will be described later in detail.

**In** the present embodiment, the sensing unit 240 obtains information indicating a state of the mobile battery 20. The sensing unit 240 may include a plurality of types of sensors. Examples of the sensors included in the sensing unit 240 include a temperature sensor, a voltage sensor, a current sensor, and the like.

The storage unit 250 stores a variety of information relating to the mobile battery 20. For example, the storage unit 250 stores identification information of the mobile battery 20. The storage unit 250 may store identification information of the electric motorcycle 30, the battery replacement machine 120, or the slot 124 electrically connected to the mobile battery 20. The storage unit 250 may store operation history of the mobile battery 20. For example, the storage unit 250 associates time and a result of measurement by the sensing unit 240 and stores them as the operation history of the mobile battery 20.

In the present embodiment, the battery ID storage unit 252 stores a battery ID of the mobile battery 20. In the present embodiment, the authentication private key storage unit 254 stores an authentication private key 72 of the mobile battery 20.

The electric power connector 212 may be an example of the electrical terminal or a second terminal. The electricity accumulation unit 220 may be an example of an electricity accumulation apparatus. The authentication private key storage unit 254 may be an example of a storage unit. The authentication handling unit 232 may be an example of a third information obtainment unit, a fifth information generation unit, or a response unit. The storage unit 250 may be an example of a storing unit. Storage of information may be an example of memorization of information.

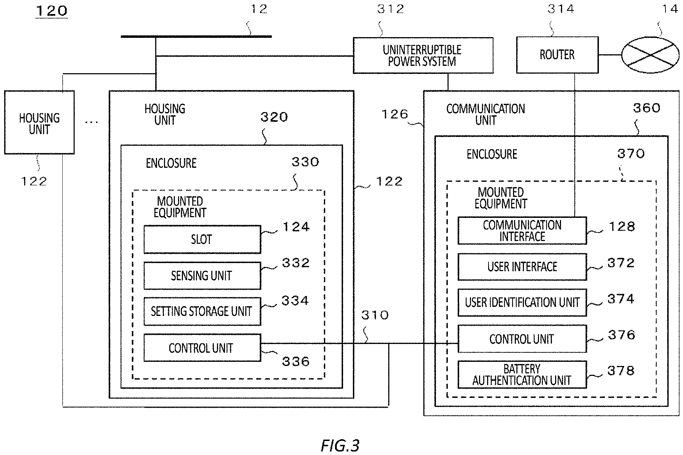

Fig. 3 schematically shows an example of an internal configuration of the battery replacement machine 120. In the present embodiment, the battery replacement machine 120 includes one or more housing units 122, the communication unit 126, a communication line 310, an uninterruptible power system 312, and a router 314. In the present embodiment, each of the one or more housing units 122 has an enclosure 320 and mounted equipment 330. In the present embodiment, the mounted equipment 330 includes one or more slots 124, a sensing unit 332, a setting storage unit 334, and a control unit 336. In the present embodiment, the communication unit 126 has an enclosure 360 and mounted equipment 370. In the present embodiment, the mounted equipment 370 includes the communication interface 128, a user interface 372, a user identification unit 374, a control unit 376, and a battery authentication unit 378.

In the present embodiment, each of the one or more slots 124 is configured to be freely attached to and detached from the mobile battery 20. In addition, each of the one or more slots 124 supplies electric power to the mobile battery 20 to charge the electricity accumulation unit 220 of the mobile battery 20. Each of the one or more slots 124 may receive the electric power outputted by the mobile battery 20.

In the present embodiment, the communication line 310 connects each of the one or more housing units 122 and the communication unit 126 together. In the present embodiment, the uninterruptible power system 312 is arranged between the electric power system 12 and the communication unit 126. The uninterruptible power system 312 supplies electric power to the communication unit 126, for example, if an abnormality has occurred in electric power supply from the electric power system 12. In the present embodiment, the router 314 relays or transfers communication between the communication unit 126 and the communication network 14.

In the present embodiment, the enclosure 320 retains the mounted equipment 330. A shape and a material of the enclosure 320 are not particularly limited. The enclosure 320 may have a box shape, may have a board shape, or may have a frame shape.

In the present embodiment, the mounted equipment 330 is mounted on the enclosure 320. A manner in which the mounted equipment 330 is mounted is not particularly limited. The mounted equipment 330 may be accommodated inside the enclosure 320 or may be installed on a surface of the enclosure 320.

In the present embodiment, the sensing unit 332 obtains information indicating a state of the slot 124 or the mobile battery 20 to be housed in the slot 124. The sensing unit 332 may include a plurality of types of sensors. Examples of the sensors included in the sensing unit 240 include a temperature sensor, a voltage sensor, a current sensor, and the like.

In the present embodiment, the setting storage unit 334 stores a variety of settings relating to the housing unit 122. The setting storage unit 334 may have a physical switch or may have any type of storage medium such as a memory or a hard disk. The settings (i) may be indicated by ON/OFF of the physical switch or (ii) may be stored in a storage medium as electronic data. Examples of the settings include a setting relating to an ID of the housing unit 122, a setting relating to a position at which the housing unit 122 is placed, a setting relating to whether or not a variety of operations in the housing unit 122 can be executed, and the like.

In the present embodiment, the control unit 336 controls an operation of the housing unit 122. Examples of the operation include attachment or detachment of the mobile battery 20 to or from the slot 124, charge or discharge of the mobile battery 20, and the like.

In one embodiment, the control unit 336 controls the attachment or the detachment of the mobile battery 20 to or from the slot 124. Examples of the control include lock control over a shutter (not shown) arranged in the slot 124, control over a withdrawal prevention member (not shown) arranged in the slot 124, control over a mechanism (not shown) for confining the mobile battery 20 arranged in the slot 124, control over a movable connector (not shown) arranged in the slot 124, and the like. The movable connector may be a mechanical connector or may be an electric connector.

In another embodiment, the control unit 336 controls the charge or discharge of the mobile battery 20 housed in the slot 124. Examples of the control include confirmation of connection of electrical terminals, adjustment of charging voltage, adjustment of charging current, adjustment of discharging voltage, adjustment of discharging current, and the like. This allows control over the charge or discharge of the mobile battery 20 via the electrical terminals.

The control unit 336 may control the operation of the housing unit 122 based on an instruction received from the control unit 376. The control unit 336 generates a processing flow including one or more processes for controlling an operation of at least one of a plurality of slots 124 based on the instruction received from the control unit 376, for example. The control unit 336 determines, for each of the one or more processes, whether or not each of the processes can be executed. For the process determined to be executable, the control unit 336 generates an instruction and transmits that instruction to the slot 124 to be controlled. On the other hand, for the process determined to be non-executable, the instruction is not generated or transmitted.

The control unit 336 may transmit, to the control unit 376, information indicating a result of execution of the operation which is based on the instruction received from the control unit 376. For example, the control unit 336 transmits, to the control unit 376, information indicating whether or not the housing unit 122 has executed the operation in accordance with the instruction received from the control unit 376.

In the present embodiment, the enclosure 360 retains the mounted equipment 370. A shape and a material of the enclosure 360 are not particularly limited. The enclosure 360 may have a box shape, may have a board shape, or may have a frame shape.

In the present embodiment, the mounted equipment 370 is mounted on the enclosure 360. A manner in which the mounted equipment 370 is mounted is not particularly limited. The mounted equipment 370 may be accommodated inside the enclosure 360 or may be installed on a surface of the enclosure 360.

In the present embodiment, the user interface 372 provides a variety of information to the user 40 who uses the battery replacement machine 120. In addition, the user interface 372 accepts an input from the user 40 who uses the battery replacement machine 120. Examples of the user interface 372 include a display, a speaker, a keyboard, a pointing device, a touch panel, a microphone, a camera, a voice input system, a gesture input system, and the like.

In the present embodiment, the user identification unit 374 identifies the user 40 who uses the battery replacement machine 120. A known technique may be adopted as a technique for identifying the user 40. For example, the user identification unit 374 identifies the user 40, by analyzing an image of the user 40 to execute processing of authenticating the user 40. The user identification unit 374 may identify the user 40, by using an ID card possessed by the user 40 to execute the processing of authenticating the user 40. The user identification unit 374 may identify the user 40, by using the communications terminal 42 possessed by the user 40 to execute the processing of authenticating the user 40.

In the present embodiment, the control unit 376 is responsible for information processing involving at least one of the user 40 or the management server 140, in information processing in the battery replacement machine 120. For example, the control unit 376 receives a request which is from at least one of the user 40 or the management server 140 and responds to that request. The control unit 376 transmits an instruction (for example, the first instruction) to the housing unit 122 if it judges that the housing unit 122 is required in order to process the request from at least one of the user 40 or the management server 140.

If the control unit 376 can process the request from at least one of the user 40 or the management server 140 without cooperating with the housing unit 122, the control unit 376 may not transmit the instruction to the housing unit 122. The control unit 376 can execute, for example, processing of controlling communication with an outside of the battery replacement machine 120, processing of authenticating the user 40, processing of selecting the slot 124, or the like, without cooperating with the housing unit 122.

More specifically, when the control unit 376 accepts the request from at least one of the user 40 or the management server 140, the control unit 376 first generates a processing flow including one or more processes for processing that request. Next, the control unit 376 extracts processes including processing in the housing unit 122, among the one or more processes. The control unit 376 generates, for each of the extracted processes, an instruction indicating a content of the processing in the housing unit 122.

The instruction may include information indicating the housing unit 122 (sometimes referred to as a target unit) to be controlled. The instruction may include information indicating the slot 124 (sometimes referred to as a target slot) to be controlled. The instruction may include identification information of the target slot and information indicating a content of an operation in the target slot.

Subsequently, the control unit 376 transmits the instruction to the housing unit 122 to be instructed. The control unit 376 may obtain information indicating a result of execution of the instruction from the housing unit 122 which has received the instruction.

The control unit 376 may decide a manner in which the mobile battery 20 is housed, based on output of the battery authentication unit 378. The control unit 376 may decide a manner in which the mobile battery 20 is charged, based on a result of authentication by the battery authentication unit 378. The control unit 376 may decide a manner in which the mobile battery 20 is discharged, based on the result of the authentication by the battery authentication unit 378.

As described later, the battery authentication unit 378 outputs, for example, information indicating whether or not a specific mobile battery 20 is a legitimate apparatus. The battery authentication unit 378 outputs, for example, information indicating whether or not a specific mobile battery 20 will be continuously attached to the slot 124. The battery authentication unit 378 outputs, for example, information indicating whether or not a specific mobile battery 20 will be housed in a manner different from that of the legitimate apparatus. The battery authentication unit 378 outputs, for example, information indicating whether or not a specific mobile battery 20 will be housed as the legitimate apparatus. The battery authentication unit 378 outputs, for example, information indicating whether or not a specific mobile battery 20 will be charged and/or discharged. The battery authentication unit 378 outputs, for example, information indicating that processing of authenticating a specific mobile battery 20 has failed.

If the control unit 376 obtains information indicating that a specific mobile battery 20 is not a legitimate apparatus, the control unit 376 may prohibit charging of the specific mobile battery 20, or may not permit that charging. If a specific mobile battery 20 is not a legitimate apparatus, the control unit 376 may control charging of a specific mobile battery 20 such that an allowable value of a charging current or charging electric power is smaller than when the specific mobile battery 20 is a legitimate apparatus. If a specific mobile battery 20 is not a legitimate apparatus, the control unit 376 may permit discharging of the specific mobile battery 20, or may not prohibit that discharging. If a specific mobile battery 20 is not a legitimate apparatus, the control unit 376 may control discharging of the specific mobile battery 20 such that an allowable value of a discharging current or discharging electric power is smaller than when the specific mobile battery 20 is a legitimate apparatus.

In another embodiment, if a confirmation apparatus is the electric motorcycle 30, and a to-be-confirmed apparatus is the mobile battery 20, a computer of the electric motorcycle 30 may function as the control unit 376 and the battery authentication unit 378. In this case, the mobile battery 20 may be charged with regenerative electric power.

If the control unit 376 obtains information indicating that processing of authenticating a specific mobile battery 20 has failed, the control unit 376 may execute processing similar to that executed when the mobile battery 20 is not determined to be a legitimate apparatus. If the control unit 376 obtains information indicating that processing of authenticating a specific mobile battery 20 has failed, the battery authentication unit 378 may decide to house the mobile battery 20 in a manner different from that of the legitimate apparatus. For example, the battery authentication unit 378 houses the mobile battery 20 only during a period when a special condition is met. Examples of the period include a period until an administrator of the mobile battery 20 collects the mobile battery 20, for example, a period during which a dispensation condition for the mobile battery 20 is relaxed due to occurrence of an emergency situation or an emergent situation, and the like.

If the control unit 376 obtains information indicating that processing of authenticating a specific mobile battery 20 has failed, the control unit 376 may prohibit charging of the specific mobile battery 20, or may not permit that charging. If processing of authenticating a specific mobile battery 20 fails, the control unit 376 may control charging of the specific mobile battery 20 such that an allowable value of a charging current or charging electric power is smaller than when the processing of authenticating the specific mobile battery 20 is successful. If the control unit 376 obtains information indicating that processing of authenticating a specific mobile battery 20 has failed, the control unit 376 may prohibit discharging of the specific mobile battery 20, or may not permit that discharging. If processing of authenticating a specific mobile battery 20 fails, the control unit 376 may control discharging of the specific mobile battery 20 such that an allowable value of a discharging current or discharging electric power is smaller than when the processing of authenticating the specific mobile battery 20 is successful.

If the control unit 376 obtains information indicating that processing of authenticating a specific mobile battery 20 has failed, the control unit 376 may access the storage unit 250 of the specific mobile battery 20, to obtain specific information stored in the storage unit 250. For example, the control unit 376 may access the storage unit 250 of a specific mobile battery 20, to obtain identification information of the battery replacement machine 120 to which the specific mobile battery 20 had been attached before being attached to a current battery replacement machine 120 (sometimes referred to as an immediately preceding battery replacement machine 120). For example, the control unit 376 may access the storage unit 250 of a specific mobile battery 20, to obtain identification information of an electric power apparatus to which the specific mobile battery 20 had been attached before being attached to a current battery replacement machine 120 (an electric power apparatus other than the battery replacement machine 120, for example, the electric motorcycle 30).

The control unit 376 may transmit the identification information of the immediately preceding battery replacement machine 120 and/or the identification information of the electric power apparatus to the management server 140. This allows the management server 140 to detect a breakdown or an abnormality in the immediately preceding battery replacement machine 120. The management server 140 may specify the immediately preceding battery replacement machine 120 based on the identification information of the electric power apparatus and on movement history or battery replacement history of that electric power apparatus.

The battery authentication unit 378 executes processing of authenticating the mobile battery 20. For example, the battery authentication unit 378 confirms whether or not the mobile battery 20 attached to the slot 124 is a legitimate mobile battery 20. If processing of authenticating a specific mobile battery 20 fails, the battery authentication unit 378 may re-execute the processing of authenticating the specific mobile battery 20. The number of times for re-execution may be predetermined. A manner of re-execution is not particularly limited, and the authentication processing may be restarted from generation of an authentication code, or may be restarted using a previously generated authentication code. The battery authentication unit 378 will be described later in detail.

The battery authentication unit 378 may be an example of a confirmation apparatus. The slot 124 may be an example of a charging apparatus. The slot 124 may be an example of a charging and discharging apparatus.

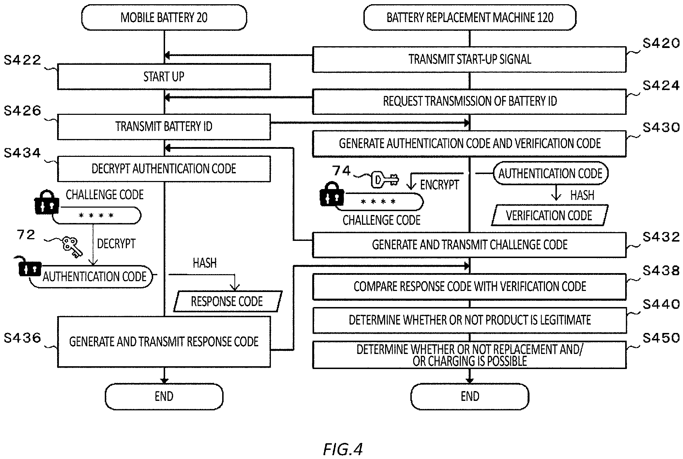

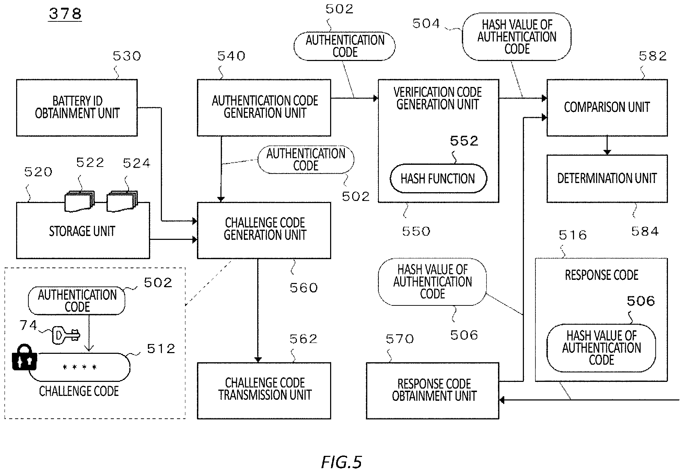

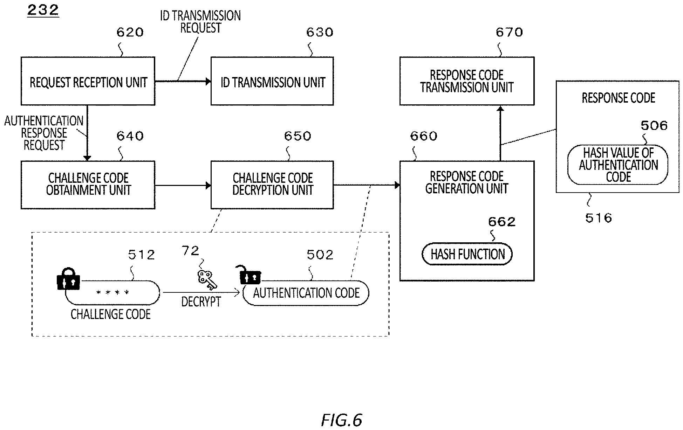

An example of processing of authenticating the mobile battery 20 in the battery replacement machine 120 will be described in detail by using Fig. 4, Fig. 5, and Fig. 6. Fig. 4 schematically shows an example of a procedure for authenticating the mobile battery 20. Fig. 5 schematically shows an example of an internal configuration of the battery authentication unit 378 for realizing the authentication procedure to be described with reference to Fig. 4. Fig. 6 schematically shows an example of an internal configuration of the authentication handling unit 232 for realizing the authentication procedure to be described with reference to Fig. 4. It should be noted that the processing of authenticating the mobile battery 20 in the battery replacement machine 120, the authentication handling unit 232, and the battery authentication unit 378 are not limited to the present embodiment.

In the embodiment to be described with reference to Fig. 4, the example of the processing of authenticating the mobile battery 20 will be described, by taking as an example a case where a step of obtaining, by the mobile battery 20, the authentication private key 72 of the mobile battery 20 from the key issuer 50, the communications terminal 52, or the management server 140 has already ended. In the obtainment processing, the mobile battery 20 stores the authentication private key 72 in, for example, the authentication private key storage unit 254.

In addition, in the embodiment to be described with reference to Fig. 4, the example of the processing of authenticating the mobile battery 20 will be described, by taking as an example a case where a step of obtaining, by the battery replacement machine 120, database relating to the authentication public keys 74 of the one or more mobile batteries 20 described above from the key issuer 50, the communications terminal 52, or the management server 140 has already ended. In the obtainment processing, the battery replacement machine 120 stores the database relating to the authentication public keys 74 of the one or more mobile batteries 20 in, for example, a storage apparatus arranged in the mounted equipment 370 or the battery authentication unit 378.

In the present embodiment, the authentication private key storage unit 254 stores the authentication private key 72 of the mobile battery 20 at a stage where processing of the processing of authenticating the mobile battery 20 is started. Similarly, the battery authentication unit 378 of the battery replacement machine 120 includes the database relating to the authentication public keys 74 of the one or more mobile batteries 20.

As shown in Fig. 4, according to the present embodiment, first, in Step 420 (Step may be abbreviated as S), the battery authentication unit 378 of the battery replacement machine 120 detects that the mobile battery 20 has been attached to the slot 124. When the battery authentication unit 378 of the battery replacement machine 120 detects that the mobile battery 20 has been attached to the slot 124, the battery authentication unit 378 of the battery replacement machine 120 transmits a start-up signal to the mobile battery 20.

In S422, when the control unit 230 of the mobile battery 20 receives the start-up signal, for example, the control unit 230 and the authentication handling unit 232 are started up. At this time, the control unit 230 may transmit, to the battery replacement machine 120, a start-up confirmation signal indicating that the authentication handling unit 232 has been started up.

Next, in S424, the battery authentication unit 378 transmits, to the mobile battery 20, a signal requesting transmission of a battery ID (sometimes referred to as an ID transmission request). In S426, for example, when the control unit 230 of the mobile battery 20 receives an ID transmission request signal, the control unit 230 transmits, to the battery replacement machine 120, the battery ID stored in the battery ID storage unit 252.

Next, in S430, when the battery authentication unit 378 obtains the battery ID of the mobile battery 20, the battery authentication unit 378 refers to the database relating to the authentication public key 74 described above by using that battery ID as a key, to extract the authentication public key 74 matching that battery ID. If the authentication public key 74 matching the battery ID is not extracted, the battery authentication unit 378 may access the communications terminal 52 or the management server 140, to obtain the authentication public key 74 matching that battery ID.

In addition, the battery authentication unit 378 prepares an authentication code. For example, the battery authentication unit 378 generates a random number, and decides to use that random number as the authentication code.

Next, the battery authentication unit 378 generates, by converting the authentication code based on the authentication public key 74 of the mobile battery 20, a challenge code including the converted authentication code. For example, the battery authentication unit 378 encrypts the authentication code by using the authentication public key 74 of the mobile battery 20. In addition, the battery authentication unit 378 generates a challenge code including the encrypted authentication code.

Further, in the present embodiment, the battery authentication unit 378 prepares a verification code. For example, the battery authentication unit 378 executes arithmetic processing using a hash function, to generate a hash value of the authentication code. The battery authentication unit 378 decides to use the generated hash value as the verification code.

Next, in S432, the battery authentication unit 378 transmits the challenge code to the mobile battery 20. The battery authentication unit 378 may transmit the challenge code and an authentication response request to the mobile battery 20.

In S434, when the authentication handling unit 232 receives the challenge code, the authentication handling unit 232 inversely converts the encrypted authentication code included in the challenge code, based on the authentication private key 72 stored in the authentication private key storage unit 254. Specifically, the authentication handling unit 232 decrypts the encrypted authentication code included in the challenge code, by using the authentication private key 72 stored in the authentication private key storage unit 254. Since the authentication private key 72 is paired with the authentication public key 74, if the mobile battery 20 is a legitimate mobile battery 20, the authentication handling unit 232 will successfully decrypt the encrypted authentication code.

Next, in S436, the authentication handling unit 232 generates a response code including information indicating that the mobile battery 20 has successfully decrypted the authentication code encrypted with the authentication public key 74. For example, the authentication handling unit 232 executes the arithmetic processing using the hash function, to generate a hash value of the decrypted authentication code. The authentication handling unit 232 generates a response code including the hash value of the decrypted authentication code. In addition, the authentication handling unit 232 transmits the response code to the battery replacement machine 120.

Next, in S438, when the battery authentication unit 378 receives the response code, the battery authentication unit 378 compares the hash value included in the response code with the hash value generated as the verification code. For example, the battery authentication unit 378 determines whether or not the hash value included in the response code matches the hash value generated as the verification code. In addition, in S440, based on a result of the comparison, the battery authentication unit 378 determines whether or not the mobile battery 20 is a legitimate mobile battery 20 (sometimes referred to as a legitimate apparatus).

According to the present embodiment, in S450, the battery authentication unit 378 may determine whether the mobile battery 20 is to be replaced, based on a result of determination in S440. For example, if the mobile battery 20 is not determined to be a legitimate apparatus, the battery authentication unit 378 decides not to attach the mobile battery 20 to the slot 124.

The attachment may not include temporary attachment for the authentication processing. For example, if the battery replacement machine 120 and the mobile battery 20 communicate by wire, the mobile battery 20 may be temporarily attached to the battery replacement machine 120 in order for the battery authentication unit 378 to authenticate the mobile battery 20. The attachment means, for example, that the mobile battery 20 is continuously attached to the battery replacement machine 120. The attachment may mean that the mobile battery 20 is housed as the legitimate apparatus.

In one embodiment, if the mobile battery 20 is not determined to be a legitimate apparatus, the battery authentication unit 378 may decide not to continuously attach the mobile battery 20 to the slot 124. If the mobile battery 20 is not determined to be a legitimate mobile battery 20, the battery authentication unit 378 may decide to house the mobile battery 20 in a manner different from that of the legitimate apparatus. For example, the battery authentication unit 378 houses the mobile battery 20 only during a period when a special condition is met. Examples of the period include a period until an administrator of the mobile battery 20 collects the mobile battery 20, for example, a period during which a dispensation condition for the mobile battery 20 is relaxed due to occurrence of an emergency situation or an emergent situation, and the like.

In another embodiment, if the mobile battery 20 is determined to be a legitimate apparatus, the battery authentication unit 378 decides to attach the mobile battery 20 to the slot 124. If the mobile battery 20 is determined to be a legitimate apparatus, the battery authentication unit 378 may decide to continuously attach the mobile battery 20 to the slot 124. If the mobile battery 20 is determined to be a legitimate apparatus, the battery authentication unit 378 may decide to house the mobile battery 20 as the legitimate apparatus.

The battery authentication unit 378 may determine whether the mobile battery 20 is to be replaced, based on the result of determination in S440 and on the whitelist described above. For example, if the mobile battery 20 is determined to be a legitimate mobile battery 20, the battery authentication unit 378 determines whether or not the mobile battery 20 is the mobile battery 20 which can be used by a plurality of users 40.

Specifically, the battery authentication unit 378 confirms whether or not the battery ID of the mobile battery 20 is listed in the whitelist. If the battery ID of the mobile battery 20 is listed in the whitelist, the battery authentication unit 378 determines that the mobile battery 20 is the mobile battery 20 which can be used by the plurality of users 40. On the other hand, if the battery ID of the mobile battery 20 is not listed in the whitelist, the battery authentication unit 378 determines that the mobile battery 20 is not the mobile battery 20 which can be used by the plurality of users 40.

If the mobile battery 20 is determined not to be the mobile battery 20 which can be used by the plurality of users 40, the battery authentication unit 378 may decide not to attach the mobile battery 20 to the slot 124. This suppresses the mobile battery 20 from being housed in the battery replacement machine 120, if the user 40 of the mobile battery 20 has not subscribed to a charging service of the mobile battery 20 or a replacement service of the mobile battery 20 by the battery management system 100, even if the mobile battery 20 is a legitimate mobile battery 20, for example.

If it is decided not to attach the mobile battery 20 to the slot 124, even if the mobile battery 20 is attached to the slot 124 in order to execute the processing of authenticating the mobile battery 20, the battery replacement machine 120 may release the attachment of the mobile battery 20 and return the mobile battery 20 to the user 40. It should be noted that a manner in which the mobile battery 20 is attached to the slot 124 is not particularly limited. The manner may be a manner in which the mobile battery 20 is accommodated inside the slot 124 or may be a manner in which the mobile battery 20 is placed on the slot 124.

If it is decided not to continuously attach the mobile battery 20 to the slot 124, information processing may be executed which is similar to that executed when it is decided not to attach the mobile battery 20 to the slot 124. If it is decided to house the mobile battery 20 in a manner different from that of the legitimate apparatus, information processing may be executed which is similar to that executed when it is decided not to attach the mobile battery 20 to the slot 124.

In addition, according to the present embodiment, in S450, the battery authentication unit 378 may determine whether the mobile battery 20 is to be charged and/or discharged, based on the determination in S440. For example, if the mobile battery 20 is not determined to be a legitimate mobile battery 20, it is decided not to charge and/or discharge the mobile battery 20. This allows prohibition or suppression of output and input of electric power between the slot 124 and the mobile battery 20. The battery authentication unit 378 may determine, with a procedure similar to the procedure described above, whether the mobile battery 20 is to be charged and/or discharged, based on the result of determination in S440 and on the whitelist described above.

It should be noted that processing in the mobile battery 20 may be executed by a single processor or may be executed through cooperation among a plurality of processors. Similarly, processing in the battery replacement machine 120 may be executed by the single processor or may be executed through the cooperation among the plurality of processors. This further improves security.

For example, the mobile battery 20 includes a control CPU for controlling a variety of operations of the mobile battery 20 and a secure IC which executes encryption processing and decryption processing. S422 and S426 are executed by the control CPU. In addition, in S434, when the control CPU receives the challenge code, the control CPU transfers the challenge code to the secure IC. The secure IC decrypts the challenge code in S434 and generates the response code in S436. In addition, in S436, the secure IC outputs the generated response code to the control CPU. In S436, the control CPU transmits the response code generated by the secure IC to the battery replacement machine 120.

If the mobile battery 20 is determined or confirmed not to be a legitimate apparatus, this may be an example of a case where the mobile battery 20 is not determined to be a legitimate apparatus. If the mobile battery 20 is determined or confirmed to be an illegitimate mobile battery 20, this may be an example of a case where the mobile battery 20 is not determined to be a legitimate apparatus.

If the mobile battery 20 is not determined to be a legitimate apparatus, this may be an example of a case where third verification information and fifth verification information are determined not to satisfy a second mathematical relationship, or a case where third verification information and sixth verification information do not match. If the mobile battery 20 is determined to be a legitimate apparatus, this may be an example of a case where third verification information and fifth verification information are determined to satisfy a second mathematical relationship, or a case where third verification information and sixth verification information match.

As shown in Fig. 5, in the present embodiment, the battery authentication unit 378 includes a storage unit 520, a battery ID obtainment unit 530, an authentication code generation unit 540, a verification code generation unit 550, a challenge code generation unit 560, a challenge code transmission unit 562, a response code obtainment unit 570, a comparison unit 582, a determination unit 584. In the present embodiment, the storage unit 520 has a public key database 522 and a whitelist 524.

In the present embodiment, the storage unit 520 stores a variety of information. In the present embodiment, the public key database 522 associates and stores respective battery IDs of the one or more mobile batteries 20 managed by the battery management system 100 and the respective authentication public keys 74 of the one or more mobile batteries 20. The whitelist 524 stores the battery IDs of the one or more mobile batteries 20 managed by the battery management system 100. It should be noted that, in another embodiment, the public key database 522 may be used as the whitelist 524.

In one embodiment, the battery authentication unit 378 obtains the public key database 522 from the key issuer 50. The battery authentication unit 378 stores, in the storage unit 520, the public key database 522 obtained from the key issuer 50. In another embodiment, the battery authentication unit 378 obtains the public key database 522 from the communications terminal 52 or the management server 140. The battery authentication unit 378 stores, in the storage unit 520, the public key database 522 obtained from the communications terminal 52 or the management server 140.

In the present embodiment, the battery ID obtainment unit 530 obtains the battery ID of the mobile battery 20 to be accommodated in the slot 124 or the battery ID of the mobile battery 20 accommodated in the slot 124. The battery ID obtainment unit 530 may obtain the battery ID of the mobile battery 20 attached to the slot 124. The battery ID obtainment unit 530 may obtain the battery ID of the mobile battery 20 from the communications terminal 42 or the mobile battery 20.

In the present embodiment, the authentication code generation unit 540 generates an authentication code 502. The authentication code generation unit 540 may generate the authentication code 502 by generating a random number.

In the present embodiment, the verification code generation unit 550 generates a verification code. The verification code generation unit 550 generates the verification code according to a rule for generating a response code by the mobile battery 20. If the mobile battery 20 generates the response code including a restored authentication code itself, the verification code generation unit 550 may not generate the verification code and may decide to use the authentication code as the verification code.

In the present embodiment, the verification code generation unit 550 executes arithmetic processing using a hash function 552, to generate a hash value 504 of the authentication code 502. The verification code generation unit 550 decides to use the generated hash value 504 as the verification code. The verification code generation unit 550 outputs the hash value 504 to the comparison unit 582 as the verification code.

In the present embodiment, the challenge code generation unit 560 generates a challenge code 512. For example, the challenge code generation unit 560 encrypts the authentication code 502 by using the authentication public key 74 of the mobile battery 20. This allows the battery authentication unit 378 to generate the challenge code 512 including the encrypted authentication code 502.

In the present embodiment, the challenge code transmission unit 562 transmits, to the mobile battery 20, the challenge code 512 generated by the challenge code transmission unit 562. The challenge code transmission unit 562 may transmit the challenge code 512 and an authentication response request to the mobile battery 20.

In the present embodiment, the response code obtainment unit 570 obtains a response code 516 corresponding to the challenge code 512 from the mobile battery 20. In the present embodiment, the response code 516 includes a hash value 506 of the authentication code 502 restored in the mobile battery 20. The response code obtainment unit 570 outputs the hash value 506 of the restored authentication code 502 to the comparison unit 582.

In the present embodiment, the comparison unit 582 obtains the hash value 504 used as the verification code from the verification code generation unit 550. In addition, the comparison unit 582 obtains the hash value 506 included in the response code 516 from the response code obtainment unit 570. The comparison unit 582 compares the hash value 504 used as the verification code with the hash value 506 included in the response code 516. For example, the comparison unit 582 determines whether or not the hash value 504 used as the verification code matches the hash value 506 included in the response code 516. The comparison unit 582 outputs, to the determination unit 584, information indicating a result of comparison.

In the present embodiment, the determination unit 584 obtains information indicating the result of the comparison by the comparison unit 582. The determination unit 584 determines whether or not the mobile battery 20 is a legitimate mobile battery 20, based on the result of the comparison by the comparison unit 582.

The determination unit 584 may determine whether the mobile battery 20 is to be replaced, based on a result of determination as to whether or not the mobile battery 20 is a legitimate mobile battery 20. The determination unit 584 may determine whether the mobile battery 20 is to be replaced, based on the result of determination as to whether or not the mobile battery 20 is a legitimate mobile battery 20 and on the whitelist 524.

The determination unit 584 may determine whether the mobile battery 20 is to be charged and/or discharged, based on the result of determination as to whether or not the mobile battery 20 is a legitimate mobile battery 20. This allows prohibition or suppression of output and input of electric power between the slot 124 and the mobile battery 20. The determination unit 584 may determine whether the mobile battery 20 is to be charged and/or discharged, based on the result of determination as to whether or not the mobile battery 20 is a legitimate mobile battery 20 and on the whitelist 524.

The storage unit 520 may be an example of a first storage apparatus. The challenge code generation unit 560 may be an example of a third information generation unit. The challenge code transmission unit 562 may be an example of a third information transmission unit. The response code obtainment unit 570 may be an example of a response reception unit. The comparison unit 582 may be an example of a comparison unit.

As shown in Fig. 6, in the present embodiment, the authentication handling unit 232 includes a request reception unit 620, an ID transmission unit 630, a challenge code obtainment unit 640, a challenge code decryption unit 650, a response code generation unit 660, and a response code transmission unit 670.

In the present embodiment, the request reception unit 620 receives a variety of requests from the battery replacement machine 120. Examples of the requests include an ID transmission request, an authentication response request, and the like. In the present embodiment, if the request reception unit 620 receives the ID transmission request from the battery replacement machine 120, the ID transmission unit 630 transmits a battery ID of the mobile battery 20 to the battery replacement machine 120.

In the present embodiment, if the request reception unit 620 receives the authentication response request from the battery replacement machine 120, the challenge code obtainment unit 640 obtains the challenge code 512 transmitted by the battery replacement machine 120. In the present embodiment, the challenge code decryption unit 650 decrypts, by using the authentication private key 72, the encrypted authentication code 502 included in the challenge code 512. In addition, the challenge code decryption unit 650 outputs the decrypted authentication code 502 to the response code generation unit 660.

In the present embodiment, the response code generation unit 660 generates the response code 516 based on the decrypted authentication code 502. The response code generation unit 660 may generate the response code 516 in any format in accordance with the rule described above.

According to the present embodiment, the response code generation unit 660 executes arithmetic processing using a hash function 662, to generate the hash value 506 of the restored authentication code 502. The response code generation unit 660 generates the response code 516 including the hash value 506 of the restored authentication code 502. In the present embodiment, the response code transmission unit 670 transmits the response code 516 to the battery replacement machine 120.

The challenge code obtainment unit 640 may be an example of a third information obtainment unit. The challenge code decryption unit 650 may be an example of a fifth information generation unit. The response code transmission unit 670 may be an example of a response unit.

(Example of another embodiment)

In the present embodiment, an example of information processing in the battery replacement machine 120 has been described, by taking as an example a case where, in S450 of Fig. 4, if the mobile battery 20 attached to the slot 124 is determined not to be the mobile battery 20 which can be used by the plurality of users 40, the battery authentication unit 378 decides not to attach the mobile battery 20 to the slot 124 or not to charge or discharge the mobile battery 20. However, the information processing for a case where the mobile battery 20 attached to the slot 124 is determined not to be the mobile battery 20 which can be used by the plurality of users 40 is not limited to the present embodiment. In another embodiment, if the mobile battery 20 attached to the slot 124 is determined not to be the mobile battery 20 which can be used by the plurality of users 40, the battery authentication unit 378 may execute processing of attaching the mobile battery 20 to the slot 124 in accordance with a predetermined first rule or may execute processing of charging or processing of discharging the mobile battery 20 in accordance with a predetermined second rule.

An example of the first rule includes a rule which allows the mobile battery 20 to be attached to the slot 124 but does not allow the users 40 other than the user 40 who has attached the mobile battery 20 to the slot 124 to take out the mobile battery 20. An example of the second rule includes a rule which allows the mobile battery 20 to be charged or discharged until the number of times that the mobile battery 20 has been attached to the slot 124 reaches a predetermined number of times or frequency but does not allow the mobile battery 20 to be charged or discharged if the number of times that the mobile battery 20 has been attached to the slot 124 exceeds the number of times or frequency.

In the present embodiment, an example of processing of authenticating the mobile battery 20 has been described, by taking as an example a case where the battery replacement machine 120 obtains the authentication public key 74 of the mobile battery 20 from the key issuer 50, the communications terminal 52, or the management server 140. However, a method for obtaining the authentication public key 74 in the battery replacement machine 120 is not limited to the present embodiment. In another embodiment, the battery replacement machine 120 may obtain the authentication public key 74 from the mobile battery 20.

In the present embodiment, the example of the processing of authenticating the mobile battery 20 has been described, by taking as an example a case where processing of comparing an authentication code and a response code is executed through comparison between a verification code generated from the authentication code and the response code. However, the processing of comparing the authentication code with the response code is not limited to the present embodiment. The authentication code and the response code may be compared by a variety of methods described with reference to Fig. 1.

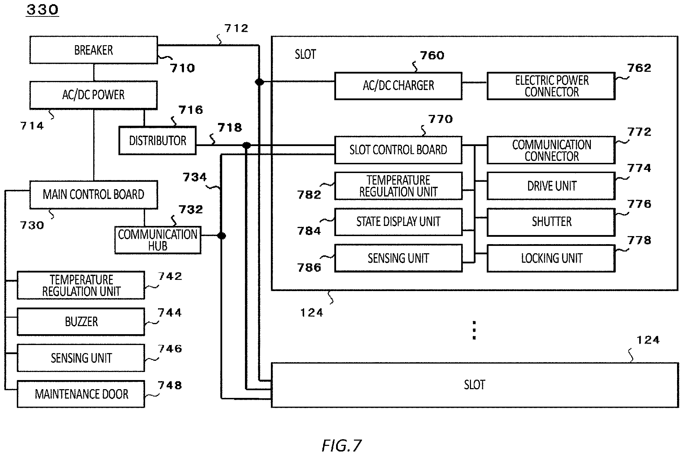

Fig. 7 schematically shows an example of an internal configuration of the mounted equipment 330. In the present embodiment, for ease of explanation, the mounted equipment 330 will be described in detail, by taking as an example a case where the slot 124 does not have a function to discharge the mobile battery 20. However, persons skilled in the art who have read description of the present specification could understand that it is possible to change the configuration to a configuration which allows the slot 124 to charge and discharge the mobile battery 20.

In the present embodiment, the mounted equipment 330 includes one or more slots 124, a breaker 710, an electric power line 712, an AC/DC power 714, a distributor 716, an electric power line 718, a main control board 730, a communication hub 732, a communication line 734, a temperature regulation unit 742, a buzzer 744, a sensing unit 746, and a maintenance door 748. In the present embodiment, the slot 124 has an AC/DC charger 760, an electric power connector 762, a slot control board 770, a communication connector 772, a drive unit 774, a shutter 776, a locking unit 778, a temperature regulation unit 782, a state display unit 784, and a sensing unit 786.

In the present embodiment, the breaker 710 receives electric power from the electric power system 12. The breaker 710 supplies the electric power received from the electric power system 12, via the electric power line 712 to respective AC/DC chargers 760 of the one or more slots 124. The breaker 710 supplies the electric power received from the electric power system 12 to the AC/DC power 714. Examples of the breaker 710 include a circuit breaker, a residual current circuit breaker with overcurrent protection, and the like.

In the present embodiment, the AC/DC power 714 functions as a power source which supplies electric power for control. For example, the AC/DC power 714 converts alternating current power received from the breaker 710 into direct current power with appropriate voltage. The AC/DC power 714 supplies the converted direct current power, via the distributor 716 and the electric power line 718 to respective slot control boards 770 of the one or more slots 124. In addition, the AC/DC power 714 supplies, to the main control board 730, the converted direct current power.

In the present embodiment, the main control board 730 controls an operation of each unit of the housing unit 122. The main control board 730 is connected to a CPU board 820 via the communication line 310. The main control board 730 may function as the control unit 336. The main control board 730 may function as the control unit 336 in cooperation with the slot control board 770.

The main control board 730 transmits and receives information to and from the respective slot control boards 770 of the one or more slots 124 via the communication hub 732 and the communication line 734. The main control board 730 may control operations of the temperature regulation unit 742, the buzzer 744, the sensing unit 746, and the maintenance door 748. The main control board 730 may obtain information indicating states of the temperature regulation unit 742, the buzzer 744, the sensing unit 746, and the maintenance door 748.

For example, the main control board 730 obtains information indicating a result of measurement by the sensing unit 746 from the sensing unit 746. In addition, the main control board 730 obtains information indicating an opened/closed state of the maintenance door 748 from the maintenance door 748.

In the present embodiment, the temperature regulation unit 742 regulates temperature inside the enclosure 320 of the housing unit 122. Examples of the temperature regulation unit 742 include a fan, a water cooled heat extractor, and the like.

In the present embodiment, the buzzer 744 informs the user 40 of a state of the housing unit 122. The buzzer 744 may output a warning sound. The buzzer 744 may output a warning designated by the main control board 730, among a plurality of warning sounds having different warning patterns.

In the present embodiment, the sensing unit 746 obtains information indicating the state of the housing unit 122. The sensing unit 746 may include a plurality of types of sensors. Examples of the sensors included in the sensing unit 746 include a temperature sensor, a vibration sensor, an electric leakage sensor, and the like. The sensing unit 746 may constitute at least part of the sensing unit 332.

In the present embodiment, the maintenance door 748 is arranged in an opening (not shown) of the enclosure 320 and is used for maintenance and management of the battery replacement machine 120 by maintenance personnel of the battery replacement machine 120. The maintenance door 748 may output, to the main control board 730, information indicating an opened/-closed state. For example, when the maintenance door 748 is opened, the maintenance door 748 outputs a signal indicating that the maintenance door 748 is opened.

In the present embodiment, the AC/DC charger 760 charges the mobile battery 20 electrically connected to the electric power connector 762. The AC/DC charger 760 adjusts at least one of voltage or current to be applied to the mobile battery 20 electrically connected to the electric power connector 762, in accordance with a direction of the slot control board 770.

In the present embodiment, the electric power connector 762 includes an electrical terminal to be electrically connected to the electric power connector 212 of the mobile battery 20 if the mobile battery 20 is accommodated in the slot 124. In the present embodiment, the electric power connector 762 is configured to be enabled to move by the drive unit 774. It should be noted that, in another embodiment, the electric power connector 762 may be fixed inside the slot 124.

In the present embodiment, the slot control board 770 controls an operation of each unit of the slot 124. The slot control board 770 may control the operation of the slot 124 in accordance with a direction from the main control board 730. The slot control board 770 may function as the control unit 336. The slot control board 770 may function as the control unit 336 in cooperation with the main control board 730.

The slot control board 770 may transmit and receive information to and from the control unit 230 of the mobile battery 20 housed in the slot 124, via the communication connector 772. For example, the slot control board 770 can read information stored in the storage unit 250 of the mobile battery 20. In addition, the slot control board 770 can write information into the storage unit 250 of the mobile battery 20.

In the present embodiment, the communication connector 772 includes a communication terminal to be communicably connected to the communication connector 214 of the mobile battery 20 if the mobile battery 20 is accommodated in the slot 124. In the present embodiment, the communication connector 772 is configured to be enabled to move by the drive unit 774. It should be noted that, in another embodiment, the communication connector 772 may be fixed inside the slot 124.

In the present embodiment, the drive unit 774 drives a variety of movable members arranged in the slot 124. The drive unit 774 may drive the movable members in accordance with a direction from the slot control board 770. Examples of the movable members include the electric power connector 762, the communication connector 772, the shutter 776, the locking unit 778, a withdrawal prevention member arranged in the slot 124, a mechanism for confining the mobile battery 20 arranged in the slot 124, and the like.

In the present embodiment, the shutter 776 is arranged in an opening (not shown) of the slot 124 and controls whether or not the user 40 can use the mobile battery 20. The shutter 776 may control opening and closing in accordance with the direction from the slot control board 770.

For example, if the shutter 776 is in an opened state, the user 40 can insert the mobile battery 20 into the slot 124 or take the mobile battery 20 out of the slot 124. On the other hand, if the shutter 776 is in a closed state, the user 40 cannot insert the mobile battery 20 into the slot 124 or take the mobile battery 20 out of the slot 124.

In the present embodiment, the locking unit 778 switches between a locked state and an unlocked state of the shutter 776. The locking unit 778 may switch between the locked state and the unlocked state of the shutter 776 in accordance with the direction from the slot control board 770.

In the present embodiment, the temperature regulation unit 782 regulates temperature inside the slot 124. In the present embodiment, the temperature regulation unit 782 may regulate the temperature inside the slot 124 in accordance with the direction from the slot control board 770. Examples of the temperature regulation unit 782 include the fan, the water cooled heat extractor, and the like.

In the present embodiment, the state display unit 784 informs the user 40 of a state of the slot 124. Examples of the state of the slot 124 include the presence or absence of the mobile battery 20, the presence or absence of an abnormality, and the like. The state display unit 784 may inform the user 40 of the state of the slot 124 with, for example, a lighting pattern, a flashing pattern, or a display pattern designated by the slot control board 770, among a plurality of lighting patterns, flashing patterns, or display patterns. Examples of the state display unit 784 include an LED, a display, and the like.

In the present embodiment, the sensing unit 786 obtains information indicating the state of the slot 124. The sensing unit 786 may include a plurality of types of sensors. Examples of the sensors included in the sensing unit 786 include a temperature sensor, a voltage sensor, a current sensor, and the like. For example, the sensing unit 786 includes at least one of (i) a temperature sensor which measures the temperature inside the slot 124, temperature of the mobile battery 20, or temperature near the mobile battery 20, (ii) a voltage sensor which measures voltage of the electric power connector 762, or (iii) a current sensor which measures current flowing through the electric power connector 762. The sensing unit 786 may constitute at least part of the sensing unit 332.

The main control board 730 may be an example of a confirmation apparatus. The electric power connector 762 may be an example of a first terminal. The slot control board 770 may be an example of a confirmation apparatus.

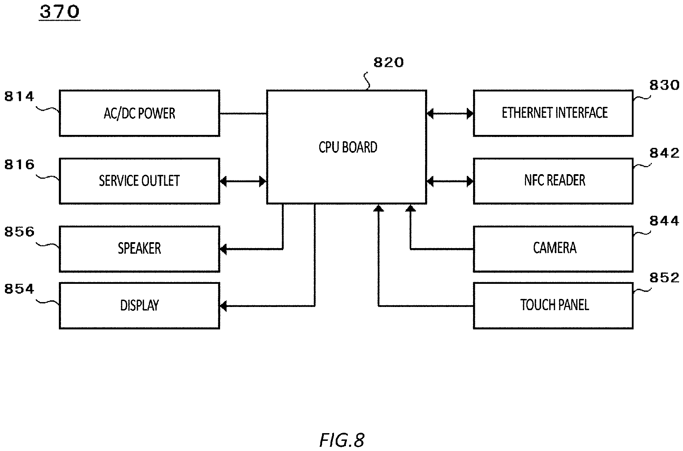

Fig. 8 schematically shows an example of an internal configuration of the mounted equipment 370. In the present embodiment, the mounted equipment 370 includes an AC/DC power 814, a service outlet 816, the CPU board 820, an Ethernet interface 830 which is a communication interface of an ETHERNET (registered trademark), an NFC reader 842, a camera 844, a touch panel 852, a display 854, and a speaker 856.

In the present embodiment, the AC/DC power 814 and the AC/DC power 714 functions as a power source which supplies electric power for control. The AC/DC power 814 receives electric power from the electric power system 12 via the uninterruptible power system 312, for example. The AC/DC power 814 converts alternating current power received from the electric power system 12 into direct current power with appropriate voltage. The AC/DC power 814 supplies, to the CPU board 820, the converted direct current power.

In the present embodiment, the service outlet 816 supplies electric power to equipment external to the communication unit 126. An example of the external equipment includes the router 314.

The service outlet 816 receives electric power from the electric power system 12 via the uninterruptible power system 312, for example. The service outlet 816 may control the supply of the electric power to the external equipment in accordance with a direction from the CPU board 820. The service outlet 816 may transmit information relating to the electric power supplied to the external equipment to the CPU board 820.

The CPU board 820 controls an operation of each unit of the communication unit 126. The CPU board 820 is connected to the main control board 730 via the communication line 310. The CPU board 820 may function as the control unit 376.

In the present embodiment, the Ethernet interface 830 is connected to the communication network 14 via the router 314. The Ethernet interface 830 may function as the communication interface 128.

In the present embodiment, the NFC reader 842 transmits and receives information to and from the communications terminal 42 through short-range wireless communication. The NFC reader 842 may function as the communication interface 128. The NFC reader 842 may function as the user identification unit 374.

In the present embodiment, the camera 844 captures an image of the user 40. The camera 844 may function as the user interface 372. The camera 844 may function as the user identification unit 374.

In the present embodiment, the touch panel 852 accepts a touch input from the user 40. The touch panel 852 may function as the user interface 372. In the present embodiment, the display 854 presents information to the user 40 by outputting an image. The display 854 may function as the user interface 372. In the present embodiment, the speaker 856 presents information to the user 40 by outputting a voice. The speaker 856 may function as the user interface 372.

The CPU board 820 may be an example of a confirmation apparatus. The touch panel 852 may be an example of the input apparatus described above.

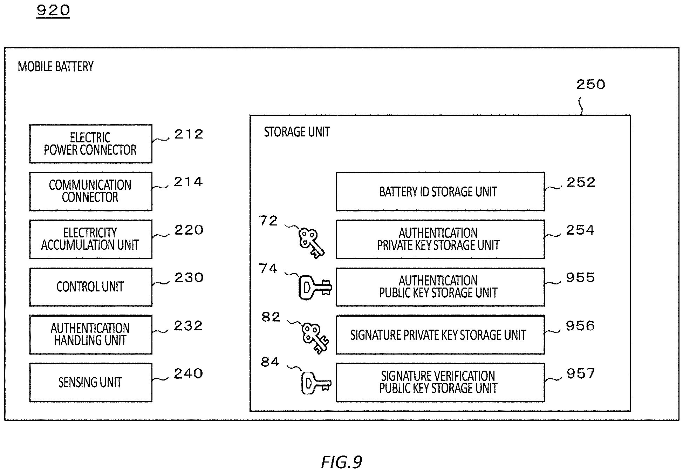

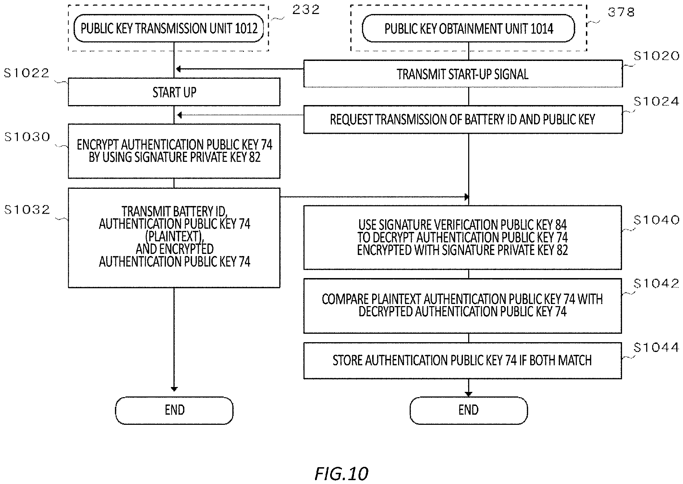

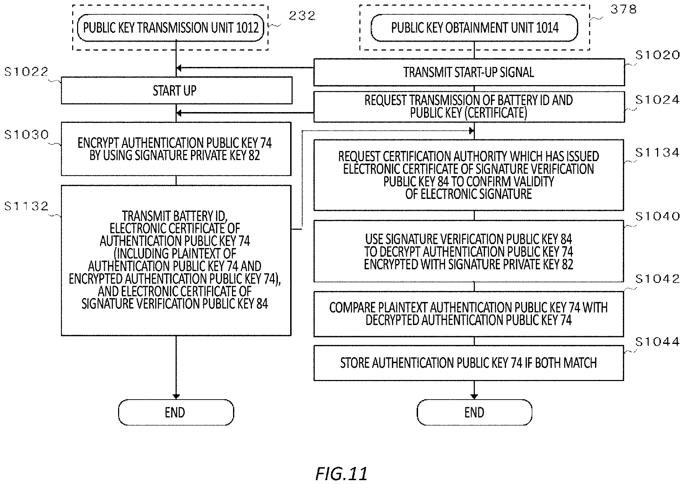

Another example of the procedure for obtaining the authentication public key 74 by the battery replacement machine 120 will be described using Fig. 9, Fig. 10, and Fig. 11. Fig. 9 schematically shows an example of an internal configuration of a mobile battery 920. Fig. 10 schematically shows an example of the procedure for obtaining the authentication public key 74. Fig. 11 schematically shows an example of a procedure for obtaining the authentication public key 74.

In the embodiments described with reference to Fig. 1 to Fig. 6, the battery management system 100 has been described in detail, by taking as an example a case where the battery replacement machine 120 obtains a database storing the authentication public keys 74 of one or more mobile batteries 20 from the key issuer 50, the communications terminal 52, or the management server 140. The embodiments to be described with reference to Fig. 9, Fig. 10, and Fig. 11 are different from the embodiments described with reference to Fig. 1 to Fig. 6, in that the battery replacement machine 120 obtains, from the mobile battery 20 attached to the slot 124, the authentication public key 74 of that mobile battery 20. With respect to features other than the difference, the embodiments to be described with reference to Fig. 9, Fig. 10, and Fig. **11** may have configurations similar to those of the embodiments described with reference to Fig. 1 to Fig. 6.

As shown in Fig. 9, in the present embodiment, the mobile battery 920 is different from the mobile battery 20, in that the storage unit 250 includes the battery ID storage unit 252, the authentication private key storage unit 254, an authentication public key storage unit 955, a signature private key storage unit 956, and a signature verification public key storage unit 957. With respect to features other than the difference, the mobile battery 920 may have a configuration similar to that of the mobile battery 20.

In the embodiment to be described with reference to Fig. 9, the mobile battery 920 may not include a signature verification public key 84 and the signature verification public key storage unit 957.

For example, if the battery replacement machine 120 stores the signature verification public key 84 of the mobile battery 920, or if the battery replacement machine 120 can obtain the signature verification public key 84 of the mobile battery 920, the mobile battery 920 may not include the signature verification public key 84 and the signature verification public key storage unit 957.

The mobile battery 920 may not include a signature private key 82 and the signature private key storage unit 956. In this case, the mobile battery 920 may store, for example, in any storage apparatus arranged in the mobile battery 920, at least one of: (i) the authentication public key 74 encrypted with the signature private key 82; (ii) information obtained by encrypting the authentication public key 74 and any information with the signature private key 82; or (iii) an electronic certificate of the authentication public key 74.

The authentication public key 74 encrypted with the signature private key 82, and the information obtained by encrypting the authentication public key 74 and any information with the signature private key 82 may be referred to as electronic signatures. For example, a series of flow for creating an electronic signature by using elliptic curve cryptography is referred to as an elliptic curve electronic signature algorithm.

The electronic certificate of the authentication public key 74 includes, for example, the authentication public key 74, and the authentication public key 74 encrypted with the signature private key 82. The electronic certificate of the authentication public key 74 includes: the authentication public key 74 (or the authentication public key 74 and any information); and information obtained by encrypting the authentication public key 74 and that any information with the signature private key 82, for example. It should be noted that, the mobile battery 920 in the embodiments described with reference to Fig. 1 to Fig. 6 is different from that in the embodiment to be described with reference to Fig. 9, in that it does not include the signature private key 82 and the signature private key storage unit 956 as well as the signature verification public key 84 and the signature verification public key storage unit 957.

In the present embodiment, the authentication public key storage unit 955 stores the authentication public key 74. In the present embodiment, the signature private key storage unit 956 stores the signature private key 82 used for the mobile battery 20 to give an electronic signature. The signature verification public key storage unit 957 stores the signature verification public key 84 used for the battery replacement machine 120 to verify authenticity of information including an electronic signature of the mobile battery 20 (for example, an electronic certificate obtained by the battery replacement machine 120 from the mobile battery 20).

The signature verification public key 84 is used to decrypt information encrypted using the signature private key 82. As described above, the electronic signature of the mobile battery 20 is generated by encrypting any information with the signature private key 82. In addition, the electronic certificate includes: a plaintext of any information; and a ciphertext obtained by encrypting that any information with the signature private key 82. The signature verification public key 84 is used to decrypt the information encrypted using the signature private key 82. Authenticity of plaintext information included in the electronic certificate may be verified by collating the plaintext information included in the electronic certificate with information decrypted using the signature verification public key 84.

Fig. 10 schematically shows an example of the procedure for obtaining the authentication public key 74. In the present embodiment, the battery authentication unit 378 has already obtained the signature verification public key 84 of the mobile battery 20 from the key issuer 50, the communications terminal 52, or the management server 140, for example. For example, the storage unit 520 stores a database which associates and stores battery IDs of one or more mobile batteries 20 and signature verification public keys 84 of the one or more mobile batteries 20. It should be noted that the signature verification public keys 84 of a plurality of mobile batteries 20 may be the same or the signature verification public keys 84 of all the mobile batteries 20 may be the same.

In the present embodiment, the authentication handling unit 232 further includes a public key transmission unit 1012. In addition, the battery authentication unit 378 further includes a public key obtainment unit 1014.

According to the present embodiment, first, in S1020, for example, the public key obtainment unit 1014 of the battery replacement machine 120 detects that the mobile battery 20 has been attached to the slot 124. When the public key obtainment unit 1014 detects that the mobile battery 20 has been attached to the slot 124, the public key obtainment unit 1014 transmits a start-up signal to the mobile battery 20.

In S1022, for example, when the public key transmission unit 1012 of the mobile battery 20 receives the start-up signal, for example, the control unit 230 and the authentication handling unit 232 are started up. At this time, the public key transmission unit 1012 may transmit, to the battery replacement machine 120, a start-up confirmation signal indicating that the authentication handling unit 232 has been started up.

Next, in S1024, the public key obtainment unit 1014 transmits, to the mobile battery 20, a signal requesting transmission of a battery ID and the authentication public key 74 (sometimes referred to as a public key transmission request). In S1030, for example, when the public key transmission unit 1012 of the mobile battery 20 receives the public key transmission request, the public key transmission unit 1012 encrypts the authentication public key 74 by using the signature private key 82. In S1032, the public key transmission unit 1012 transmits, to the battery replacement machine 120, the battery ID stored in the battery ID storage unit 252, the authentication public key 74 which has not been encrypted, and the authentication public key 74 encrypted with the signature private key 82.

Processing of encrypting the authentication public key 74 by using the signature private key 82 may be an example of processing of signing the authentication public key 74 by using the signature private key 82 (sometimes referred to as signature processing). In the signature processing, a variety of public key cryptosystems or public key infrastructures (PKI) may be used. Examples of a method for the signature processing include an RSA cryptosystem, a DSA signature scheme, an ECDAS signature scheme, an EdDSA signature scheme, and the like. In the ECDAS signature scheme, an encryption scheme using an elliptic curve is used. A procedure for converting a plaintext into a ciphertext by using a public key in the public key cryptography may be referred to as encryption. A procedure for converting a ciphertext into a plaintext by using a private key paired with the public key used when encryption is performed may be referred to as decryption. A procedure for processing a plaintext with a private key in the public key cryptography may be referred to as signature. A procedure for converting a signature into original information by using a public key in the public key cryptography may be referred to as verification.

Next, in S1040, when the public key obtainment unit 1014 receives, from the public key transmission unit 1012, the battery ID, the authentication public key 74 which has not been encrypted, and the authentication public key 74 encrypted with the signature private key 82, the public key obtainment unit 1014 refers to the database which associates and stores the battery IDs of the one or more mobile batteries 20 and the signature verification public keys 84 of the one or more mobile batteries 20, to extract the signature verification public key 84 corresponding to the battery ID transmitted by the public key transmission unit 1012. In addition, the public key obtainment unit 1014 uses the extracted signature verification public key 84 to decrypt the authentication public key 74 encrypted with the signature private key 82. It should be noted that, if the signature verification public keys 84 of all the mobile batteries 20 are the same, a step may be omitted in which the public key obtainment unit 1014 refers to the database to extract the signature verification public key 84.

Next, in S1042, the public key obtainment unit 1014 compares the authentication public key 74, which has not been encrypted, transmitted by the public key transmission unit 1012 with the authentication public key 74 decrypted in S1040. For example, the public key obtainment unit 1014 determines whether or not the authentication public key 74, which has not been encrypted, transmitted by the public key transmission unit 1012 matches the authentication public key 74 decrypted in S1040. If the authentication public key 74, which has not been encrypted, transmitted by the public key transmission unit 1012 matches the authentication public key 74 decrypted in S1040, in S 1044, the public key obtainment unit 1014 stores the authentication public key 74 transmitted by the public key transmission unit 1012 in the storage unit 520 or the public key database 522 as an authentic authentication public key 74 of the mobile battery 20. Processing of the comparison may be an example of processing of verifying a signature of the authentication public key 74 (sometimes referred to as verification processing).

The authentication public key 74 may be an example of eleventh information. The signature private key 82 may be an example of twelfth information. The authentication public key 74 encrypted using the signature private key 82 may be an example of thirteenth information. The signature verification public key 84 may be an example of fourteenth information. The authentication public key 74 decrypted using the signature verification public key 84 may be an example of fifteenth information. The signature processing may be an example of conversion of information. The verification processing may be an example of conversion or inverse conversion of information.

(Example of another embodiment)

In the present embodiment, a procedure for obtaining the authentication public key 74 of the mobile battery 20 by the battery replacement machine 120 has been described in detail, by taking as an example a case where the mobile battery 20 is attached to the battery replacement machine 120. However, a subject obtaining the authentication public key 74 of the mobile battery 20 is not limited to the battery replacement machine 120. In another embodiment, the subject obtaining the authentication public key 74 of the mobile battery 20 may be the electric power apparatus described above.

In addition, as described above, a confirmation apparatus is not limited to the battery replacement machine 120. Any confirmation apparatus may obtain an authentication public key of any to-be-confirmed apparatus by a procedure similar to that used in the present embodiment. For example, if the mobile battery 20 authenticates the battery replacement machine 120, the mobile battery 20 obtains an authentication public key of the battery replacement machine 120 by a procedure similar to that used in the present embodiment.

In the present embodiment, the procedure for obtaining the authentication public key 74 of the mobile battery 20 by the battery replacement machine 120 has been described in detail, by taking as an example a case where, in S1030, the authentication public key 74 is encrypted using the signature private key 82, and where, in S1032, the battery ID stored in the battery ID storage unit 252, the authentication public key 74 which has not been encrypted, and the authentication public key 74 encrypted with the signature private key 82 are transmitted from the mobile battery 20 to the battery replacement machine 120. However, the procedure for obtaining the authentication public key 74 of the mobile battery 20 by the battery replacement machine 120 is not limited to the present embodiment. For example, in S1030, information encrypted using the signature private key 82 is not limited to the authentication public key 74.

According to another embodiment, in S1030, any code is encrypted using the signature private key 82. The code may have a configuration similar to that of the authentication code described above. The code may be a battery ID. In this case, for example, in S1032, the battery ID stored in the battery ID storage unit 252, the authentication public key 74 which has not been encrypted, the code which has not been encrypted, and the code encrypted with the signature private key 82 are transmitted from the mobile battery 20 to the battery replacement machine 120.

Next, in S1040, the public key obtainment unit 1014 extracts the signature verification public key 84 corresponding to the battery ID transmitted by the public key transmission unit 1012, and decrypts, by using the extracted signature verification public key 84, the code encrypted with the signature private key 82. In addition, in S1042, the public key obtainment unit 1014 compares the code, which has not been encrypted, transmitted by the public key transmission unit 1012 with the code decrypted in S1040. For example, the public key obtainment unit 1014 determines whether or not the code, which has not been encrypted, transmitted by the public key transmission unit 1012 matches the code decrypted in S1040. If both match, the public key obtainment unit 1014 stores the authentication public key 74 transmitted by the public key transmission unit 1012 in the storage unit 520 or the public key database 522 as an authentic authentication public key 74 of the mobile battery 20. According to the embodiment, similarly to the present embodiment, the battery replacement machine 120 can confirm that the authentication public key 74 received from the mobile battery 20 is a legitimate authentication public key.

According to yet another embodiment, in S1030, a hash value of the any code described above is encrypted using the signature private key 82. Then, in S1032, the battery ID stored in the battery ID storage unit 252, the authentication public key 74 which has not been encrypted, the hash value of the code which has not been encrypted, and the hash value of the code encrypted with the signature private key 82 are transmitted from the mobile battery 20 to the battery replacement machine 120. In this case, it is different from another embodiment described above, in that the public key obtainment unit 1014 derives, in the S1042, a hash value of the code decrypted in S1040. In addition, it is different from another embodiment described above, in that the public key obtainment unit 1014 compares a hash value of the code, which has not been encrypted, transmitted by the public key transmission unit 1012 with the hash value of the code decrypted in S1040.

According to yet another embodiment, the authentication public key 74 of the mobile battery 20 is transmitted from the mobile battery 20 to the battery replacement machine 120 by using any electronic signature scheme or electronic certificate scheme. This allows the battery replacement machine 120 to confirm that the authentication public key 74 received from the mobile battery 20 is a legitimate authentication public key.

As described above, in the present embodiment, in S1030, the authentication public key 74 is encrypted using the signature private key 82. The procedure for obtaining the authentication public key 74 of the mobile battery 20 by the battery replacement machine 120 has been described in detail, by taking as an example a case where, in S1032, the battery ID stored in the battery ID storage unit 252, the authentication public key 74 which has not been encrypted, and the authentication public key 74 encrypted with the signature private key 82 are transmitted from the mobile battery 20 to the battery replacement machine 120. However, the procedure for obtaining the authentication public key 74 of the mobile battery 20 by the battery replacement machine 120 is not limited to the present embodiment.

In another embodiment, the storage unit 250 of the mobile battery 20 stores an electronic certificate of the authentication public key 74. The electronic certificate of the authentication public key 74 includes, for example, the authentication public key 74 which has not been encrypted, and the authentication public key 74 encrypted with the signature private key 82. The electronic certificate of the authentication public key 74 includes, for example, the battery ID and the authentication public key 74 which have not been encrypted, and the battery ID and the authentication public key 74 encrypted with the signature private key 82. If the public key obtainment unit 1014 of the battery replacement machine 120 requests transmission of a public key, the public key transmission unit 1012 of the mobile battery 20 transmits the electronic certificate of the authentication public key 74 to the public key obtainment unit 1014. As such, processing is omitted in which the mobile battery 20 encrypts the authentication public key 74 by using the signature private key 82. In this case, the mobile battery 20 may not store the signature private key 82.

In the present embodiment, the procedure for obtaining the authentication public key 74 of the mobile battery 20 by the battery replacement machine 120 has been described in detail, by taking as an example a case where the public key obtainment unit 1014 refers to the database which associates and stores the signature verification public keys 84 of the one or more mobile batteries 20, to extract the signature verification public key 84 corresponding to the battery ID transmitted by the public key transmission unit 1012. However, the procedure for obtaining the authentication public key 74 of the mobile battery 20 by the battery replacement machine 120 is not limited to the present embodiment.

In another embodiment, the storage unit 250 of the mobile battery 20 stores an electronic certificate of the signature verification public key 84. The electronic certificate of the signature verification public key 84 includes, for example, the signature verification public key 84 which has not been encrypted, and the signature verification public key 84 encrypted with a private key of a certification authority. The electronic certificate of the signature verification public key 84 includes, for example, an ID and the signature verification public key 84 which have not been encrypted, and an ID and the signature verification public key 84 encrypted with the signature private key 82. The ID may be a battery ID, may be an ID of a manufacturer of the mobile battery 20, or may be an ID of a manufacturer of a control CPU or a secure IC of the mobile battery 20. If the public key obtainment unit 1014 of the battery replacement machine 120 requests the transmission of the public key, the public key transmission unit 1012 of the mobile battery 20 transmits the electronic certificate of the signature verification public key 84 to the public key obtainment unit 1014. The public key transmission unit 1012 obtains a public key corresponding to the private key of the certification authority. The public key corresponding to the private key of the certification authority may be stored in the battery replacement machine 120, or may be transmitted from a server of that certification authority to the battery replacement machine 120 in response to the request from the battery replacement machine 120.

Fig. 11 schematically shows an example of a procedure for obtaining the authentication public key 74. The procedure for obtaining the authentication public key 74 according to the present embodiment is different from the procedure for obtaining the authentication public key 74 described with reference to Fig. 10, in that S1132 instead of S1032 is performed after S1030 is performed and that S1134 is performed after S1132 is performed. With respect to features other than the differences, the procedure for obtaining the authentication public key 74 to be described with reference to Fig. 11 may have a configuration similar to that of the procedure for obtaining the authentication public key 74 described with reference to Fig. 10.

According to the present embodiment, in S1132, the public key transmission unit 1012 transmits, to the battery replacement machine 120, a battery ID stored in the battery ID storage unit 252, the authentication public key 74 which has not been encrypted, the authentication public key 74 encrypted with the signature private key 82, and the signature verification public key 84. The public key transmission unit 1012 may transmit the signature verification public key 84 to the battery replacement machine 120 by transmitting an electronic certificate including the signature verification public key 84 to the battery replacement machine 120.

As described above, the public key transmission unit 1012 may transmit, to the battery replacement machine 120, the battery ID stored in the battery ID storage unit 252, an electronic certificate of the authentication public key 74, and an electronic certificate of the signature verification public key 84 in response to a request from the public key obtainment unit 1014. The public key obtainment unit 1014 may make a request for transmission of an electronic certificate, instead of a request for a public key or together with a request for a public key. As described above, the electronic certificate of the authentication public key 74 includes, for example, the battery ID and the authentication public key 74 which have not been encrypted, and the battery ID and the authentication public key 74 encrypted with the signature private key 82. In this case, the public key transmission unit 1012 may transmit the electronic certificate of the authentication public key 74 and the electronic certificate of the signature verification public key 84 to the battery replacement machine 120 in response to the request from the public key obtainment unit 1014.

In S1134, the public key obtainment unit 1014 requests a reliable certification authority (not shown) to confirm validity or authenticity of the signature verification public key 84. If the validity or the authenticity of the signature verification public key 84 is confirmed, the public key obtainment unit 1014 executes S1040, S1042, and S1044. The signature verification public key 84 is issued by a manufacturer or a seller of the control CPU or the secure IC described with reference to Fig. 4, for example. Therefore, according to another embodiment, the public key obtainment unit 1014 can obtain the signature verification public key 84 from the manufacturer or the seller of the control CPU or the secure IC, for example.

The reliable certification authority may be the management server 140, or may be a server different from the management server 140. The reliable certification authority may be a server managed or operated by the manufacturer or the seller of the control CPU or the secure IC. The signature verification public key 84 may have an expiration date. The reliable certification authority may manage the expiration date of the signature verification public key 84. For example, if the certification authority receives, from the public key transmission unit 1012, a request relating to confirmation of the validity or the authenticity of the signature verification public key 84, the certification authority may determine whether or not the expiration date of the signature verification public key 84 has exceeded. If the expiration date of the signature verification public key 84 has exceeded, the certification authority transmits, to the public key transmission unit 1012, information indicating that the signature verification public key 84 is not valid, as a response to the request. On the other hand, if the expiration date of the signature verification public key 84 has not exceeded, the certification authority transmits, to the public key transmission unit 1012, information indicating that the signature

ture verification public key 84 is valid, as the response to the request.

(Example of another embodiment)

In the present embodiment, by taking as an example a case where the mobile battery 20 is attached to the battery replacement machine 120, a procedure for obtaining the authentication public key 74 of the mobile battery 20 by the battery replacement machine 120 has been described in detail. However, a subject obtaining the authentication public key 74 of the mobile battery 20 is not limited to the battery replacement machine 120. In another embodiment, the subject obtaining the authentication public key 74 of the mobile battery 20 may be the electric power apparatus described above.

In addition, as described above, a confirmation apparatus is not limited to the battery replacement machine 120. Any confirmation apparatus may obtain an authentication public key of any to-be-confirmed apparatus by a procedure similar to that used in the present embodiment. For example, if the mobile battery 20 authenticates the battery replacement machine 120, the mobile battery 20 obtains an authentication public key of the battery replacement machine 120 by a procedure similar to that used in the present embodiment.

In the present embodiment, in S1030, the authentication public key 74 is encrypted using the signature private key 82. The procedure for obtaining the authentication public key 74 of the mobile battery 20 by the battery replacement machine 120 has been described in detail, by taking as an example a case where, in S1132, the battery ID stored in the battery ID storage unit 252, the authentication public key 74 which has not been encrypted, the authentication public key 74 encrypted with the signature private key 82, and the signature verification public key 84 are transmitted from the mobile battery 20 to the battery replacement machine 120. However, the procedure for obtaining the authentication public key 74 of the mobile battery 20 by the battery replacement machine 120 is not limited to the present embodiment. For example, in S1030, information encrypted using the signature private key 82 is not limited to the authentication public key 74.

According to another embodiment, in S1030, any code is encrypted using the signature private key 82. The code may have a configuration similar to that of the authentication code described above. The code may be a battery ID. In this case, for example, in S1032, the battery ID stored in the battery ID storage unit 252, the authentication public key 74 which has not been encrypted, the code which has not been encrypted, the code encrypted with the signature private key 82, and the signature verification public key 84 are transmitted from the mobile battery 20 to the battery replacement machine 120.

Next, in S1040, the public key obtainment unit 1014 decrypts the code encrypted with the signature private key 82, by using the signature verification public key 84, the validity or the authenticity of which has been confirmed in S1134. In addition, in S1042, the public key obtainment unit 1014 compares the code, which has not been encrypted, transmitted by the public key transmission unit 1012 with the code decrypted in S1040. For example, the public key obtainment unit 1014 determines whether or not the code, which has not been encrypted, transmitted by the public key transmission unit 1012 matches the code decrypted in S1040. If both match, the public key obtainment unit 1014 stores the authentication public key 74 transmitted by the public key transmission unit 1012 in the storage unit 520 or the public key database 522 as an authentic authentication public key 74 of the mobile battery 20. According to the embodiment, similarly to the present embodiment, the battery replacement machine 120 can confirm that the authentication public key 74 received from the mobile battery 20 is a legitimate authentication public key.

According to yet another embodiment, in S1030, a hash value of the any code described above is encrypted using the signature private key 82. Subsequently, a procedure similar to the procedure described with reference to another embodiment in Fig. 10 is executed.

According to yet another embodiment, the authentication public key 74 of the mobile battery 20 is transmitted from the mobile battery 20 to the battery replacement machine 120 by using any electronic signature scheme or any electronic certification scheme. This allows the battery replacement machine 120 to confirm that the authentication public key 74 received from the mobile battery 20 is a legitimate authentication public key.

In the embodiment described with reference to Fig. 11, an alteration similar to that made in another embodiment described with reference to Fig. 10 may be made. For example, in another embodiment, the storage unit 250 of the mobile battery 20 may store the electronic certificate of the authentication public key 74. If the public key obtainment unit 1014 of the battery replacement machine 120 requests transmission of a public key, the public key transmission unit 1012 of the mobile battery 20 may transmit the electronic certificate stored in the storage unit 250 to the public key obtainment unit 1014 without creating a new electronic certificate of the authentication public key 74. As such, processing is omitted in which the mobile battery 20 encrypts the authentication public key 74 by using the signature private key 82. In this case, the mobile battery 20 may not store the signature private key 82. In any embodiment described later, a similar alteration may be made.

(Interactive authentication processing)

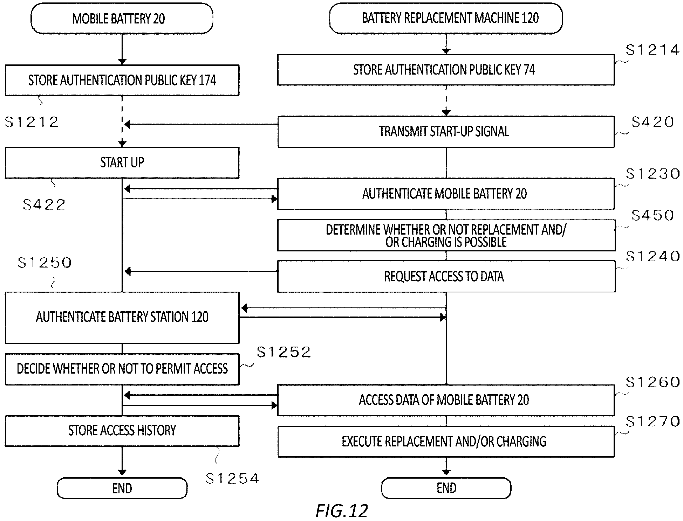

With reference to Fig. 12 to Fig. 30, another example of information processing in the battery management system 100 will be described. In the embodiments described with reference to Fig. 1 to Fig. 11, authentication processing in the battery management system 100 has been described in detail, by taking as an example a case where the battery replacement machine 120, which is an example of the confirmation apparatus, confirms whether or not the mobile battery 20, which is an example of a to-be-confirmed apparatus, is a legitimate apparatus. However, the authentication processing in the battery management system 100 is not limited to the embodiments.

Fig. 12 schematically shows an example of interactive authentication processing in the battery management system 100. The embodiment to be described with reference to Fig. 12 is different from the embodiments described with reference to Fig. 1 to Fig. 11, in that the interactive authentication processing is executed between the mobile battery 20 and the battery replacement machine 120.

Specifically, according to the embodiment to be described with reference to Fig. 12, the battery replacement machine 120, which is an example of a confirmation apparatus, executes processing for confirming whether or not the mobile battery 20, which is an example of a to-be-confirmed apparatus, is a legitimate mobile battery (sometimes referred to as processing of authenticating the mobile battery 20), and the mobile battery 20, which is an example of the confirmation apparatus, executes processing for confirming whether or not the battery replacement machine 120, which is an example of the to-be-confirmed apparatus, is a legitimate battery station (sometimes referred to as processing of authenticating the battery replacement machine 120).

In the present embodiment, the interactive authentication processing in the battery management system 100 will be described in detail, by taking as an example a case where the processing of authenticating the mobile battery 20 is executed, and where the processing of authenticating the battery replacement machine 120 is executed when the mobile battery 20 has been authenticated. However, timing at which each of the processing of authenticating the mobile battery 20 and the processing of authenticating the battery replacement machine 120 is executed is not particularly limited.

In Fig. 12 to Fig. 30, an element having a configuration similar to those of elements in the embodiments described with reference to Fig. 1 to Fig. 11 is given the same reference numeral as reference numerals used in those embodiments, and a detailed description of that element may be omitted. For an element given the same reference numeral as those of elements in the embodiments described with reference to Fig. 1 to Fig. 11, even if a detailed description of that element is omitted, that element may have a configuration similar to those of the elements in the embodiments described with reference to Fig. 1 to Fig. 11, to the extent that there is no technical contradiction.

In the embodiment to be described with reference to Fig. 12, an example of the interactive authentication processing in the battery management system 100 will be described, by taking as an example a case where the key issuer 50 issues a pair of an authentication private key 172 and an authentication public key 174 used in processing for confirming whether or not the battery replacement machine 120 is a legitimate apparatus. The authentication private key 172 of the battery replacement machine 120 may have a configuration similar to that of the authentication private key 72 of the mobile battery 20. The authentication public key 174 of the battery replacement machine 120 may have a configuration similar to that of the authentication public key 74 of the mobile battery 20.

It should be noted that an issuer of the pair of the authentication private key 172 and the authentication public key 174 is not limited to the key issuer 50. A procedure and timing for obtaining the authentication private key 172 by the battery replacement machine 120, which is an example of the to-be-confirmed apparatus, is not limited to the present embodiment. A procedure and timing for obtaining the authentication public key 174 by the mobile battery 20, which is an example of the confirmation apparatus, is not limited to the present embodiment.

(Overview of information processing in battery management system 100)

As shown in Fig. 12, according to the present embodiment, first, in S1212, the mobile battery 20 obtains the authentication public key 174 of the battery replacement machine 120. The mobile battery 20 may obtain the authentication public key 174 of the battery replacement machine 120 by a procedure similar to a procedure by which the battery replacement machine 120 has obtained the authentication public key 74 of the mobile battery 20 with reference to Fig. 1. The mobile battery 20 may obtain authentication public keys 174 of one or more battery replacement machines 120 before the mobile battery 20 is distributed. The authentication public keys 174 of the one or more battery replacement machines 120 are stored in the storage unit 250 of the mobile battery 20, for example.

Next, in S1214, the battery replacement machine 120 obtains the authentication public key 74 of the mobile battery 20. The battery replacement machine 120 may obtain authentication public keys 74 of one or more mobile batteries 20 by a procedure similar to the procedure described with reference to Fig. 1. The authentication public keys 74 of the one or more mobile batteries 20 are stored in the storage unit 520 of the battery replacement machine 120, for example.

Next, in S420, when the battery authentication unit 378 of the battery replacement machine 120 detects that the mobile battery 20 has been attached to the slot 124, the battery authentication unit 378 of the battery replacement machine 120 transmits a start-up signal to the mobile battery 20. In S422, when the control unit 230 of the mobile battery 20 receives the start-up signal, for example, the control unit 230 and the authentication handling unit 232 are started up. At this time, the control unit 230 may transmit, to the battery replacement machine 120, a start-up confirmation signal indicating that the authentication handling unit 232 has been started up.

Next, in S1230, the battery replacement machine 120 executes the processing of authenticating the mobile battery 20. The battery replacement machine 120 may execute the processing of authenticating the mobile battery 20 by a procedure similar to the procedures described with reference to Fig. 1 to Fig. 11. The processing of authenticating the mobile battery 20 will be described later in detail.

Next, in S450, the battery replacement machine 120 determines whether the mobile battery 20 is to be replaced. The battery replacement machine 120 may determine whether the mobile battery 20 is to be replaced, based on a result of confirming whether or not the mobile battery 20 is a legitimate apparatus.

For example, if the mobile battery 20 is confirmed to be a legitimate apparatus, the battery replacement machine 120 decides to replace the mobile battery 20. For example, the battery replacement machine 120 decides to attach the mobile battery 20 to the slot 124. This allows the mobile battery 20 to be replaced if all other conditions for replacing the mobile battery 20 are met, for example.

On the other hand, if the mobile battery 20 is not confirmed to be a legitimate apparatus, the battery replacement machine 120 decides not to replace the mobile battery 20. For example, the battery replacement machine 120 decides not to attach the mobile battery 20 to the slot 124. If it is decided not to replace the mobile battery 20, the battery replacement machine 120 may output, to an outside, information indicating that the mobile battery 20 will not be replaced. For example, the battery replacement machine 120 presents or transmits, to the user 40, the information indicating that the mobile battery 20 will not be replaced.

In S450, the battery replacement machine 120 may determine whether the mobile battery 20 is to be charged. The battery replacement machine 120 may determine whether the mobile battery 20 is to be charged, based on the result of confirming whether or not the mobile battery 20 is a legitimate apparatus.

For example, if the mobile battery 20 is confirmed to be a legitimate apparatus, the battery replacement machine 120 decides to charge the mobile battery 20. This allows the mobile battery 20 to be charged if all other conditions for charging the mobile battery 20 are met, for example.

On the other hand, if the mobile battery 20 is not confirmed to be a legitimate apparatus, the battery replacement machine 120 may decide not to charge the mobile battery 20. If it is decided not to charge the mobile battery 20, the battery replacement machine 120 may output, to the outside, information indicating that the mobile battery 20 will not be charged. For example, the battery replacement machine 120 presents or transmits, to the user 40, the information indicating that the mobile battery 20 will not be charged. It should be noted that, if the mobile battery 20 is not confirmed to be a legitimate apparatus, the battery replacement machine 120 may not determine whether the mobile battery 20 is to be charged.

Next, in S1240, for example, the battery replacement machine 120 requests access to data stored in the mobile battery 20. In addition, the mobile battery 20 receives a request for access (sometimes referred to as an access request) from the battery replacement machine 120.

An example of the access includes (i) processing for reading, by the battery replacement machine 120, specific data (sometimes referred to as to-be-read information) stored in a storage apparatus of the mobile battery 20 (sometimes referred to as reading processing). The reading processing may include processing of transmitting, by the battery replacement machine 120, to another apparatus (for example, the management server 140), the to-be-read information read from the storage apparatus of the mobile battery 20.

Other examples of the access include: (ii) processing for writing, by the battery replacement machine 120, specific data (sometimes referred to as to-be-written information) into the storage apparatus of the mobile battery 20 (sometimes referred to as writing processing); (iii) processing for modifying, by the battery replacement machine 120, specific data (sometimes referred to as to-be-modified information) stored in the storage apparatus of the mobile battery 20 (sometimes referred to as modification processing); (iv) processing for causing, by the battery replacement machine 120, a computer of the mobile battery 20 to execute a program (sometimes referred to as execution processing); and the like. The execution processing may be processing for causing a program running on the mobile battery 20 to be executed.

An example of the storage apparatus includes any storage medium such as a memory or storage. The control unit 230 and/or the storage unit 250 may be an example of the storage apparatus.

Examples of the to-be-read information include charging and discharging history of the mobile battery 20, authentication history of the mobile battery 20, history of access to the mobile battery 20, and the like. The access history, the charging and discharging history, and the authentication history will be described later in detail.

An example of the to-be-written information or the to-be-modified information includes information which is a target of update processing (sometimes referred to as to-be-updated information). The program running on the mobile battery 20 may be a program for updating the to-be-updated information. The to-be-updated information is updated by executing the writing processing, the modification processing, or the execution processing.

An example of the to-be-updated information includes control software or a control program (sometimes referred to as firmware) used to control the mobile battery 20. In this case, the access request may include: the firmware of the mobile battery 20; update software or an update program for updating the firmware; and/or an instruction for causing the computer of the mobile battery 20 to execute the update software or the update program.

Next, in S1250, the mobile battery 20 executes the processing of authenticating the battery replacement machine 120. According to the present embodiment, the mobile battery 20 confirmed, in S1230, to be a legitimate apparatus confirms whether or not the battery replacement machine 120 which has confirmed, in S1230, that the mobile battery 20 is a legitimate apparatus is a legitimate apparatus. This realizes the interactive authentication between the mobile battery 20 and the battery replacement machine 120.

For example, in response to the mobile battery 20 receiving the access request from the battery replacement machine 120, the mobile battery 20 executes the processing of authenticating the battery replacement machine 120. The mobile battery 20 may confirm whether or not the battery replacement machine 120 is a legitimate battery station, by a procedure similar to a procedure by which the battery replacement machine 120 has authenticated the mobile battery 20. It should be noted that, after S1250 is executed, a processing similar to that executed in S450 may be executed, or a processing similar to that executed in S450 may not be executed. The processing of authenticating the battery replacement machine 120 will be described later in detail.

Next, in S1252, the mobile battery 20 determines whether the access from the battery replacement machine 120 is permitted. As described above, the battery replacement machine 120 requests the mobile battery 20 to execute at least one of the reading processing, the writing processing, the modification processing, or the execution processing by transmitting the access request to the mobile battery 20. When receiving the access request from the battery replacement machine 120, the mobile battery 20 may determine whether or not to execute processing requested by the access request, based on a result of confirming whether or not the battery replacement machine 120 is a legitimate apparatus.

If the battery replacement machine 120 is confirmed to be a legitimate apparatus, the mobile battery 20 permits the battery replacement machine 120 to access data of the mobile battery 20. For example, if the access request is received in S1240 and the battery replacement machine 120 is confirmed, in S1250, to be a legitimate apparatus, the mobile battery 20 permits execution of the processing requested by the access request. If the access is permitted, the mobile battery 20 may transmit, to the battery replacement machine 120, information indicating that the access has been permitted.

On the other hand, if the battery replacement machine 120 is not confirmed to be a legitimate apparatus, the mobile battery 20 prohibits the battery replacement machine 120 from accessing the data of the mobile battery 20. For example, if the access request is received in S1240 and the battery replacement machine 120 is not confirmed, in S1250, to be a legitimate apparatus, it prohibits the execution of the processing requested by the access request. If the access is prohibited, the mobile battery 20 may transmit, to the battery replacement machine 120, information indicating that the access has been prohibited or information indicating that the access has not been permitted.

The mobile battery 20 may prohibit the access by not permitting the access. The mobile battery 20 may prohibit the access by not outputting, to the outside, information indicating that the access has been permitted.

Next, in S1254, the mobile battery 20 may store identification information (sometimes referred to as a station ID) for identifying the battery replacement machine 120 which has transmitted the access request. As such, the access history described above is created.

Next, in S1260, the battery replacement machine 120 accesses the data stored in the mobile battery 20. In one embodiment, the battery replacement machine 120 executes at least one of the reading processing, the writing processing, the modification processing, or the execution processing. In another embodiment, the battery replacement machine 120 causes the mobile battery 20 to execute at least one of the reading processing, the writing processing, the modification processing, or the execution processing.

For example, a variety of information is transmitted from the mobile battery 20 to the battery replacement machine 120. For example, the charging and discharging history is transmitted from the mobile battery 20 to the battery replacement machine 120. As such, the to-be-read information described above is read into the battery replacement machine 120. As a result, the battery replacement machine 120 can obtain a variety of information stored in the storage apparatus of the mobile battery 20.

For example, the battery replacement machine 120 can write a variety of information into the storage apparatus of the mobile battery 20 and modify a variety of information stored in the storage apparatus of the mobile battery 20. In addition, the battery replacement machine 120 can cause a variety of programs to be executed on the mobile battery 20. As such, for example, the firmware of the mobile battery 20 is updated.

If the battery replacement machine 120 cannot confirm, in S1260, that processing based on the access request has ended normally, the battery replacement machine 120 may store a battery ID of the mobile battery 20. This allows an abnormality in the mobile battery 20 to be detected early.

Subsequently, in S1270, the battery replacement machine 120 executes processing for replacing the mobile battery 20. In addition, the battery replacement machine 120 charges the mobile battery 20. This ends the processing.

S1230 may be an example of one of a first confirmation step or a second confirmation step. S1250 may be an example of another of the first confirmation step or the second confirmation step.

S1240 may be an example of an execution request reception step. S1250 may be an example of a confirmation step. S1252 may be an example of an execution determination step. S1254 may be an example of a second storage step. S1260 may be an example of a first storage step. S1260 may be an example of an execution step, a reading step, or an update step.

The access request may be an example of an execution request or an update request. The processing based on the access request may be an example of processing of updating to-be-updated information based on the update request. The station ID may be an example of first apparatus identification information. The battery ID may be an example of second apparatus identification information.

S1252 may be an example of a first decision step, a first prohibition step, or a first permission step. S1252 may be an example of a second decision step, a second prohibition step, or a second permission step.

(Example of another embodiment)

In the present embodiment, an example of the battery replacement machine 120 has been described, by taking as an example a case where the battery replacement machine 120 determines whether the mobile battery 20 is to be replaced, based on the result of confirming whether or not the mobile battery 20 is a legitimate apparatus. However, the battery replacement machine 120 is not limited to the present embodiment. In another embodiment, the battery replacement machine 120 may determine whether the mobile battery 20 is to be replaced, based on (i) the result of confirming whether or not the mobile battery 20 is a legitimate apparatus or (ii) a whitelist.

In the present embodiment, an example of the battery replacement machine 120 has been described, by taking as an example a case where the battery replacement machine 120 determines whether the mobile battery 20 is to be charged, based on the result of confirming whether or not the mobile battery 20 is a legitimate apparatus. However, the battery replacement machine 120 is not limited to the present embodiment. In another embodiment, the battery replacement machine 120 may determine whether the mobile battery 20 is to be charged or discharged, based on (i) the result of confirming whether or not the mobile battery 20 is a legitimate apparatus or (ii) a whitelist.

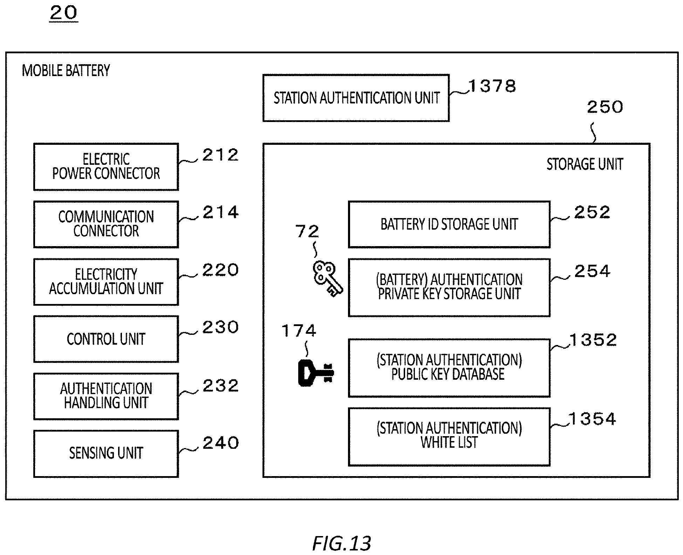

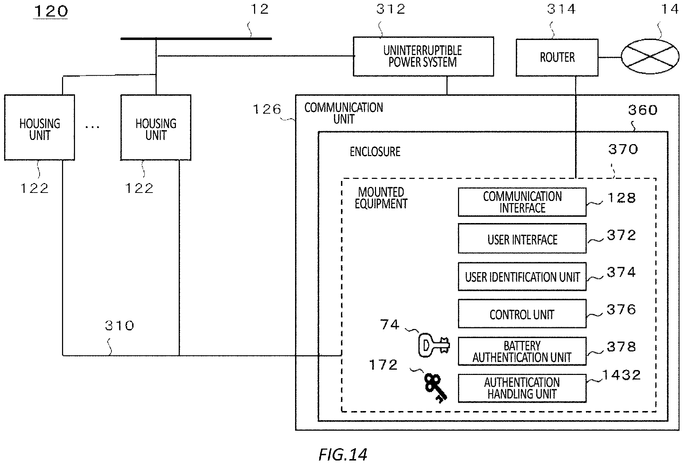

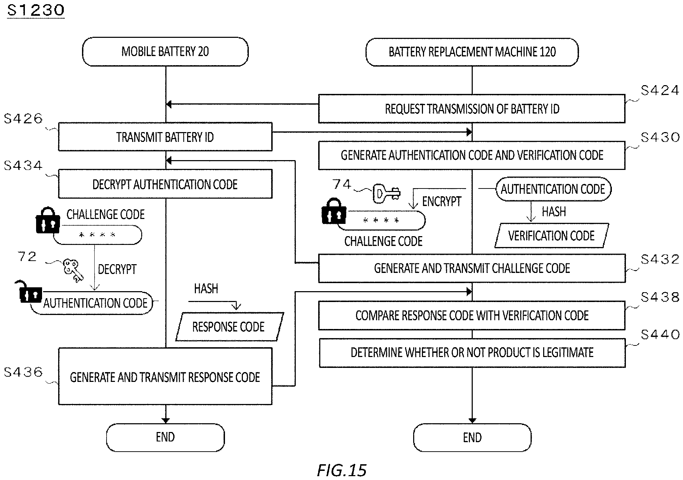

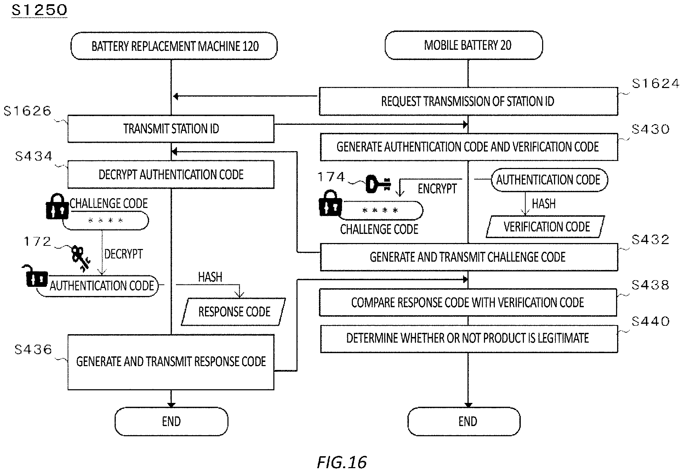

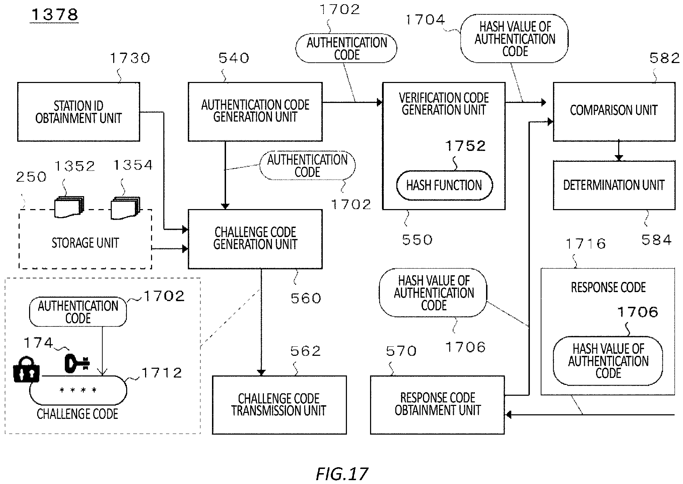

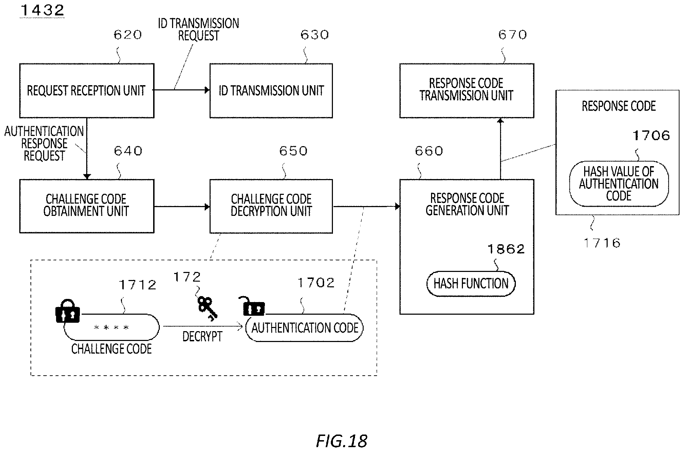

Next, with reference to Fig. 13, Fig. 14, Fig. 15, Fig. 16, Fig. 17, and Fig. 18, the interactive authentication processing described with reference to Fig. 12 will be described in detail. Fig. 13 schematically shows an example of an internal configuration of the mobile battery 20. Fig. 14 schematically shows an example of an internal configuration of the battery replacement machine 120. Fig. 15 schematically shows an example of a procedure for authenticating the mobile battery 20. Fig. 16 schematically shows an example of a procedure for authenticating the battery replacement machine 120. Fig. 17 schematically shows an example of an internal configuration of a station authentication unit 1378. Fig. 18 schematically shows an example of an internal configuration of an authentication handling unit 1432.

As shown in Fig. 13, the mobile battery 20 having a function of the interactive authentication described with reference to Fig. 12 is different from the mobile battery 20 described with reference to Fig. 1 to Fig. 11, in that it includes the station authentication unit 1378 and that the storage unit 250 includes a public key database 1352 and a whitelist 1354 for station authentication. The mobile battery 20 to be described with reference to the present embodiment may have a configuration similar to that of the mobile battery 20 described with reference to Fig. 1 to Fig. 11, except for the differences.

In the present embodiment, the station authentication unit 1378 confirms whether or not the battery replacement machine 120 is a legitimate battery station. For example, if the mobile battery 20 is housed in or attached to the battery replacement machine 120, the station authentication unit 1378 confirms whether or not the battery replacement machine 120, which the mobile battery 20 will be housed in or attached to, is a legitimate battery station. If authentication of the battery replacement machine 120 fails, the station authentication unit 1378 may execute processing similar to that executed when the battery authentication unit 378 fails to authenticate the mobile battery 20. Even in this case, access to data of the mobile battery 20 or output of that data to an outside may be prohibited.

In one embodiment, if the battery authentication unit 378 of the battery replacement machine 120 confirms that the mobile battery 20 is a legitimate apparatus, the station authentication unit 1378 of the mobile battery 20 confirms whether or not the battery replacement machine 120 is a legitimate apparatus. In another embodiment, if the station authentication unit 1378 of the mobile battery 20 confirms that the battery replacement machine 120 is a legitimate apparatus, the battery authentication unit 378 of the battery replacement machine 120 confirms whether or not the mobile battery 20 is a legitimate apparatus. The station authentication unit 1378 will be described later in detail.

In the present embodiment, the public key database 1352 associates and stores respective station IDs of one or more battery replacement machines 120 managed by the battery management system 100 and respective authentication public keys 174 of the one or more battery replacement machines 120. In the present embodiment, the whitelist 1354 stores the respective station IDs of the one or more battery replacement machines 120 managed by the battery management system 100. It should be noted that, in another embodiment, the public key database 1352 may be used as the whitelist 1354.

The station authentication unit 1378 may be an example of one of a first confirmation unit or a second confirmation unit. The battery authentication unit 378 may be an example of another of the first confirmation unit or the second confirmation unit. The station authentication unit 1378 may be an example of a confirmation unit. The authentication handling unit 232 may be an example of a confirmation information reception unit or a certification information transmission unit.

The control unit 230 may be an example of an execution unit which executes at least one of reading processing, writing processing, modification processing, or execution processing on a storing unit of a to-be-confirmed apparatus. The control unit 230 may be an example of an execution unit which causes the to-be-confirmed apparatus to execute at least one of the reading processing, the writing processing, the modification processing, or the execution processing. The control unit 230 may be an example of an execution request reception unit which receives an execution request. The control unit 230 may be an example of an execution determination unit which, if the execution request reception unit receives the execution request, determines whether or not to execute processing requested by the execution request, based on a result of confirmation by the confirmation unit.

As shown in Fig. 14, the battery replacement machine 120 having a function of the interactive authentication described with reference to Fig. 12 is different from the battery replacement machine 120 described with reference to Fig. 1 to Fig. 11, in that it includes the authentication handling unit 1432. The battery replacement machine 120 to be described with reference to the present embodiment may have a configuration similar to that of the battery replacement machine 120 described with reference to Fig. 1 to Fig. 11, except for the difference.

In the present embodiment, the authentication handling unit 1432 transmits, as a response to an authentication response request from the mobile battery 20, a response code to the mobile battery 20 which has transmitted the authentication response request. The authentication handling unit 1432 may transmit the response code in response to the authentication response request from the mobile battery 20 by a procedure similar to a procedure for transmitting, by the authentication handling unit 232 of the mobile battery 20, a response code in response to an authentication response request from the battery replacement machine 120.

In another embodiment, the authentication handling unit 1432 transmits, as a response to an ID transmission request from the mobile battery 20, a station ID of the battery replacement machine 120 to the mobile battery 20 which has transmitted the authentication response request. The authentication handling unit 1432 may transmit the station ID of the battery replacement machine 120 in response to the ID transmission request from the mobile battery 20 by a procedure similar to a procedure for transmitting, by the authentication handling unit 232 of the mobile battery 20, a battery ID of the mobile battery 20 in response to an ID transmission request from the battery replacement machine 120. The authentication handling unit 1432 will be described later in detail.

The communication unit 126 may be an example of an information processing apparatus. The mounted equipment 370 may be an example of the information processing apparatus. The battery authentication unit 378 may be an example of a confirmation unit. The authentication handling unit 1432 may be an example of a confirmation information reception unit or a certification information transmission unit.

Fig. 15 schematically shows an example of a procedure for authenticating the mobile battery 20. As shown in Fig. 15, S 1230 described with reference to Fig. 12 includes steps other than S420 and S422 described with reference to Fig. 4.

Fig. 16 schematically shows an example of a procedure for authenticating the battery replacement machine 120. As shown in Fig. 16, according to the present embodiment, first, in S1624, the station authentication unit 1378 of the mobile battery 20 transmits a signal requesting transmission of a station ID (sometimes referred to as an ID transmission request) to the battery replacement machine 120 which has authenticated the mobile battery 20 in S1230. In S1626, for example, when the control unit 376 of the battery replacement machine 120 receives an ID transmission request signal, the control unit 376 transmits the station ID stored in the storage unit 520 to the mobile battery 20.

The station authentication unit 1378 transmits the ID transmission request to the battery replacement machine 120, so that the authentication handling unit 1432 of the battery replacement machine 120 can detect that the mobile battery 20 is executing processing for confirming whether or not the battery replacement machine 120 is a legitimate apparatus. Similarly, the authentication handling unit 232 of the mobile battery 20 can detect, by obtaining an ID transmission request from the battery replacement machine 120, that the battery replacement machine 120 is executing processing for confirming whether or not the mobile battery 20 is a legitimate apparatus.

Next, in S430, when the station authentication unit 1378 of the mobile battery 20 obtains the station ID of the battery replacement machine 120, the station authentication unit 1378 refers to the public key database 1352 by using that station ID as a key, to extract the authentication public key 174 matching that station ID. If the authentication public key 174 matching the station ID is not extracted, the station authentication unit 1378 may access the communications terminal 52 or the management server 140, to obtain the authentication public key 174 matching that station ID.

In addition, the station authentication unit 1378 prepares an authentication code. For example, the station authentication unit 1378 generates a random number, and decides to use that random number as the authentication code.

Next, the station authentication unit 1378 generates, by converting the authentication code based on the authentication public key 174 of the battery replacement machine 120, a challenge code including the converted authentication code. For example, the station authentication unit 1378 encrypts the authentication code by using the authentication public key 174. In addition, the station authentication unit 1378 generates a challenge code including the encrypted authentication code.

Further, in the present embodiment, the station authentication unit 1378 prepares a verification code. For example, the station authentication unit 1378 executes arithmetic processing using a hash function, to generate a hash value of the authentication code. The station authentication unit 1378 decides to use the generated hash value as the verification code.

Next, in S432, the station authentication unit 1378 transmits the challenge code to the battery replacement machine 120. The station authentication unit 1378 may transmit the challenge code and an authentication response request to the battery replacement machine 120.

In S434, when the authentication handling unit 1432 receives the challenge code, the authentication handling unit 1432 inversely converts the encrypted authentication code included in the challenge code, based on the authentication private key 172 of the battery replacement machine 120, for example. Specifically, the authentication handling unit 1432 decrypts the encrypted authentication code included in the challenge code, by using the authentication private key 172 stored in the storage unit 520. Since the authentication private key 172 is paired with the authentication public key 174, if the battery replacement machine 120 is a legitimate battery station, the authentication handling unit 1432 will successfully decrypt the encrypted authentication code.

Next, in S436, the authentication handling unit 1432 generates a response code including information indicating that the battery replacement machine 120 has successfully decrypted the authentication code encrypted with the authentication public key 174. For example, the authentication handling unit 1432 executes the arithmetic processing using the hash function, to generate a hash value of the decrypted authentication code. The authentication handling unit 1432 generates a response code including the hash value of the decrypted authentication code. In addition, the authentication handling unit 1432 transmits the response code to the mobile battery 20.

Next, in S438, when the station authentication unit 1378 of the mobile battery 20 receives the response code, the station authentication unit 1378 compares the hash value included in the response code with the hash value generated as the verification code. In addition, in S440, the station authentication unit 1378 determines whether or not the battery replacement machine 120 is a legitimate battery station, based on a result of the comparison. For example, if both match, the station authentication unit 1378 confirms that the battery replacement machine 120 is a legitimate battery station.

As described above, if the battery replacement machine 120 is a legitimate battery station, the authentication handling unit 1432 can successfully decrypt the encrypted authentication code, and generate a correct response code. As such, the battery replacement machine 120 transmits the correct response code to the mobile battery 20, so that the battery replacement machine 120 can indicate, to the mobile battery 20, that the battery replacement machine 120 is a legitimate apparatus.

The authentication handling unit 232 may be an example of a confirmation information reception unit or a certification information transmission unit. The authentication handling unit 1432 may be an example of the certification information transmission unit. The ID transmission request may be an example of confirmation information. The response code may be an example of certification information.

The request reception unit 620 may be an example of the confirmation information reception unit.

Fig. 17 schematically shows an example of an internal configuration of the station authentication unit 1378. As shown in Fig. 17, the station authentication unit 1378 may have a configuration similar to that of the battery authentication unit 378, except that it includes a station ID obtainment unit 1730 instead of the battery ID obtainment unit 530, that the storage unit 250 includes the public key database 1352 and the whitelist 1354, and that information processed in each unit is different.

In the present embodiment, the station ID obtainment unit 1730 obtains a station ID of the battery replacement machine 120 which the mobile battery 20 will be housed in or attached to. For example, the station ID obtainment unit 1730 obtains the station ID from the battery replacement machine 120 by transmitting an ID transmission request to the battery replacement machine 120.

In the present embodiment, the authentication code generation unit 540 generates an authentication code 1702. The authentication code 1702 may have a configuration similar to that of the authentication code 502. The authentication code 1702 may be generated by a procedure similar to a procedure for generating the authentication code 502.

In the present embodiment, the verification code generation unit 550 generates a verification code corresponding to the authentication code 1702. The verification code corresponding to the authentication code 1702 may have a configuration similar to that of a verification code corresponding to the authentication code 502. The verification code corresponding to the authentication code 1702 may be generated by a procedure similar to a procedure for generating the verification code corresponding to the authentication code 502. For example, the verification code generation unit 550 executes arithmetic processing using a hash function 1752, to generate a hash value 1704 of the authentication code 1702. The hash function 1752 may have a configuration similar to that of the hash function 552.

In the present embodiment, the challenge code generation unit 560 generates a challenge code 1712. The challenge code 1712 may have a configuration similar to that of the challenge code 512. The challenge code 1712 may be generated by a procedure similar to a procedure for generating the challenge code 512. For example, the challenge code generation unit 560 encrypts the authentication code 1702 by using the authentication public key 174 of the battery replacement machine 120. This allows the station authentication unit 1378 to generate the challenge code 1712 including the encrypted authentication code 1702.

In the present embodiment, the challenge code transmission unit 562 transmits, to the battery replacement machine 120, the challenge code 1712 generated by the challenge code generation unit 560. The challenge code transmission unit 562 may transmit the challenge code 1712 and an authentication response request to the battery replacement machine 120.

In the present embodiment, the response code obtainment unit 570 obtains a response code 1716 corresponding to the challenge code 1712 from the battery replacement machine 120. In the present embodiment, the response code 1716 includes a hash value 1706 of the authentication code 1702 restored in the battery replacement machine 120. The response code obtainment unit 570 outputs the hash value 1706 of the restored authentication code 1702 to the comparison unit 582.

In the present embodiment, the comparison unit 582 obtains the hash value 1704 used as the verification code from the verification code generation unit 550. In addition, the comparison unit 582 obtains the hash value 1706 included in the response code 1716 from the response code obtainment unit 570. The comparison unit 582 compares the hash value 1704 used as the verification code with the hash value 1706 included in the response code 1716. The comparison unit 582 outputs, to the determination unit 584, information indicating a result of comparison.

In the present embodiment, the determination unit 584 obtains information indicating the result of the comparison by the comparison unit 582. The determination unit 584 determines whether or not the battery replacement machine 120 is a legitimate battery replacement machine 120, based on the result of the comparison by the comparison unit 582.

The determination unit 584 may determine whether the mobile battery 20 is to be replaced, based on a result of determination as to whether or not the battery replacement machine 120 is the legitimate battery replacement machine 120. The determination unit 584 may determine whether the mobile battery 20 is to be charged and/or discharged, based on the result of determination as to whether or not the battery replacement machine 120 is the legitimate battery replacement machine 120.

Fig. 18 schematically shows an example of an internal configuration of the authentication handling unit 1432. As shown in Fig. 18, the authentication handling unit 1432 may have a configuration similar to that of the authentication handling unit 232, except that information processed in each unit is different.

In the present embodiment, the request reception unit 620 receives a variety of requests from the mobile battery 20. Examples of the requests include an ID transmission request, an authentication response request, and the like. In the present embodiment, if the request reception unit 620 receives the ID transmission request from the mobile battery 20, the ID transmission unit 630 transmits a station ID of the battery replacement machine 120 to the mobile battery 20.

In the present embodiment, if the request reception unit 620 receives the authentication response request from the mobile battery 20, the challenge code obtainment unit 640 obtains the challenge code 1712 transmitted by the mobile battery 20. In the present embodiment, the challenge code decryption unit 650 decrypts, by using the authentication private key 172, an encrypted authentication code 1702 included in the challenge code 1712. In addition, the challenge code decryption unit 650 outputs the decrypted authentication code 1702 to the response code generation unit 660.

In the present embodiment, the response code generation unit 660 generates the response code 1716 based on the decrypted authentication code 1702. According to the present embodiment, the response code generation unit 660 executes arithmetic processing using a hash function 1862, to generate the hash value 1706 of a restored authentication code 1702. The response code generation unit 660 generates the response code 1716 including the hash value 1706 of the restored authentication code 1702. In the present embodiment, the response code transmission unit 670 transmits the response code 1716 to the mobile battery 20.

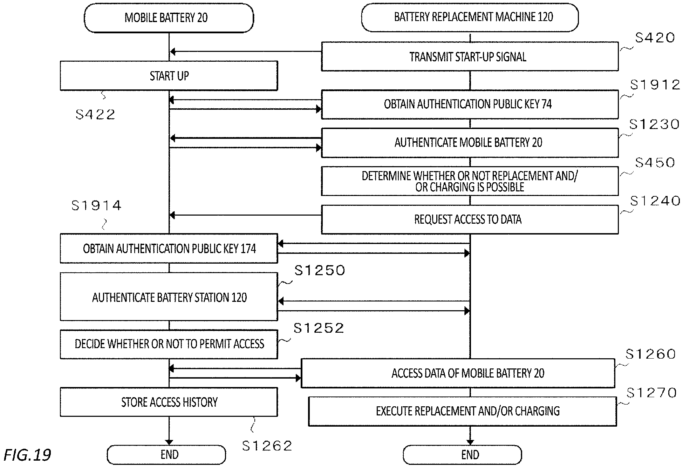

Fig. 19 schematically shows another example of interactive authentication processing in the battery management system 100. The interactive authentication processing to be described with reference to Fig. 19 may have a configuration similar to that of the interactive authentication processing described with reference to Fig. 12, except that it has S1912 instead of S1214 and has S1914 instead of S1212.

In S1912, for example, the battery replacement machine 120 obtains the authentication public key 74 of the mobile battery 20 by a procedure similar to the procedure described with reference to Fig. 10 or

Fig. 11. In S1914, for example, the mobile battery 20 obtains the authentication public key 174 of the battery replacement machine 120 by a procedure similar to the procedure described with reference to Fig. 10 or Fig. 11.

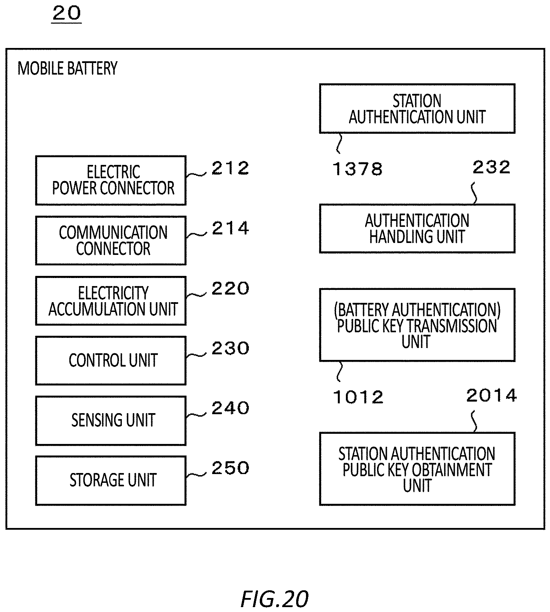

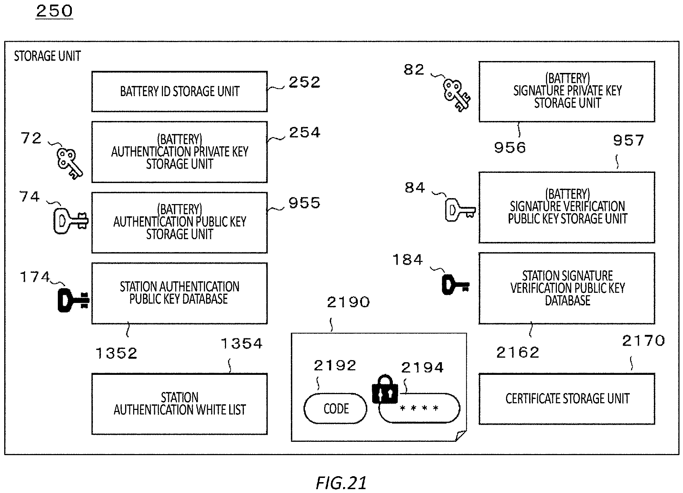

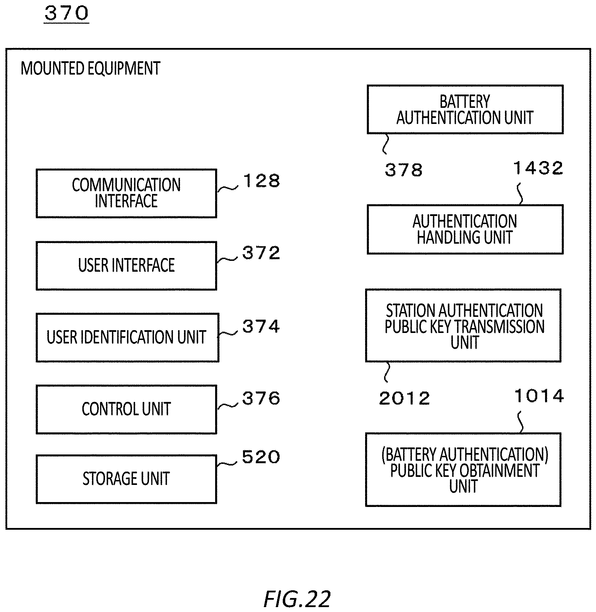

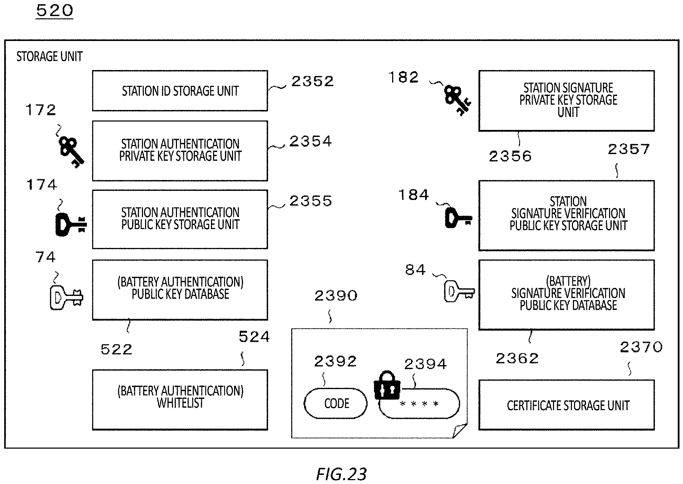

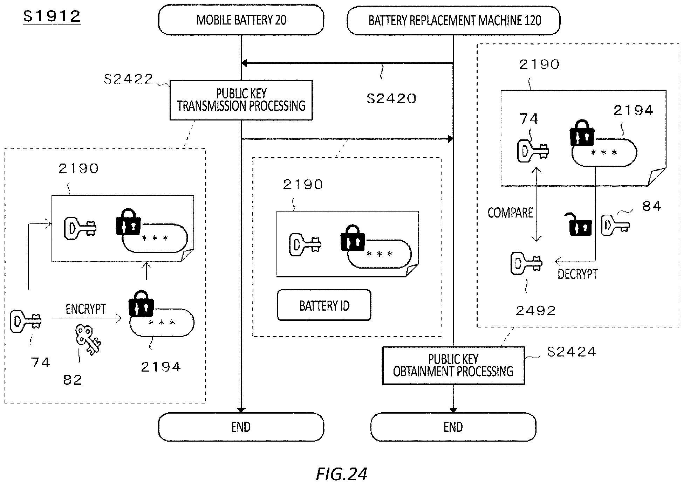

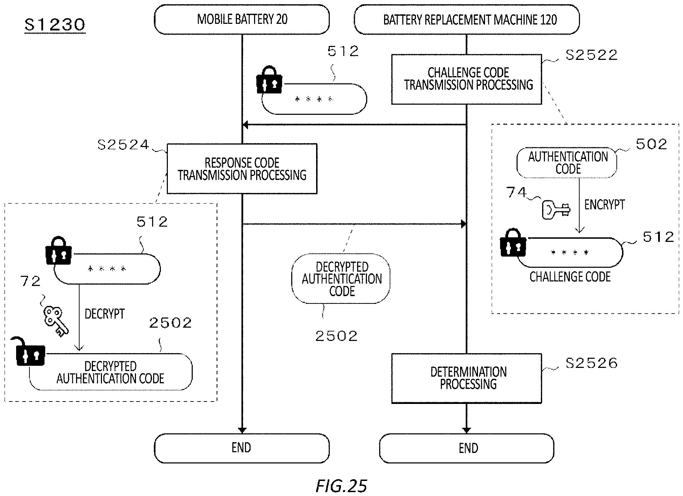

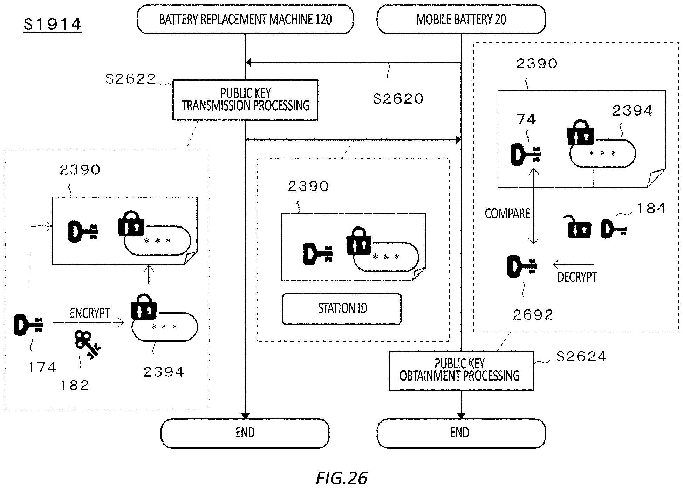

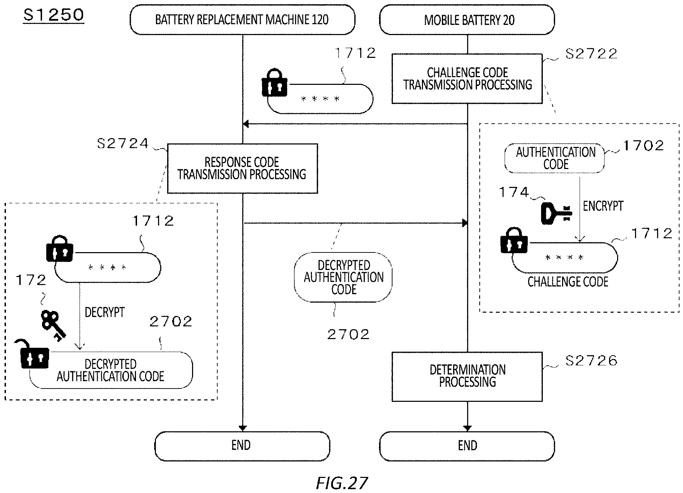

Next, with reference to Fig. 20, Fig. 21, Fig. 22, Fig. 23, Fig. 24, Fig. 25, Fig. 26, and Fig. 27, the interactive authentication processing described with reference to Fig. 19 will be described in detail. Fig. 20 schematically shows another example of an internal configuration of the mobile battery 20. Fig. 21 schematically shows another example of an internal configuration of the storage unit 250. Fig. 22 schematically shows another example of an internal configuration of the mounted equipment 370. Fig. 23 schematically shows another example of an internal configuration of the storage unit 520. Fig. 24 schematically shows another example of a procedure for obtaining the authentication public key 74. Fig. 25 schematically shows another example of a procedure for authenticating the mobile battery 20. Fig. 26 schematically shows another example of a procedure for obtaining the authentication public key 174. Fig. 27 schematically shows another example of a procedure for authenticating the battery replacement machine 120.

As shown in Fig. 20, the mobile battery 20 having a function of the interactive authentication described with reference to Fig. 19 is different from the mobile battery 20 described with reference to Fig. 12 to Fig. 18, in that it includes a station authentication public key obtainment unit 2014. The station authentication public key obtainment unit 2014 may have a configuration similar to that of the public key obtainment unit 1014.

In the present embodiment, the station authentication public key obtainment unit 2014 obtains the authentication public key 174 from the battery replacement machine 120 which the mobile battery 20 will be housed in or attached to, for example. The station authentication public key obtainment unit 2014 transmits, to the battery replacement machine 120, a signal requesting transmission of a station ID and the authentication public key 174 (sometimes referred to as a public key transmission request), for example. This allows the station authentication public key obtainment unit 2014 to obtain the authentication public key 174 of the battery replacement machine 120 which the mobile battery 20 will be housed in or attached to, for example. Processing of obtaining the authentication public key 174 will be described later in detail.

As shown in Fig. 21, the storage unit 250 of the mobile battery 20 having a function of the interactive authentication described with reference to Fig. 19 is different from the storage unit 250 of the mobile battery 20 described with reference to Fig. 12 to Fig. 18, in that it includes a station signature verification public key database 2162 and that it includes a certificate storage unit 2170.

In the present embodiment, the station signature verification public key database 2162 associates and stores respective station IDs of one or more battery replacement machines 120 managed by the battery management system 100 and respective signature verification public keys 184 of the one or more battery replacement machines 120. The respective signature verification public keys 184 of the one or more battery replacement machines 120 correspond to respective signature private keys 182 of the one or more battery replacement machines 120.

In the present embodiment, the certificate storage unit 2170 stores an electronic certificate 2190 for the mobile battery 20. The electronic certificate 2190 includes, for example, any code 2192 and an encrypted code 2194. The encrypted code 2194 is obtained by encrypting the code 2192 with the signature private key 82. The code 2192 may have a configuration similar to that of the authentication code described above. The electronic certificate 2190 may include a hash value of the any code 2192 and the encrypted code 2194.

As shown in Fig. 22, the mounted equipment 370 of the battery replacement machine 120 having a function of the interactive authentication described with reference to Fig. 19 is different from the storage unit 250 of the mobile battery 20 described with reference to Fig. 12 to Fig. 18, in that it includes a station authentication public key transmission unit 2012. The station authentication public key transmission unit 2012 may have a configuration similar to that of the public key transmission unit 1012.

In the present embodiment, the station authentication public key transmission unit 2012 transmits the authentication public key 174 of the battery replacement machine 120. The station authentication public key transmission unit 2012 transmits the authentication public key 174 of the battery replacement machine 120 in response to a public key transmission request from the station authentication public key obtainment unit 2014. Processing of transmitting the authentication public key 174 will be described later in detail.

As shown in Fig. 23, the storage unit 520 of the battery replacement machine 120 having a function of the interactive authentication described with reference to Fig. 19 is different from the storage unit 520 of the battery replacement machine 120 described with reference to Fig. 12 to Fig. 18, in that it further includes a station ID storage unit 2352, a station authentication private key storage unit 2354, a station authentication public key storage unit 2355, a station signature private key storage unit 2356, a station signature verification public key storage unit 2357, a signature verification public key database 2362, and a certificate storage unit 2370.

In the present embodiment, the station ID storage unit 2352 stores a station ID of the battery replacement machine 120. In the present embodiment, the station authentication private key storage unit 2354 stores the authentication private key 172 of the battery replacement machine 120. In the present embodiment, the station authentication public key storage unit 2355 stores the authentication public key 174 of the battery replacement machine 120.

In the present embodiment, the station signature private key storage unit 2356 stores a signature private key 182 of the battery replacement machine 120. In the present embodiment, the station signature verification public key storage unit 2357 stores a signature verification public key 184 of the battery replacement machine 120.

In the present embodiment, the signature verification public key database 2362 associates and stores respective battery IDs of one or more mobile batteries 20 managed by the battery management system 100 and respective signature verification public keys 84 of the one or more mobile batteries 20.

In the present embodiment, the certificate storage unit 2370 stores an electronic certificate 2390 for the battery replacement machine 120. The electronic certificate 2390 includes, for example, any code 2392 and an encrypted code 2394. The encrypted code 2394 is obtained by encrypting the code 2392 with the signature private key 182. The code 2392 may have a configuration similar to that of the authentication code described above. The electronic certificate 2390 may include a hash value of the any code 2392 and the encrypted code 2394.

Fig. 24 schematically shows another example of a procedure for obtaining the authentication public key 74 of the mobile battery 20. With reference to Fig. 24, an example of a procedure for obtaining the authentication public key 74 of the mobile battery 20 from the mobile battery 20 by the battery replacement machine 120 will be described.

According to the present embodiment, the electronic certificate 2190 including the authentication public key 74 of the mobile battery 20 is transmitted from the mobile battery 20 to the battery replacement machine 120. In one embodiment, in the electronic certificate 2190, the any code 2192 described above is the authentication public key 74, and the encrypted code 2194 is a ciphertext obtained by encrypting the authentication public key 74 with the signature private key 82. In another embodiment, in the electronic certificate 2190, the any code 2192 described above includes the authentication public key 74 and any another information, and the encrypted code 2194 is a ciphertext obtained by encrypting the authentication public key 74 and that another information with the signature private key 82. This allows the battery replacement machine 120 to confirm authenticity of the authentication public key 74.

In the present embodiment, the authenticity of the authentication public key 74 is confirmed by a procedure similar to the procedure described with reference to Fig. 10. According to the present embodiment, first, in S2420, the public key obtainment unit 1014 of the battery replacement machine 120 transmits a battery ID and a public key transmission request to the mobile battery 20.

Next, in S2422, public key transmission processing is executed. Specifically, the public key transmission unit 1012 generates the electronic certificate 2190 by using the signature private key 82. In addition, the public key transmission unit 1012 transmits the battery ID of the mobile battery 20 and the electronic certificate 2190 for the mobile battery 20 to the battery replacement machine 120.

Next, in S2424, public key obtainment processing is executed. Specifically, the public key obtainment unit 1014 decrypts, by using the signature verification public key 84, the encrypted authentication public key 74 included in the electronic certificate 2190. This generates a decrypted authentication public key 2492. Next, the public key obtainment unit 1014 compares the authentication public key 2492 with the authentication public key 74 included in the electronic certificate 2190. If the authentication public key 2492 and the authentication public key 74 match, the public key obtainment unit 1014 stores the authentication public key 74 transmitted by the public key transmission unit 1012 of the mobile battery 20 in the storage unit 520 or the public key database 522 as an authentic authentication public key 74 of the mobile battery 20. This ends processing of obtaining the authentication public key 74.

(Example of another embodiment)

In the present embodiment, the procedure for obtaining the authentication public key 74 of the mobile battery 20 has been described in detail, by taking as an example a case where the authenticity of the authentication public key 74 is confirmed by a procedure similar to the procedure described with reference to Fig. 10. However, the procedure for obtaining the authentication public key 74 of the mobile battery 20 is not limited to the present embodiment.

In another embodiment, the authentication public key 74 of the mobile battery 20 may be transmitted from the mobile battery 20 to the battery replacement machine 120 by a procedure similar to the procedure described with reference to Fig. 11. In yet another embodiment, the authentication public key 74 of the mobile battery 20 may be transmitted from the mobile battery 20 to the battery replacement machine 120 by using any electronic signature scheme or electronic certificate scheme.

Fig. 25 schematically shows another example of a procedure for authenticating the mobile battery 20. The present embodiment is different from the embodiment described with reference to Fig. 15, in that a response code includes a decrypted authentication code.

According to the present embodiment, first, in S2522, the battery replacement machine 120 executes processing of transmitting a challenge code. Specifically, the challenge code generation unit 560 of the battery replacement machine 120 generates the challenge code 512 by using the authentication public key 74.

Next, in S2524, the mobile battery 20 executes processing of transmitting the response code. Specifically, first, the challenge code decryption unit 650 of the mobile battery 20 decrypts, by using the authentication private key 72, the authentication code 502 included in the challenge code 512. This generates a decrypted authentication code 2502. The response code generation unit 660 of the mobile battery 20 transmits the decrypted authentication code 2502 to the battery replacement machine 120 as the response code.

Next, in S2526, the comparison unit 582 and the determination unit 584 of the battery replacement machine 120 executes determination processing. Specifically, the comparison unit 582 compares the decrypted authentication code 2502 with the authentication code 502 generated by the authentication code generation unit 540. In addition, the determination unit 584 determines whether or not the mobile battery 20 is a legitimate mobile battery 20, based on a result of comparison by the comparison unit 582. This ends the processing.

Fig. 26 schematically shows another example of a procedure for obtaining the authentication public key 174 of the battery replacement machine 120. With reference to Fig. 26, an example of a procedure for obtaining the authentication public key 174 of the battery replacement machine 120 from the battery replacement machine 120 by the mobile battery 20 will be described.

According to the present embodiment, the electronic certificate 2390 including the authentication public key 174 of the battery replacement machine 120 is transmitted from the battery replacement machine 120 to the mobile battery 20. In one embodiment, in the electronic certificate 2390, the any code 2392 described above is the authentication public key 174, and the encrypted code 2394 is a ciphertext obtained by encrypting the authentication public key 174 with the signature private key 182. In another embodiment, in the electronic certificate 2390, the any code 2392 described above includes the authentication public key 174 and any another information, and the encrypted code 2394 is a ciphertext obtained by encrypting the authentication public key 174 and that another information with the signature private key 182. This allows the mobile battery 20 to confirm authenticity of the authentication public key 174.

In the present embodiment, the authenticity of the authentication public key 174 is confirmed by a procedure similar to the procedure described with reference to Fig. 10. According to the present embodiment, first, in S2620, the station authentication public key obtainment unit 2014 of the mobile battery 20 transmits a station ID and a public key transmission request to the battery replacement machine 120.

Next, in S2622, public key transmission processing is executed. Specifically, the station authentication public key transmission unit 2012 of the battery replacement machine 120 generates the electronic certificate 2390 by using the signature private key 182. In addition, the station authentication public key transmission unit 2012 transmits the station ID of the battery replacement machine 120 and the electronic certificate 2390 for the battery replacement machine 120 to the mobile battery 20.

Next, in S2624, public key obtainment processing is executed. Specifically, the station authentication public key obtainment unit 2014 decrypts, by using the signature verification public key 184, the encrypted authentication public key 174 included in the electronic certificate 2390. This generates a decrypted authentication public key 2692. Next, the station authentication public key obtainment unit 2014 compares the decrypted authentication public key 2692 with the authentication public key 174 included in the electronic certificate 2390. If the authentication public key 2692 and the authentication public key 174 match, the station authentication public key obtainment unit 2014 stores the authentication public key 174 transmitted by the station authentication public key transmission unit 2012 of the battery replacement machine 120 in the storage unit 250 or the public key database 1352 for station authentication as an authentic authentication public key 174 of the battery replacement machine 120. This ends processing of obtaining the authentication public key 174.

(Example of another embodiment)

In the present embodiment, the procedure for obtaining the authentication public key 174 of the battery replacement machine 120 has been described in detail, by taking as an example a case where the authenticity of the authentication public key 174 is confirmed by the procedure similar to the procedure described with reference to Fig. 10. However, the procedure for obtaining the authentication public key 174 of the battery replacement machine 120 is not limited to the present embodiment.

In another embodiment, the authentication public key 174 of the battery replacement machine 120 may be transmitted from the battery replacement machine 120 to the mobile battery 20 by a procedure similar to the procedure described with reference to Fig. 11. In yet another embodiment, the authentication public key 174 of the battery replacement machine 120 may be transmitted from the battery replacement machine 120 to the mobile battery 20 by using any electronic signature scheme or electronic certificate scheme.

Fig. 27 schematically shows another example of a procedure for authenticating the battery replacement machine 120. According to the present embodiment, first, in S2722, the mobile battery 20 executes processing of transmitting a challenge code. Specifically, the challenge code generation unit 560 of the mobile battery 20 generates the challenge code 1712 by using the authentication public key 174.

Next, in S2724, the battery replacement machine 120 executes processing of transmitting a response code. Specifically, first, the challenge code decryption unit 650 of the battery replacement machine 120 decrypts, by using the authentication private key 172, the authentication code 1702 included in the challenge code 1712. This generates a decrypted authentication code 2702. The response code generation unit 660 of the battery replacement machine 120 transmits the decrypted authentication code 2702 to the mobile battery 20 as the response code.

Next, in S2726, the comparison unit 582 and the determination unit 584 of the mobile battery 20 executes determination processing. Specifically, the comparison unit 582 compares the decrypted authentication code 2702 with the authentication code 1702 generated by the authentication code generation unit 540. In addition, the determination unit 584 determines whether or not the battery replacement machine 120 is a legitimate battery replacement machine 120, based on a result of comparison by the comparison unit 582. This ends the processing.

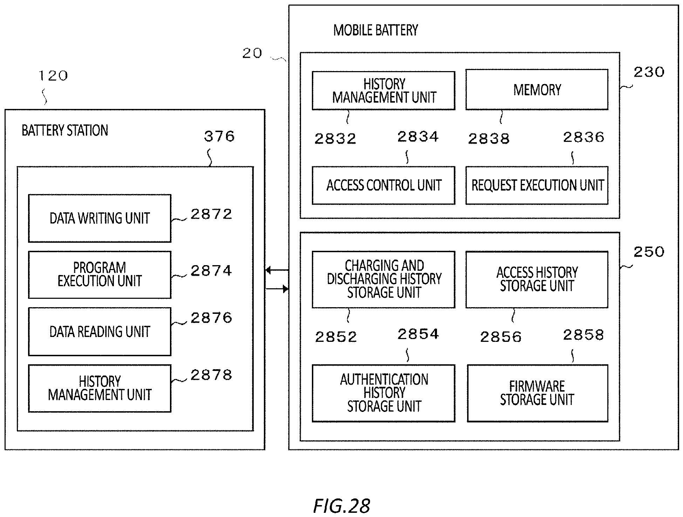

Fig. 28 schematically shows examples of internal configurations of the control unit 230 and the control unit 376. In the present embodiment, the control unit 230 includes, for example, a history management unit 2832, an access control unit 2834, a request execution unit 2836, and a memory 2838. In the present embodiment, the storage unit 250 includes, for example, a charging and discharging history storage unit 2852, an authentication history storage unit 2854, an access history storage unit 2856, and a firmware storage unit 2858. In the present embodiment, the control unit 376 includes, for example, a data writing unit 2872, a program execution unit 2874, a data reading unit 2876, and a history management unit 2878.

In the present embodiment, the history management unit 2832 manages history of access to the mobile battery 20. For example, the history management unit 2832 generates the access history, and stores it in an access history storage unit.

In the present embodiment, the access control unit 2834 determines whether or not to execute processing requested by an access request from the battery replacement machine 120. For example, if the battery replacement machine 120 is a legitimate apparatus, the access control unit 2834 decides to execute the processing requested by the access request from the battery replacement machine 120. The access control unit 2834 may (a) decide whether or not to permit reading processing, and/or (b) decide whether or not to permit at least one processing of writing processing, modification processing, or execution processing. If the battery replacement machine 120 is an illegitimate apparatus, the access control unit 2834 may (a) decide whether or not to permit reading processing, and/or (b) decide to prohibit execution of at least one processing of writing processing, modification processing, or execution processing. If the battery replacement machine 120 is a legitimate apparatus, the access control unit 2834 may (a) decide whether or not to permit reading processing, and/or (b) decide to permit execution of at least one processing of writing processing, modification processing, or execution processing. The access control unit 2834 may be an example of an execution control unit.

In the present embodiment, the request execution unit 2836 executes the processing requested by the access request from the battery replacement machine 120. For example, if the access control unit 2834 decides to execute the processing requested by the access request from the battery replacement machine 120, the request execution unit 2836 executes that processing.

In the present embodiment, the charging and discharging history storage unit 2852 stores charging and discharging history. The charging and discharging history will be described later in detail. In the present embodiment, the authentication history storage unit 2854 stores authentication history. The authentication history will be described later in detail. In the present embodiment, the access history storage unit 2856 stores access history. The access history will be described later in detail.

In the present embodiment, the firmware storage unit 2858 stores firmware of the mobile battery 20. The firmware storage unit 2858 may store a plurality of pieces of firmware. For example, specific firmware stored in the firmware storage unit 2858 is updated by executing the writing processing, modification processing, or execution processing described above in response to the access request from the battery replacement machine 120.

In the present embodiment, the data writing unit 2872 executes the writing processing and/or modification processing described above. In the present embodiment, the program execution unit 2874 executes the execution processing described above. In the present embodiment, the data reading unit 2876 executes the reading processing described above.

In the present embodiment, the history management unit 2878 manages a variety of history. The history management unit 2878 may output a variety of history to the management server 140 and/or the user 40. The history management unit 2878 may manage authentication history of the mobile battery 20 in the battery replacement machine 120. For example, the history management unit 2878 manages, for each mobile battery 20, a result of authentication processing by the battery replacement machine 120. The history management unit 2878 may manage a status of response of the mobile battery 20 to the access request transmitted by the battery replacement machine 120. For example, the history management unit 2878 manages, for each mobile battery 20, a status of whether or not to permit the access request in the mobile battery 20. The history management unit 2878 may manage a status of execution of processing indicated by the access request transmitted by the battery replacement machine 120. For example, the history management unit 2878 manages, for each access request, whether or not the processing has ended normally.

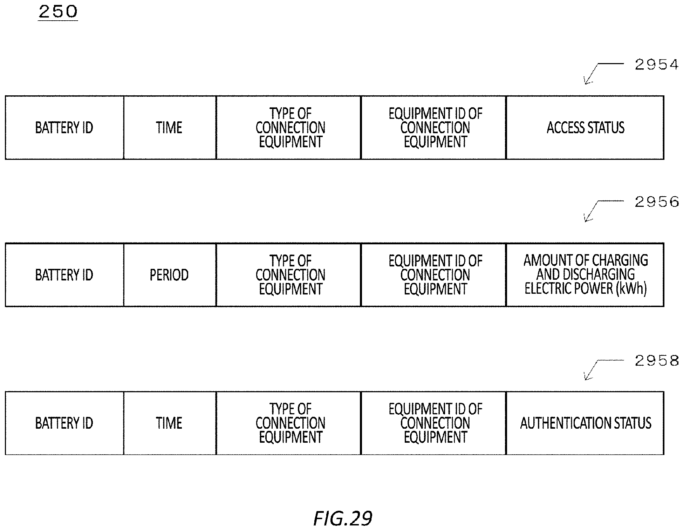

Fig. 29 schematically shows an example of a database stored in the storage unit 250. In the present embodiment, the storage unit 250 stores, for example, access history 2954, charging and discharging history 2956, and authentication history 2958.

In the present embodiment, the access history 2954 stores history of access to the mobile battery 20 from another equipment (sometimes referred to as connection equipment). An example of the connection equipment includes the electric power apparatus described above. Examples of the electric power apparatus include the electric motorcycle 30, the battery replacement machine 120, and the like.

The access history 2954 includes, for example, one or more records respectively corresponding to one or more times of access. Each of the one or more records associates and stores a battery ID of the mobile battery 20, information indicating time when the mobile battery 20 has received an access request from the connection equipment, information indicating a type of the connection equipment, identification information for identifying the connection equipment (sometimes referred to as an equipment ID), and information indicating a status of access, for example. Examples of the status of the access include whether or not execution of processing requested by the access request has been permitted, whether or not the processing requested by the access request has ended normally, and the like.

In the present embodiment, the charging and discharging history 2956 stores history of electrical energy outputted and inputted between a connection equipment electrically connected to the mobile battery 20 and the mobile battery 20. The charging and discharging history 2956 may store history of amounts of electric power outputted and inputted between the connection equipment and the mobile battery 20.

The charging and discharging history 2956 includes, for example, one or more records. For example, each time the connection equipment and the mobile battery 20 are electrically connected, one record is generated. Each of the one or more records associates and stores the battery ID of the mobile battery 20, information indicating a period during which the mobile battery 20 and the connection equipment had been electrically connected, the information indicating the type of the connection equipment, the equipment ID of the connection equipment, information indicating an amount of charging and discharging electric power (kWh) of the mobile battery 20 during that period, for example.

The charging and discharging history 2956 is transmitted from the mobile battery 20 to the battery replacement machine 120 each time the mobile battery 20 is attached to the battery replacement machine 120, for example. If authentication of both the mobile battery 20 and the battery replacement machine 120 is successful, the charging and discharging history 2956 may be transmitted from the mobile battery 20 to the battery replacement machine 120. In this case, the charging and discharging history 2956 may include a record relating to each of one or more pieces of connection equipment electrically connected to the mobile battery 20 during a period before the mobile battery 20 is attached to the battery replacement machine 120 and the mobile battery 20 executes processing of authenticating the battery replacement machine 120 (sometimes referred to as a target period).

In the present embodiment, the authentication history 2958 stores history of authentication processing or interactive authentication processing between a connection equipment which the mobile battery 20 has been housed in or attached to, and the mobile battery 20. The authentication history 2958, examples of the connection equipment which the mobile battery 20 has been housed in or attached to include: (i) a connection equipment which the mobile battery 20 has not actually been housed in or attached to after successful authentication of at least one of the mobile battery 20 or the connection equipment; (ii) a connection equipment which the mobile battery 20 has not been housed in or attached to as a result of failure in authentication of at least one of the mobile battery 20 or the connection equipment; and the like.

The authentication history 2958 includes, for example, one or more records. For example, each time the connection equipment and the mobile battery 20 are housed in or attached to the connection equipment, or each time the authentication processing is executed, one record is generated. Each of the one or more records associates and stores the battery ID of the mobile battery 20, information indicating time when the authentication processing has been executed between the mobile battery 20 and the connection equipment, the information indicating the type of the connection equipment, the equipment ID of the connection equipment, and information indicating a status of that authentication, for example. Examples of the status of the authentication include that the authentication has failed, that the authentication has been successful, that the authentication of one of them has been successful, that the authentication of both of them has been successful, and the like.

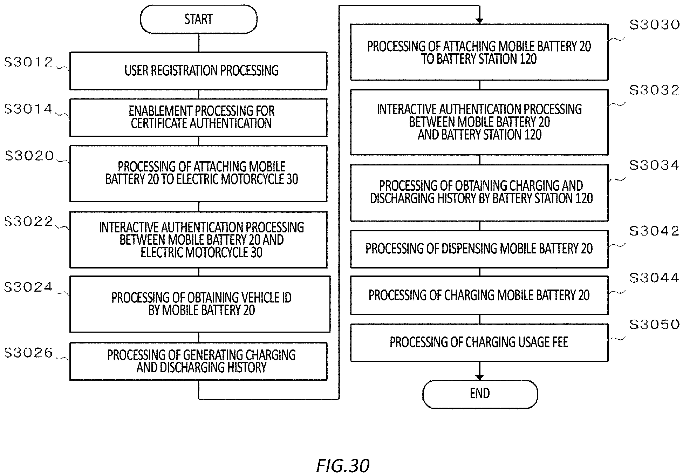

Fig. 30 schematically shows an example of information processing in the battery management system 100. With reference to Fig. 30, an example of processing for charging the user 40 a usage fee of the battery management system 100 will be described.

According to the present embodiment, first, in S3012, user registration processing for the user 40 is executed. For example, personal information of the user 40, payment information of the user 40, a type and an ID of an electric power apparatus used by the user 40, and the like are registered in database.

Examples of the payment information include a means of payment, identification information of a user correlated with the means of payment, a settlement period, and the like. Examples of the means of payment include credit card settlement, QR CODE (registered trademark) settlement, prepaid settlement, and the like. Examples of the identification information of the user correlated with the means of payment include a credit card number, an expiration date of a credit card, a security code of the credit card, an account assigned to the user 40 by a settlement service provider, and the like. An example of the electric power apparatus used by the user 40 includes the electric motorcycle 30. As such, for example, identification information of the electric motorcycle 30 used by the user 40 is associated with the identification information of the user 40. In addition, the identification information of the electric motorcycle 30 used by the user 40 is associated with the payment information of the user 40.

According to the present embodiment, after the user registration processing is completed, processing of enabling (sometimes referred to as activation) the electric motorcycle 30 is executed. Examples of the processing of enabling the electric motorcycle 30 include processing for enabling a function for authenticating the mobile battery 20 by the electric motorcycle 30, processing for enabling a function for responding to authentication from the mobile battery 20 by the electric motorcycle 30, and the like. The electric motorcycle 30 has a configuration similar to that of the battery authentication unit 378, for example. This allows the electric motorcycle 30 to respond to the authentication from the mobile battery 20 by a procedure similar to that for the battery replacement machine 120 described above. Enablement of these functions allows the electric motorcycle 30 to use the mobile battery 20.

In S3014, a valid electronic certificate 2190 for the mobile battery 20 is issued. Similarly, a valid electronic certificate 2390 for the battery replacement machine 120 is issued. At least one of the electronic certificate 2190 or the electronic certificate 2390 may have an expiration date. The expiration date of the valid electronic certificate 2190 for the mobile battery 20 may be updated if the mobile battery 20 is attached to the battery replacement machine 120, for example.

In addition, in S3014, the authentication handling unit 232 of the mobile battery 20 is enabled. This allows the authentication handling unit 232 to transmit a response code in response to receiving a challenge code. Completion of S3012 and S3014 allows the user 40 to use a service provided by the battery management system 100.

Next, in S3020, the user 40 attaches the mobile battery 20 to the electric motorcycle 30. As such, in S3022, interactive authentication processing is executed between the mobile battery 20 and the electric motorcycle 30. If at least one of authentication of the mobile battery 20 or authentication of the electric motorcycle 30 fails, supply of electric power from the mobile battery 20 to the electric motorcycle 30 may be prohibited or restricted. In addition, information indicating that the authentication has failed is presented to the user 40.

If both the authentication of the mobile battery 20 and the authentication of the electric motorcycle 30 are successful in S3022, in S3024, the electric motorcycle 30 permits the mobile battery 20 to execute processing of reading the identification information of the electric motorcycle 30. As such, the identification information of the electric motorcycle 30 is transmitted from the electric motorcycle 30 to the mobile battery 20. In addition, in S3026, the history management unit 2832 of the mobile battery 20 associates the identification information of the electric motorcycle 30 and information indicating an amount of electric power supplied from the mobile battery 20 to the electric motorcycle 30, and stores them in the charging and discharging history storage unit 2852. This generates charging and discharging history for a period during which the mobile battery 20 is housed in or attached to the electric motorcycle 30.

Next, in S3030, the user 40 takes the mobile battery 20 out of the electric motorcycle 30, and inserts the mobile battery 20 which has been taken out, into the slot 124 of the battery replacement machine 120. This allows the mobile battery 20 to be attached to the battery replacement machine 120.

When the mobile battery 20 is inserted into the slot 124 of the battery replacement machine 120 in S3030, in S3032, the interactive authentication processing is executed between the mobile battery 20 and the battery replacement machine 120. If at least one of the authentication of the mobile battery 20 or the authentication of the battery replacement machine 120 fails, for example, attachment of the mobile battery 20 to the battery replacement machine 120 is prohibited, and the mobile battery 20 is returned to the user 40. If at least one of the authentication of the mobile battery 20 or the authentication of the battery replacement machine 120 fails, charging of the mobile battery 20 may be prohibited. If at least one of the authentication of the mobile battery 20 or the authentication of the battery replacement machine 120 fails, the battery replacement machine 120 may be collected by an operator of the battery management system 100. In addition, the information indicating that the authentication has failed is presented to the user 40.

If both the authentication of the mobile battery 20 and the authentication of the battery replacement machine 120 are successful in S3022, in S3034, the mobile battery 20 permits the battery replacement machine 120 to execute processing of reading the charging and discharging history stored in the mobile battery 20. As such, the charging and discharging history of the mobile battery 20 is transmitted from the mobile battery 20 to the battery replacement machine 120.

Next, in S3042, the battery replacement machine 120 dispenses another mobile battery 20 which has been completely charged. The user 40 takes out the mobile battery 20 dispensed from the battery replacement machine 120, and attaches the mobile battery 20 which has been taken out, to the electric motorcycle 30. As such, the mobile battery 20 of the electric motorcycle 30 is replaced. In addition, in S3044, the battery replacement machine 120 starts processing of charging the mobile battery 20 returned by the user 40 to the battery replacement machine 120.

Next, in S3050, the battery replacement machine 120 transmits, to the management server 140, the charging and discharging history read from the mobile battery 20. If transmission of the charging and discharging history to the management server 140 does not end normally, the battery replacement machine 120 may present, to the user 40, information indicating that the transmission of the charging and discharging history has not ended normally.

If the transmission of the charging and discharging history to the management server 140 ends normally, the management server 140 performs, for each unit period for calculating the usage fee (sometimes referred to as settlement period), an accumulated value of amounts of electric power used by each of one or more users 40. Based on the accumulated value of the amounts of electric power used by each user for each settlement period, the usage fee for each user for each settlement period is calculated. The management server 140 transmits, to each user, information indicating the usage fee for each user. This ends the processing.

(Example of another embodiment)

In the present embodiment, the information processing in the battery management system 100 has been described in detail, by taking as an example a case where the charging and discharging history of the mobile battery 20 is transmitted from the battery replacement machine 120 to the management server 140 in S3050. However, timing at which the charging and discharging history of the mobile battery 20 is transmitted from the battery replacement machine 120 to the management server 140 is not limited to the present embodiment.

In another embodiment, before S3042 and S3044, the charging and discharging history of the mobile battery 20 is transmitted from the battery replacement machine 120 to the management server 140. In this case, when the transmission of the charging and discharging history to the management server 140 does not ended normally, the battery replacement machine 120 may prohibit replacement and/ charging of the mobile battery 20.

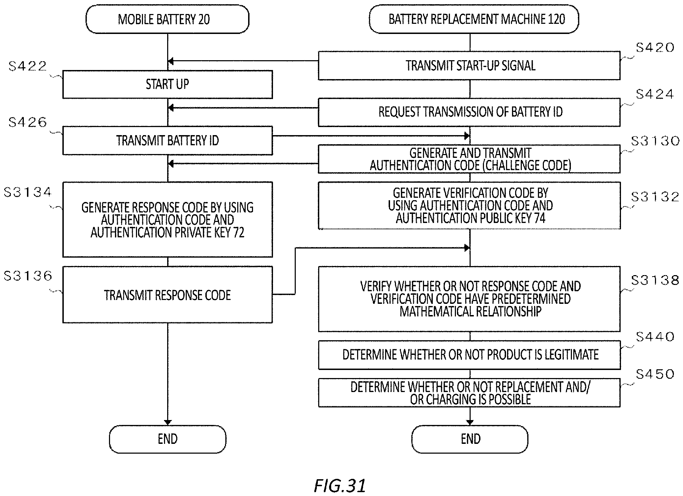

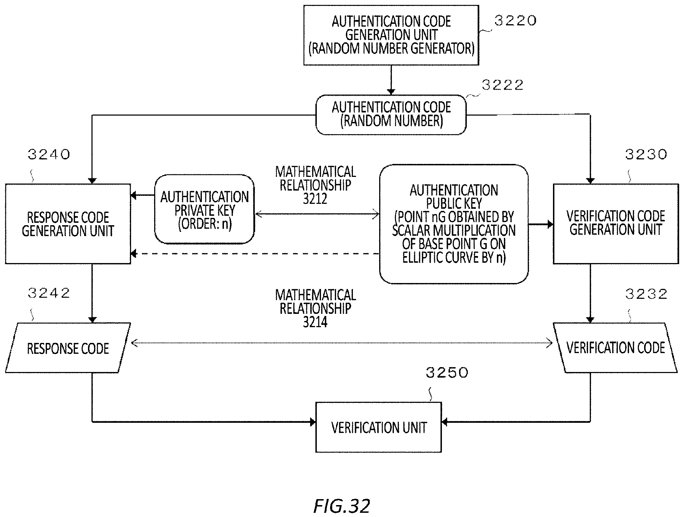

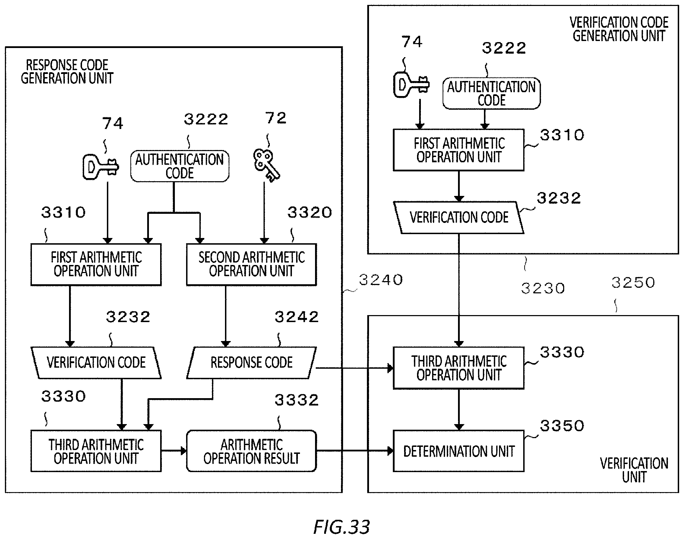

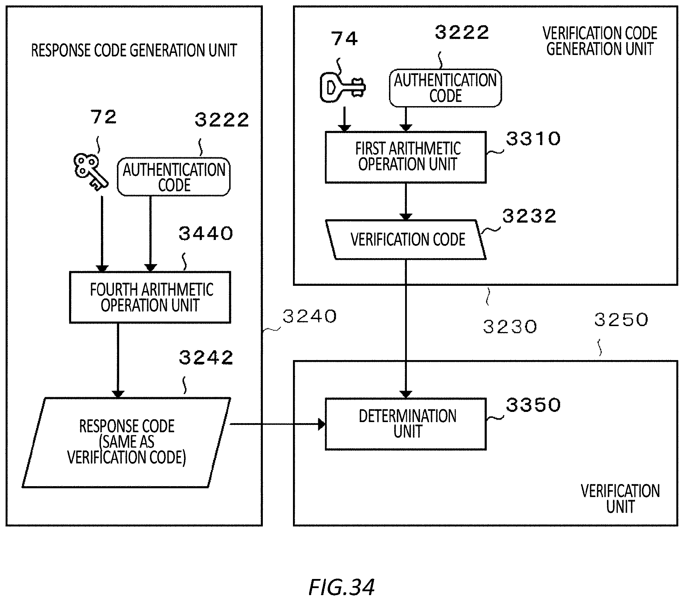

With reference to Fig. 31, Fig. 32, Fig. 33, and Fig. 34, another example of a procedure for authenticating the mobile battery 20 will be described. Fig. 31 schematically shows another example of a procedure for authenticating the mobile battery 20. Fig. 32 schematically shows an example of a relationship between a response code and a verification code. Fig. 33 schematically shows an example of a procedure for verifying a response code and a verification code. Fig. 34 schematically shows another example of a procedure for verifying a response code and a verification code.

The authentication procedure to be described with reference to Fig. 31 is different from the authentication procedure described with reference to Fig. 4, in that a plaintext authentication code is transmitted as a challenge code. A procedure which is the same as or similar to the authentication procedure described with reference to Fig. 4 is given the same reference number as that in Fig. 4, and description of that procedure may be omitted. The procedure which is the same as or similar to the authentication procedure described with reference to Fig. 4 may have a configuration similar to that of the authentication procedure described with reference to Fig. 4.

In the present embodiment, an example of information processing for confirming, by a confirmation apparatus, whether or not a to-be-confirmed apparatus is a legitimate apparatus will be described, by taking as an example a case where the battery replacement machine 120 authenticates the mobile battery 20. However, the information processing is not limited to the present embodiment. In another embodiment, the mobile battery 20 can authenticate the battery replacement machine 120 by a procedure similar to that used in the present embodiment.

As shown in Fig. 31, according to the present embodiment, when the battery authentication unit 378 obtains a battery ID of the mobile battery 20 in S3130, in S3130, the battery authentication unit 378 refers to the database relating to the authentication public key 74 described above by using the battery ID as a key, to extract the authentication public key 74 matching that battery ID. If the authentication public key 74 matching the battery ID is not extracted, the battery authentication unit 378 may access the communications terminal 52 or the management server 140, to obtain the authentication public key 74 matching that battery ID.

In addition, when the battery authentication unit 378 obtains the battery ID of the mobile battery 20 in S3130, in S3130, the battery authentication unit 378 generates a challenge code, and transmits that challenge code to the mobile battery 20. Generation and transmission of the challenge code is performed by the following procedure, for example.

The battery authentication unit 378, first, prepares an authentication code. For example, the battery authentication unit 378 generates a random number, and decides to use that random number as the authentication code. The battery authentication unit 378 may generate the authentication code by using the random number. The battery authentication unit 378 may generate the authentication code based on the random number and on any parameter used in a public key cryptosystem. An example of the parameter used in the public key cryptosystem includes a common parameter shared between the confirmation apparatus and the to-be-confirmed apparatus. Examples of the common parameter include an elliptic curve E of elliptic curve cryptography, a generator P of that elliptic curve E, and the like.

The battery authentication unit 378 transmits the authentication code to the mobile battery 20 as the challenge code. The battery authentication unit 378 transmits the authentication code which has not been encrypted by the authentication public key 74, to the mobile battery 20 as the challenge code. For example, the battery authentication unit 378 transmits the plaintext authentication code to the mobile battery 20 as the challenge code.

In S3132, the battery authentication unit 378 generates a verification code by using: the authentication code; and the authentication public key 74 of the mobile battery 20. If the authentication code is generated based on the random number and the common parameter, the battery authentication unit 378 may generate a verification code similar to that described above by using: the random number used to generate the authentication code; and the authentication public key 74 of the mobile battery 20. A procedure for generating the verification code will be described later in detail.

In S3134, when the control unit 230 of the mobile battery 20 receives the challenge code, the control unit 230 generates a response code by using: the authentication code included in the challenge code; and the authentication private key 72 of the mobile battery 20. A procedure for generating the response code will be described later in detail. In addition, in S3136, the control unit 230 transmits the response code to the battery replacement machine 120. As such, the control unit 230 ends processing for handling processing of authenticating the battery replacement machine 120 (sometimes referred to as authentication handling processing).

In S3138, when the battery authentication unit 378 receives the response code, the battery authentication unit 378 verifies whether or not the response code and the verification code have a predetermined mathematical relationship. The verification procedure will be described later in detail. Subsequently, in S440, the battery authentication unit 378 determines or confirms whether or not the mobile battery 20 is a legitimate apparatus, based on a result of the verification.

Fig. 32 schematically shows an example of a relationship between a response code and a verification code. In the present embodiment, the response code and the verification code are generated using an authentication public key and an authentication private key of a to-be-confirmed apparatus. If the to-be-confirmed apparatus is the mobile battery 20, the response code and the verification code are generated using the authentication public key 74 and the authentication private key 72. The authentication private key 72 is stored in the storage unit 250, for example. Even when the to-be-confirmed apparatus is the battery replacement machine 120, the response code and the verification code may be generated by a procedure similar to that used when the to-be-confirmed apparatus is the mobile battery 20.

The authentication public key and the authentication private key of the to-be-confirmed apparatus is generated to satisfy a mathematical relationship 3212. An example of the mathematical relationship 3212 includes a relationship used for encryption using an elliptic curve (sometimes referred to as elliptic curve cryptography or ECC). An example of the relationship includes Equation 1 described below. In Equation 1, each of p, a, and b is a parameter of the elliptic curve.

(Equation 1)

$$y^2 = x^3 + ax + b\,mod\,p$$

A point nG (x, y) obtained by scalar multiplication of a base point G (x, y), which is a point on the elliptic curve expressed by Equation 1, by an integer n (sometimes referred to as order) is located on the elliptic curve expressed by Equation 1. At this time, sufficiently large order n is used as a private key, and nG (x, y) is used as a public key.

The response code and the verification code are generated such that the response code and the verification code satisfy a mathematical relationship 3214 if the to-be-confirmed apparatus is a legitimate apparatus. The mathematical relationship 3214 is determined based on the mathematical relationship 3212. In one embodiment, the response code and the verification code may be the same. In this case, the mathematical relationship 3214 is response code = verification code, or response code ÷ verification code = 1. In another embodiment, the response code and the verification code may be different. 1, which is a result of the arithmetic operation, may be an example of a predetermined value.

In the embodiment to be described with reference to Fig. 32, the battery authentication unit 378 includes an authentication code generation unit 3220, a verification code generation unit 3230, and a verification unit 3250. The control unit 230 includes a response code generation unit 3240.

In the present embodiment, the authentication code generation unit 3220 generates an authentication code 3222. For example, the authentication code generation unit 3220 generates a random number with a random number generator, and generates the authentication code 3222 based on that random number. The authentication code generation unit 3220 may output the random number as the authentication code 3222. The authentication code generation unit 3220 outputs, for example, a plaintext authentication code 3222 to the response code generation unit 3240 and the verification code generation unit 3230.

In the present embodiment, the verification code generation unit 3230 obtains the authentication code 3222. The verification code generation unit 3230 obtains the authentication public key. The verification code generation unit 3230 derives a verification code 3232 by using the authentication code 3222. The verification code generation unit 3230 generates the verification code 3232 by converting the authentication code 3222 based on the authentication public key, for example. The verification code generation unit 3230 outputs the verification code 3232 to the verification unit 3250. The verification code generation unit 3230 will be described later in detail.

In the present embodiment, the response code generation unit 3240 obtains the authentication code 3222. The response code generation unit 3240 obtains the authentication private key. The response code generation unit 3240 generates a response code 3242 based on the authentication code 3222 and the authentication private key. The response code generation unit 3240 generates the response code 3242 by converting the authentication code 3222 based on the authentication private key, for example.

The response code generation unit 3240 may generate the same information as information obtained by converting the authentication code 3222 based on the authentication public key (that is, the obtained information is the verification code 3232). The response code generation unit 3240 generates the same information as the verification code 3232 based on the authentication code 3222, on the authentication private key, and on the mathematical relationship 3212 and/or the mathematical relationship 3214, for example.

The response code generation unit 3240 outputs the response code 3242 to the verification unit 3250. The response code generation unit 3240 will be described later in detail.

In the present embodiment, the verification unit 3250 obtains the verification code 3232 from the verification code generation unit 3230. The verification unit 3250 obtains the response code 3242 from the response code generation unit 3240. The verification unit 3250 determines whether or not the to-be-confirmed apparatus is a legitimate apparatus, based on the verification code 3232 and the response code 3242.

If the response code generation unit 3240 outputs, as the response code 3242, information obtained by converting the authentication code 3222 based on the authentication private key, the verification unit 3250 may determine whether or not the verification code 3232 and the response code 3242 satisfy the mathematical relationship 3214. If the response code generation unit 3240 outputs, as the response code 3242, the same information as the verification code 3232, the verification unit 3250 may compare the verification code 3232 and the response code 3242. The verification unit 3250 will be described later in detail.

The mathematical relationship 3212 may be an example of a first mathematical relationship. The mathematical relationship 3214 may be an example of a second mathematical relationship. The authentication code generation unit 3220 may be an example of a first verification information generation unit. The authentication code 3222 may be an example of first verification information. The verification code generation unit 3230 may be an example of a third verification information generation unit. The verification code 3232 may be an example of third verification information. The response code generation unit 3240 may be an example of a first verification information obtainment unit or a response unit. The response code 3242 may be an example of fifth verification information or sixth verification information. The verification unit 3250 may be an example of a response reception unit or a determination unit.

Output of the authentication code 3222 may be an example of transmission of the first verification information. A procedure for obtaining the authentication code 3222 by the response code generation unit 3240 may be an example of a step of receiving the first verification information from the confirmation apparatus by the to-be-confirmed apparatus or a step of obtaining the first verification information from a first electric power apparatus. A procedure for outputting the response code 3242 to the verification unit 3250 by the response code generation unit 3240 may be an example of a step of generating, by the to-be-confirmed apparatus, the fifth verification information based on the first verification information and fourth verification information. A public key used to generate the verification code 3232 may be an example of second verification information. A private key used to generate the response code 3242 may be an example of the fourth verification information.

Fig. 33 schematically shows an example of a procedure for verifying a response code and a verification code. In the present embodiment, in order to facilitate understanding of the embodiment, the procedure for verifying the response code and the verification code will be described in detail, by taking as an example a case where a to-be-confirmed apparatus is the mobile battery 20. Persons skilled in the art who have read the present specification could understand that the response code and the verification code may be verified by a procedure similar to that used in the present embodiment, even if the to-be-confirmed apparatus is the battery replacement machine 120, for example. In the present embodiment, the procedure for verifying the response code and the verification code will be described in detail, by taking as an example a case where the response code generation unit 3240 outputs, as the response code 3242, information obtained by converting the authentication code 3222 based on an authentication private key.

In the present embodiment, the verification code generation unit 3230 includes, for example, a first arithmetic operation unit 3310. The response code generation unit 3240 includes, for example, the first arithmetic operation unit 3310, a second arithmetic operation unit 3320, and a third arithmetic operation unit 3330. The verification unit 3250 includes, for example, the third arithmetic operation unit 3330 and a determination unit 3350.

In the present embodiment, the first arithmetic operation unit 3310 obtains the authentication code 3222 and the authentication public key 74. The first arithmetic operation unit 3310 generates the verification code 3232 by converting the authentication code 3222 based on the authentication public key 74, for example. The first arithmetic operation unit 3310 may generate the verification code 3232 by encrypting the authentication code 3222 with the authentication public key 74. The first arithmetic operation unit 3310 outputs the verification code 3232 to the third arithmetic operation unit 3330.

In the present embodiment, the second arithmetic operation unit 3320 obtains the authentication code 3222 and the authentication private key 72. The second arithmetic operation unit 3320 generates the response code 3242 by converting the authentication code 3222 based on the authentication private key 72, for example. The first arithmetic operation unit 3310 may generate the response code 3242 by encrypting the authentication code 3222 with the authentication private key 72. The second arithmetic operation unit 3320 outputs the response code 3242 to the third arithmetic operation unit 3330.

In the present embodiment, the third arithmetic operation unit 3330 obtains the verification code 3232 and the response code 3242. The third arithmetic operation unit 3330 performs information processing on the verification code 3232 and the response code 3242 in accordance with a first verification algorithm, to output an arithmetic operation result of that information processing. The first verification algorithm may be an algorithm for verifying whether or not the verification code 3232 and the response code 3242 satisfy the mathematical relationship 3214. The first verification algorithm may include a procedure for deriving a parameter p of the elliptic curve described above. The first verification algorithm may include a procedure for outputting a value determined according to the mathematical relationship 3214 if the verification code 3232 and the response code 3242 are inputted and the to-be-confirmed apparatus is a legitimate apparatus.

The third arithmetic operation unit 3330 of the response code generation unit 3240 executes the information processing, in accordance with the first verification algorithm, on the verification code 3232 outputted by the first arithmetic operation unit 3310 of the response code generation unit 3240 and on the response code 3242 outputted by the second arithmetic operation unit 3320 of the response code generation unit 3240. The third arithmetic operation unit 3330 of the response code generation unit 3240 outputs an arithmetic operation result 3332 to the determination unit 3350.

If the mobile battery 20 is a legitimate apparatus, the arithmetic operation result 3332 indicates an arithmetic operation result which would be obtained if the information processing were performed on the verification code 3232 and the response code 3242 in accordance with the first verification algorithm when the authentication private key 72 and the authentication public key 74 satisfy the mathematical relationship 3212. As described above, if the to-be-confirmed apparatus is a legitimate apparatus, the verification code 3232 and the response code 3242 satisfy the mathematical relationship 3212.

The third arithmetic operation unit 3330 of the verification unit 3250 executes the information processing, in accordance with the first verification algorithm, on the verification code 3232 outputted by the first arithmetic operation unit 3310 of the verification code generation unit 3230 and on the response code 3242 outputted by the second arithmetic operation unit 3320 of the response code generation unit 3240. The third arithmetic operation unit 3330 of the verification unit 3250 outputs an arithmetic operation result to the determination unit 3350.

In the present embodiment, the determination unit 3350 determines whether or not the verification code 3232 outputted by the verification code generation unit 3230 and the response code 3242 outputted by the response code generation unit 3240 satisfy the mathematical relationship 3214. For example, the determination unit 3350 compares the arithmetic operation result 3332 from the third arithmetic operation unit 3330 of the response code generation unit 3240 with the arithmetic operation result from the third arithmetic operation unit 3330 of the verification unit 3250. The determination unit 3350 may determine whether or not the arithmetic operation result 3332 from the third arithmetic operation unit 3330 of the response code generation unit 3240 matches the arithmetic operation result from the third arithmetic operation unit 3330 of the verification unit 3250. The determination unit 3350 may decide whether or not the mobile battery 20 is legitimate, based on a result of comparison.

If both match, the determination unit 3350 may determine that the verification code 3232 outputted by the verification code generation unit 3230 and the response code 3242 outputted by the response code generation unit 3240 satisfy the mathematical relationship 3214. In this case, the determination unit 3350 may decide that the mobile battery 20 is legitimate. If both do not match, the determination unit 3350 may determine that the verification code 3232 outputted by the verification code generation unit 3230 and the response code 3242 outputted by the response code generation unit 3240 do not satisfy the mathematical relationship 3214. In this case, the determination unit 3350 may decide that the mobile battery 20 is not legitimate or that the mobile battery 20 is illegitimate.

Information indicating the arithmetic operation result from the third arithmetic operation unit 3330 of the response code generation unit 3240 may be an example of eighth verification information. Information indicating the arithmetic operation result from the third arithmetic operation unit 3330 of the verification unit 3250 may be an example of seventh verification information.

Fig. 34 schematically shows another example of a procedure for verifying a response code and a verification code. In the present embodiment, in order to facilitate understanding of the embodiment, the procedure for verifying the response code and the verification code will be described in detail, by taking as an example a case where a to-be-confirmed apparatus is the mobile battery 20. Persons skilled in the art who have read the present specification could understand that the response code and the verification code may be verified by a procedure similar to that used in the present embodiment, even if the to-be-confirmed apparatus is the battery replacement machine 120, for example. In the present embodiment, the procedure for verifying the response code and the verification code will be described in detail, by taking as an example a case where the response code generation unit 3240 outputs, as the response code 3242, the same information as the verification code 3232.

In the present embodiment, the verification code generation unit 3230 includes, for example, the first arithmetic operation unit 3310. The response code generation unit 3240 includes, for example, a fourth arithmetic operation unit 3440. The verification unit 3250 includes, for example, the determination unit 3350.

In the present embodiment, the fourth arithmetic operation unit 3440 derives the same information as the verification code 3232 from the authentication code 3222 and the authentication private key 72. The response code generation unit 3240 may output the same information as the verification code 3232 to the determination unit 3350 as the response code 3242.

The fourth arithmetic operation unit 3440 generates the same information as the verification code 3232 based on the authentication code 3222, on the authentication private key 72, and on the mathematical relationship 3212 and/or the mathematical relationship 3214, for example. The fourth arithmetic operation unit 3440 may generate the same information as the verification code 3232 from the authentication code 3222 and the authentication private key 72 by using the mathematical relationship 3214. The fourth arithmetic operation unit 3440 may generate the same information as the verification code 3232 from information obtained by converting the authentication code 3222 based on the authentication private key 72, by using the mathematical relationship 3214.

The fourth arithmetic operation unit 3440 may include a configuration similar to that of the response code generation unit 3240 described with reference to Fig. 33. The fourth arithmetic operation unit 3440 may generate the same information as the verification code 3232 based on the response code 3242 outputted by the second arithmetic operation unit 3320 and on the arithmetic operation result 3332 outputted by the third arithmetic operation unit 3330.

In the present embodiment, the determination unit 3350 compares the verification code 3232 outputted by the verification code generation unit 3230 with the response code 3242 outputted by the response code generation unit 3240. For example, the determination unit 3350 determines whether or not the verification code 3232 outputted by the verification code generation unit 3230 matches the response code 3242 outputted by the response code generation unit 3240. The determination unit 3350 may decide whether or not the mobile battery 20 is legitimate, based on a result of comparison.

If both match, the determination unit 3350 may decide that the mobile battery 20 is legitimate. If both do not match, the determination unit 3350 may decide that the mobile battery 20 is not legitimate or that the mobile battery 20 is illegitimate.

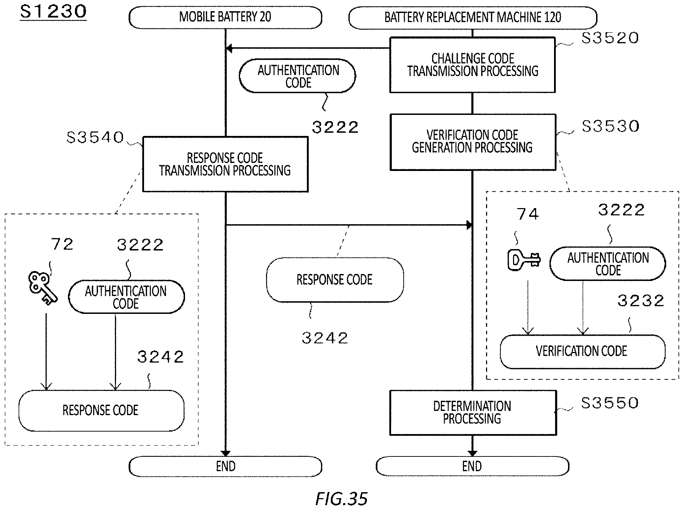

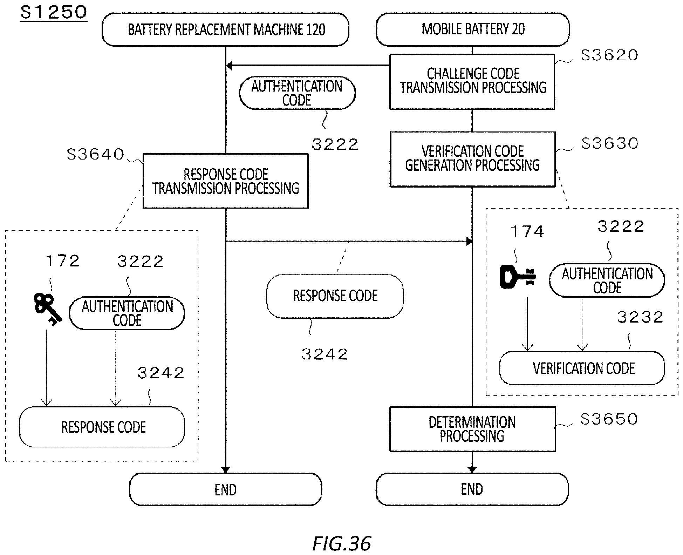

With reference to Fig. 35 and Fig. 36, an example of application of the authentication procedure described with reference to Fig. 31 to Fig. 34, to interactive authentication processing will be described. Fig. 35 schematically shows an example of a procedure for authenticating the mobile battery 20 by the battery replacement machine 120 in the interactive authentication. Fig. 35 shows another example of S1230 described with reference to Fig. 12, for example. Fig. 36 schematically shows an example of a procedure for authenticating the battery replacement machine 120 by the mobile battery 20 in the interactive authentication. Fig. 36 shows another example of S1250 described with reference to Fig. 12, for example.

As shown in Fig. 35, according to the present embodiment, in S3520, the battery replacement machine 120 transmits a challenge code to the mobile battery 20. As described above, in the present embodiment, a plaintext authentication code 3222 is transmitted as the challenge code. Next, in S3530, the battery replacement machine 120 generates the verification code 3232 based on the authentication public key 74 and the authentication code 3222. Next, in S3540, the mobile battery 20 generates the response code 3242 based on the authentication private key 72 and the authentication code 3222. In addition, the mobile battery 20 transmits the response code 3242 to the battery replacement machine 120.

Next, in S3550, the battery replacement machine 120 determines whether or not the verification code 3232 and the response code 3242 satisfy the mathematical relationship 3214. The battery replacement machine 120 decides whether or not the mobile battery 20 is legitimate, based on a result of determination.

As shown in Fig. 36, according to the present embodiment, in S3620, the mobile battery 20 transmits the challenge code to the battery replacement machine 120. As described above, in the present embodiment, the plaintext authentication code 3222 is transmitted as the challenge code. Next, in S3630, the mobile battery 20 generates the verification code 3232 based on the authentication public key 174 and the authentication code 3222. Next, in S3640, the battery replacement machine 120 generates the response code 3242 based on the authentication private key 172 and the authentication code 3222. In addition, the battery replacement machine 120 transmits the response code 3242 to the mobile battery 20.

Next, in S3650, the mobile battery 20 determines whether or not the verification code 3232 and the response code 3242 satisfy the mathematical relationship 3214. The mobile battery 20 decides whether or not the battery replacement machine 120 is legitimate, based on a result of determination.

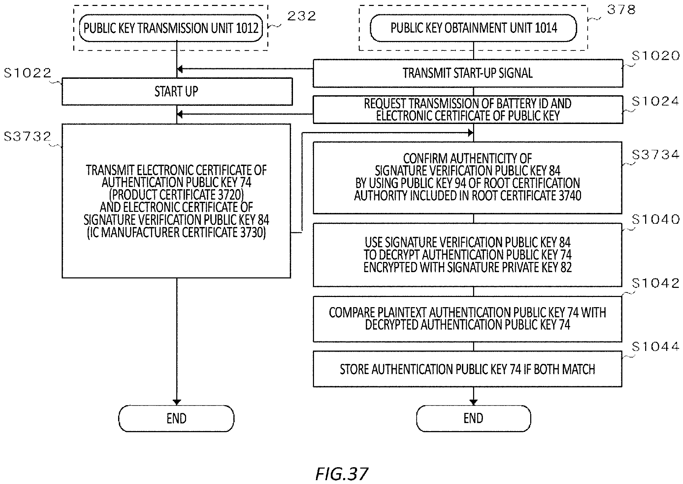

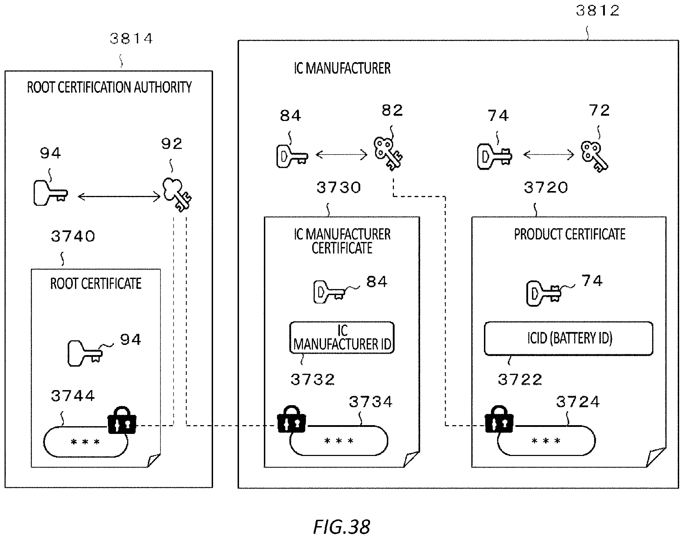

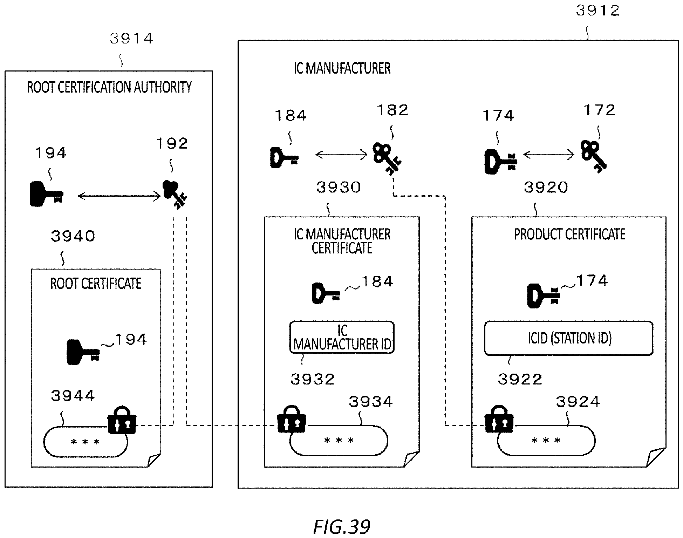

With reference to Fig. 37, Fig. 38, and Fig. 39, an example of interactive authentication processing using a plurality of electronic certificates will be described. Fig. 37 schematically shows an example of interactive authentication processing using a plurality of electronic certificates. Fig. 38 schematically shows examples of an electronic certificate for authenticating the mobile battery 20. Fig. 39 schematically shows examples of an electronic certificate for authenticating the battery replacement machine 120.

In the present embodiment, an example of information processing for confirming, by a confirmation apparatus, whether or not a to-be-confirmed apparatus is a legitimate apparatus will be described, by taking as an example a case where the battery replacement machine 120 authenticates the mobile battery 20. However, the information processing is not limited to the present embodiment. In another embodiment, the mobile battery 20 can authenticate the battery replacement machine 120 by a procedure similar to that used in the present embodiment.

As shown in Fig. 37, an embodiment to be described with reference to Fig. 37 is different from the embodiment described with reference to Fig. 10, in that an electronic certificate of a public key instead of the public key is requested in S1024, that it has S3732 instead of S1030 and S1032, and that it has S3734. Except for the differences, the embodiment to be described with reference to Fig. 37 may have a configuration similar to that of the embodiment described with reference to Fig. 10.

According to the present embodiment, in S3732, the public key transmission unit 1012 transmits, to the public key obtainment unit 1014, an electronic certificate of the authentication public key 74 (sometimes referred to as a product certificate 3720) and an electronic certificate of the signature verification public key 84 (sometimes referred to as an IC manufacturer certificate 3730). The product certificate 3720 and the IC manufacturer certificate 3730 will be described later in detail.

In the present embodiment, in S3734, the public key obtainment unit 1014 confirms authenticity of the signature verification public key 84 by using a public key 94 of a root certification authority. For example, the public key obtainment unit 1014 compares (i) a plaintext signature verification public key 84 included in the IC manufacturer certificate 3730 with (ii) the signature verification public key 84 obtained by decrypting, with the public key 94, an encrypted signature verification public key 84 included in the IC manufacturer certificate 3730. If both match, the public key obtainment unit 1014 confirms that the signature verification public key 84 included in the IC manufacturer certificate 3730 is authentic. On the other hand, if both do not match, the public key obtainment unit 1014 may decide that the signature verification public key 84 included in the IC manufacturer certificate 3730 is not authentic.

The public key 94 of the root certification authority is stored in the storage unit 520 of the battery replacement machine 120, for example. The storage unit 520 may store a root certificate 3740 issued by the root certification authority. The root certificate 3740 will be described later in detail.

As shown in Fig. 38, the product certificate 3720 is issued by an IC manufacturer 3812 manufacturing a control CPU or a secure IC of the mobile battery 20, for example. The product certificate 3720 is written into the storage unit 250 of the mobile battery 20 when the mobile battery 20 is manufactured, is sold, or starts to be distributed, for example. In the present embodiment, the product certificate 3720 includes: the authentication public key 74; identification information for identifying the control CPU or the secure IC (sometimes referred to as an ICID 3722); and an electronic signature 3724 obtained by encrypting the authentication public key 74 and the ICID 3722 with the signature private key 82. The ICID 3722 may be used as a battery ID of the mobile battery 20 incorporating the control CPU or the secure IC identified by that ICID.

It should be noted that the product certificate 3720 is not limited to the present embodiment. For example, in another embodiment, the product certificate 3720 includes: the authentication public key 74; and the electronic signature 3724 obtained by encrypting the authentication public key 74 with the signature private key 82.

The IC manufacturer certificate 3730 is issued by a root certification authority 3814, for example. The IC manufacturer certificate 3730 is written into the storage unit 250 of the mobile battery 20 when the mobile battery 20 is manufactured, is sold, or starts to be distributed, for example. In the present embodiment, the IC manufacturer certificate 3730 includes: the signature verification public key 84; identification information for identifying the IC manufacturer 3812 (sometimes referred to as an IC manufacturer ID 3732); and an electronic signature 3734 obtained by encrypting the signature verification public key 84 and the IC manufacturer ID 3732 with a private key 92 of the root certification authority 3814.

It should be noted that the IC manufacturer certificate 3730 is not limited to the present embodiment. For example, in another embodiment, the IC manufacturer certificate 3730 includes: the signature verification public key 84; and the electronic signature 3734 obtained by encrypting the signature verification public key 84 with the private key 92 of the root certification authority 3814.

The root certificate 3740 is issued by the root certification authority 3814, for example. The root certification authority 3814 generates a pair of the private key 92 and the public key 94. The root certificate 3740 is written into the storage unit 520 of the battery replacement machine 120 when the battery replacement machine 120 is manufactured, is sold, or starts to be distributed, for example. In the present embodiment, the root certificate 3740 includes: the public key 94; and an electronic signature 3744 obtained by encrypting the public key 94 with the private key 92. It should be noted that, in another embodiment, the public key 94 instead of the root certificate 3740 may be written into the storage unit 520 of the battery replacement machine 120 when the battery replacement machine 120 is manufactured, is sold, or starts to be distributed.

Fig. 39 schematically shows examples of an electronic certificate for authenticating the battery replacement machine 120. Examples of the electronic certificate for authenticating the battery replacement machine 120 include a product certificate 3920, an IC manufacturer certificate 3930, a root certificate 3940, and the like.

As shown in Fig. 39, the product certificate 3920 is issued by an IC manufacturer 3912 manufacturing a control CPU or a secure IC of the battery replacement machine 120, for example. The product certificate 3920 is written into the storage unit 520 of the battery replacement machine 120 when the battery replacement machine 120 is manufactured, is sold, or starts to be distributed, for example. In the present embodiment, the product certificate 3920 includes: the authentication public key 174; identification information for identifying the control CPU or the secure IC (sometimes referred to as an ICID 3922); and an electronic signature 3924 obtained by encrypting the authentication public key 174 and the ICID 3922 with the signature private key 182. The ICID 3922 may be used as a station ID of the battery replacement machine 120 incorporating the control CPU or the secure IC identified by that ICID.

It should be noted that the product certificate 3920 is not limited to the present embodiment. For example, in another embodiment, the product certificate 3920 includes: the authentication public key 174; and the electronic signature 3924 obtained by encrypting the authentication public key 174 with the signature private key 182.

The IC manufacturer certificate 3930 is issued by a root certification authority 3914, for example. The IC manufacturer certificate 3930 is written into the storage unit 520 of the battery replacement machine 120 when the battery replacement machine 120 is manufactured, is sold, or starts to be distributed, for example. In the present embodiment, the IC manufacturer certificate 3930 includes: the signature verification public key 184; identification information for identifying the IC manufacturer 3912 (sometimes referred to as an IC manufacturer ID 3932); and an electronic signature 3934 obtained by encrypting the signature verification public key 184 and the IC manufacturer ID 3932 with a private key 192 of the root certification authority 3914.

It should be noted that the IC manufacturer certificate 3930 is not limited to the present embodiment. For example, in another embodiment, the IC manufacturer certificate 3930 includes: the signature verification public key 184; and the electronic signature 3934 obtained by encrypting the signature verification public key 184 with the private key 192 of the root certification authority 3914.

The root certificate 3940 is issued by the root certification authority 3914, for example. The root certification authority 3914 generates a pair of the private key 192 and a public key 194. The root certificate 3940 is written into the storage unit 250 of the mobile battery 20 when the mobile battery 20 is manufactured, is sold, or starts to be distributed, for example. In the present embodiment, the root certificate 3740 includes: the public key 194; and an electronic signature 3944 obtained by encrypting the public key 194 with the private key 192. It should be noted that, in another embodiment, the public key 194 instead of the root certificate 3940 may be written into the storage unit 250 of the mobile battery 20 when the mobile battery 20 is manufactured, is sold, or starts to be distributed.

According to the present embodiment, one or more mobile batteries 20 and one or more battery replacement machines 120 under control of the battery management system 100 store the root certificate 3940. The root certificate 3940 is written when the mobile battery 20 and the battery replacement machine 120 are manufactured or start to be distributed, for example. This allows a specific mobile battery 20 and a specific battery replacement machine 120 to refer to a common root certificate 3940 at a time point where authentication processing is performed between the specific mobile battery 20 and the specific battery replacement machine 120. In processing of authenticating the specific mobile battery 20 and the specific battery replacement machine 120, the IC manufacturer certificate 3930 and the product certificate 3920 are verified starting from the root certificate 3940. This allows an apparatus executing authentication processing to obtain a legitimate public key of an apparatus which is a target of that authentication processing. As described above, the present embodiment facilitates key management.

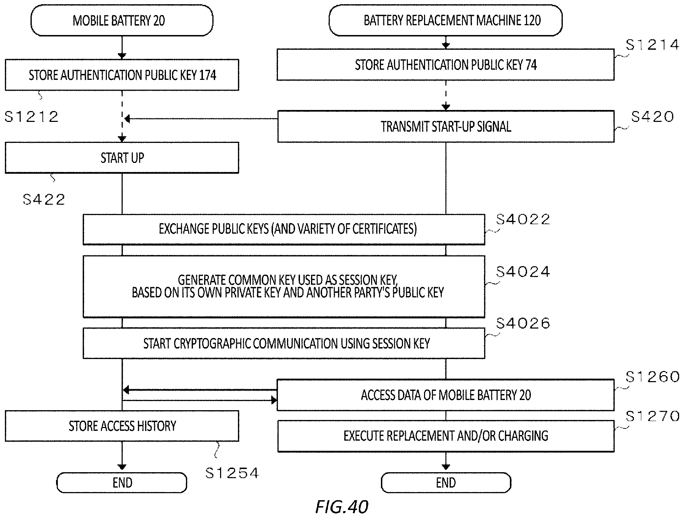

Fig. 40 schematically shows another example of interactive authentication processing in the battery management system 100. The present embodiment is different from the embodiment described with reference to Fig. 12, in that processing of replacing a unique key and processing of generating a common key are executed in accordance with a TLS method in S4022, S4024, and S4026. A procedure which is the same as or similar to the authentication procedure described with reference to Fig. 12 is given the same reference number as that in Fig. 12, and description of that procedure may be omitted.

In the present embodiment, the battery replacement machine 120 executes (a) a step of confirming whether or not the mobile battery 20 is a legitimate apparatus. The battery replacement machine 120 executes (b) a step of receiving, from the mobile battery 20, information indicating that the mobile battery 20 is executing processing for confirming whether or not the battery replacement machine 120 is a legitimate apparatus (sometimes referred to as confirmation information). The battery replacement machine 120 executes (c) a step of transmitting, to the mobile battery 20, information indicating that the battery replacement machine 120 is a legitimate apparatus (sometimes referred to as certification information) if the battery replacement machine 120 receives the confirmation information. Step (a) may be executed before Step (b), or may be executed after Step (b).

In the present embodiment, the mobile battery 20 executes (a) a step of confirming whether or not the battery replacement machine 120 is a legitimate apparatus. The mobile battery 20 executes (b) a step of receiving, from the battery replacement machine 120, information indicating that the battery replacement machine 120 is executing processing for confirming whether or not the mobile battery 20 is a legitimate apparatus (sometimes referred to as confirmation information). The mobile battery 20 executes (c) a step of transmitting, to the battery replacement machine 120, information indicating that the mobile battery 20 is a legitimate apparatus (sometimes referred to as certification information) if the mobile battery 20 receives the confirmation information. Step (a) may be executed before Step (b), or may be executed after Step (b).

According to the present embodiment, in S4022, the mobile battery 20 and the battery replacement machine 120 exchange public keys. The mobile battery 20 and the battery replacement machine 120 may exchange public keys by exchanging electronic certificates of the public keys. As such, the mobile battery 20 obtains the authentication public key 174 of the battery replacement machine 120. The battery replacement machine 120 obtains the authentication public key 74 of the mobile battery 20.

Specifically, as described above, the mobile battery 20 stores a pair of the authentication private key 72 and the authentication public key 74 in the storage unit 250. The authentication private key 72 and the authentication public key 74 may be a pair of a private key and a public key used in elliptic curve cryptography. The mobile battery 20 may store, in the storage unit 250, information indicating a base point used to generate the authentication private key 72 and the authentication public key 74. The base point may be a specific point on a specific elliptic curve.

Similarly, the battery replacement machine 120 stores a pair of the authentication private key 172 and the authentication public key 174 in the storage unit 250. The authentication private key 172 and the authentication public key 174 may be a pair of a private key and a public key used in elliptic curve cryptography. The mobile battery 20 may store, in the storage unit 250, information indicating the base point used to generate the authentication private key 172 and the authentication public key 174. The base point may be the specific point on the specific elliptic curve.

The authentication private key 72 may be one of a pair of parameters representing a specific elliptic curve. The authentication private key 172 may be another of the pair of parameters. The authentication public key 74 is generated based on the base point and the authentication private key 72, for example. The authentication public key 174 is generated based on the base point and the authentication private key 172, for example. As such, a result of multiplying the authentication private key 72 and the authentication public key 174 becomes equal to a result of multiplying the authentication private key 172 and the authentication public key 74.

The mobile battery 20 receives the authentication public key 174 from the battery replacement machine 120. The mobile battery 20 transmits the authentication public key 74 to the battery replacement machine 120. Similarly, the battery replacement machine 120 receives the authentication public key 74 from the mobile battery 20. The battery replacement machine 120 transmits the authentication public key 174 to the mobile battery 20.

According to the present embodiment, in S4024, a common key is generated to be used as a session key in communication between the mobile battery 20 and the battery replacement machine 120. Specifically, the mobile battery 20 generates the common key based on the authentication private key 72 and the authentication public key 174. For example, the mobile battery 20 generates the common key by multiplying the authentication private key 72 and the authentication public key 174. The battery replacement machine 120 generates the common key based on the authentication private key 172 and the authentication public key 74. For example, the battery replacement machine 120 generates the common key by multiplying the authentication private key 172 and the authentication public key 74.

The common key used as the session key is generated using a property of multiplication of a public key and a private key, for example. The common key used as the session key is generated based on a specific mathematical relationship by using the property of the multiplication of the public key and the private key, for example. For example, the mobile battery 20 and the battery replacement machine 120 share temporarily used information such as a random number or time, and the mobile battery 20 and the battery replacement machine 120 use the property of the multiplication of the public key and the private key, to generate the common key used as the session key, based on that shared information. **In** S4024, a plurality of session keys may be generated.

According to the present embodiment, in S4026, cryptographic communication using the common key as the session key is started. For example, the mobile battery 20 transmits, to the battery replacement machine 120, information encrypted using the common key. If the battery replacement machine 120 can decrypt the encrypted information by using the common key, the battery replacement machine 120 may transmit, to the mobile battery 20, information indicating that the information transmitted by the mobile battery 20 has been received. Similarly, the battery replacement machine 120 transmits, to the mobile battery 20, the information encrypted using the common key. If the mobile battery 20 can decrypt the encrypted information by using the common key, the mobile battery 20 may transmit, to the battery replacement machine 120, information indicating that the information transmitted by the battery replacement machine 120 has been received. This completes interactive authentication between the mobile battery 20 and the battery replacement machine 120.

According to the present embodiment, the information encrypted with the common key may be transmitted and received between the mobile battery 20 and the battery replacement machine 120. Examples of the information transmitted and received between the mobile battery 20 and the battery replacement machine 120 include the above-described to-be-read information, to-be-written information, to-be-updated information, to-be-modified information, information used to calculate an amount to be charged to a user in exchange for the mobile battery 20 or electric power (sometimes referred to as billing data), personal information of the user, a variety of information stored in the mobile battery 20, and the like.

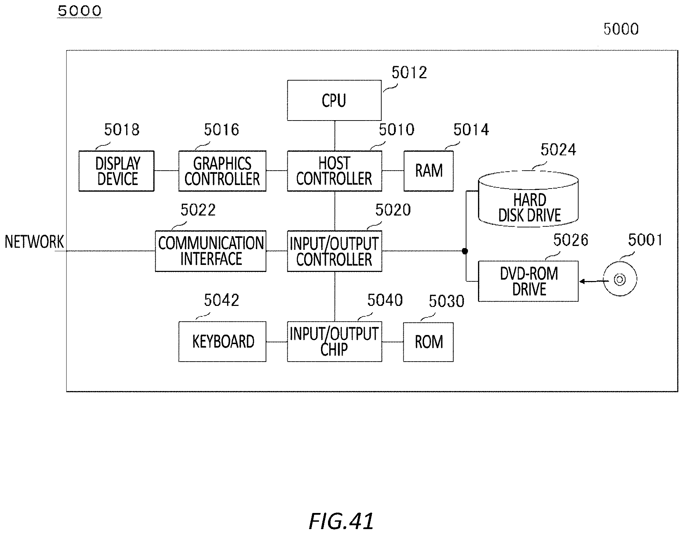

Fig. 41 shows an example of a computer 5000 in which a plurality of aspects of the present invention may be entirely or partly embodied. At least part of the battery management system 100 may be realized by the computer 5000. For example, the control unit 230 or part of it is realized by the computer 5000. For example, the control unit 336 or part of it may be realized by the computer 5000. For example, the control unit 376 or part of it may be realized by the computer 5000.

A program that is installed in the computer 5000 can cause the computer 5000 to execute an operation correlated with an apparatus according to the embodiment of the present invention or to function as one or a plurality of "units" of that apparatus, or can cause the computer 5000 to execute that operation or those one or plurality of units thereof, and/or cause the computer 5000 to execute a process according to the embodiment of the present invention or stages of that process. Such a program may be executed by a CPU 5012 to cause the computer 5000 to execute specific operations correlated with some or all of the blocks of flowcharts and block diagrams described in the present specification.

The computer 5000 according to the present embodiment includes the CPU 5012, a RAM 5014, a GPU 5016, and a display device 5018, which are mutually connected by a host controller 5010. The computer 5000 also includes input/output units such as a communication interface 5022, a hard disk drive 5024, a DVD-ROM drive 5026, and an IC card drive, which are connected to the host controller 5010 via an input/output controller 5020. The computer also includes legacy input/output units such as a ROM 5030 and a keyboard 5042, which are connected to the input/output controller 5020 via an input/output chip 5040.

The CPU 5012 operates in accordance with programs stored in the ROM 5030 and the RAM 5014, thereby controlling each unit. The GPU 5016 obtains image data generated by the CPU 5012 in a frame buffer or the like provided in the RAM 5014 or in itself, so that the image data is displayed on the display device 5018.

The communication interface 5022 communicates with another electronic device via a network. The hard disk drive 5024 stores the program and data to be used by the CPU 5012 in the computer 5000. The DVD-ROM drive 5026 reads a program or data from a DVD-ROM 5001, and provides the program or data to the hard disk drive 5024 via the RAM 5014. The IC card drive reads the program and data from an IC card, and/or writes the program and data to the IC card.

The ROM 5030 stores therein a boot program or the like that is executed by the computer 5000 at the time of activation, and/or a program depending on hardware of the computer 5000. The input/output chip 5040 may also connect various input/output units to the input/output controller 5020 via a parallel port, a serial port, a keyboard port, a mouse port, or the like.

A program is provided by a computer-readable storage medium, such as the DVD-ROM 5001 or the IC card. The program is read from the computer-readable storage medium, installed into the hard disk drive 5024, the RAM 5014, or the ROM 5030, which are also examples of the computer-readable storage medium, and executed by the CPU 5012. The information processing described in these programs is read into the computer 5000, resulting in cooperation between a program and the various types of hardware resources. An apparatus or method may be configured by realizing an operation or processing of information in accordance with the use of the computer 5000.

For example, if communication is executed between the computer 5000 and an external device, the CPU 5012 may execute a communication program loaded in the RAM 5014 and instruct the communication interface 5022 to perform communication processing based on processing described in the communication program. Under control of the CPU 5012, the communication interface 5022 reads transmission data stored in a transmission buffer region provided in a recording medium such as the RAM 5014, the hard disk drive 5024, the DVD-ROM 5001, or the IC card, and transmits the read transmission data to the network, or writes reception data received from the network in a reception buffer region or the like provided on the recording medium.

In addition, the CPU 5012 may cause all or a necessary portion of a file or a database to be read into the RAM 5014, the file or the database having been stored in an external recording medium such as the hard disk drive 5024, the DVD-ROM drive 5026 (the DVD-ROM 5001), the IC card, and the like, and execute various types of processing on the data on the RAM 5014. Next, the CPU 5012 may write back the processed data into an external recording medium.

A various types of information, such as various types of programs, data, tables, and databases, may be stored in the recording medium to undergo information processing. The CPU 5012 may execute, on the data read from the RAM 5014, various types of processing, including various types of operations designated by an instruction sequence of a program, which are described throughout the present disclosure, information processing, a condition judgment, a conditional branch, an unconditional branch, information search/replacement, and the like, and write back the result to the RAM 5014. In addition, the CPU 5012 may search for information in a file, a database, or the like, in the recording medium. For example, if a plurality of entries, each having an attribute value of a first attribute correlated with an attribute value of a second attribute, are stored in the recording medium, the CPU 5012 may search for an entry whose attribute value of the first attribute matches a designated condition, from among those plurality of entries, and read the attribute value of the second attribute stored, in that entry, thereby obtaining the attribute value of the second attribute correlated with the first attribute satisfying the predetermined condition.

The above-described program or software modules may be stored in the computer-readable storage medium on the computer 5000 or near the computer 5000. In addition, a recording medium such as a hard disk or a RAM provided in a server system connected to a dedicated communication network or Internet can be used as a computer-readable storage medium, thereby providing the program to the computer 5000 via the network.

While the present invention has been described by way of the embodiments, the technical scope of the present invention is not limited to the embodiments. It is apparent to persons skilled in the art that various alterations or improvements can be made to the embodiments. In addition, the matters described with regard to the specific embodiment can be applied to other embodiments with a range without causing technical contradictions. In addition, each constitutional element may have features similar to those of other constitutional elements which have the same name and have the different numerals. It is also apparent from the described scope of the claims that the embodiments added with such alterations or improvements can be included the technical scope of the present invention.

The operations, procedures, steps, stages, or the like of each process performed by a device, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

The present specification discloses the following matters, for example.

(Item A-1)

A confirmation method for confirming, by a confirmation apparatus, whether or not a to-be-confirmed apparatus is a legitimate apparatus, the confirmation method comprising:

generating third information by converting first information based on second information;

transmitting the third information to the to-be-confirmed apparatus;

receiving, from the to-be-confirmed apparatus, (i) fifth information generated by the to-be-confirmed apparatus by inversely converting the third information based on fourth information paired with the second information or (ii) sixth information generated by the to-be-confirmed apparatus by performing information processing on the fifth information in accordance with a predetermined first algorithm; and (a) comparing the first information with the fifth information if the fifth information is received, or (b) (i) comparing seventh information to be generated by performing information processing on the first information in accordance with the first algorithm with the sixth information or (ii) comparing the first information with eighth information to be generated by performing information processing on the sixth information in accordance with a second algorithm related to the first algorithm, if the sixth information is received.

(Item A-2)

The confirmation method according to Item A-1, wherein

the first algorithm is an algorithm relating to arithmetic processing using a first function, or an algorithm relating to encryption processing using a ninth information, and

the second algorithm is an algorithm relating to arithmetic processing using a second function which is an inverse function of the first function, or an algorithm relating to decryption processing using the ninth information or tenth information paired with the ninth information.

(Item A-3)

The confirmation method according to Item A-1 or Item A-2, further comprising:

(i) obtaining the second information from a manufacturer or a transferor of the confirmation apparatus or from an issuer of the second information and the fourth information or (ii) obtaining the second information from a first external apparatus which is configured to be able to wirelessly communicate with the confirmation apparatus and which has confirmed that the confirmation apparatus is legitimate; and

storing the second information which has been obtained in a first storage apparatus arranged in the confirmation apparatus.

(Item A-4)

The confirmation method according to Item A-1 or Item A-2, further comprising:

receiving, from the to-be-confirmed apparatus, eleventh information and thirteenth information generated by converting the eleventh information based on twelfth information;

comparing fifteenth information to be generated by inversely converting the thirteenth information based on fourteenth information paired with the twelfth information with the eleventh information; and

obtaining the eleventh information as the second information if the eleventh information and the fifteenth information match.

(Item A-5)

The confirmation method according to any one of Item A-1 to Item A-4, further comprising determining whether or not the to-be-confirmed apparatus is the legitimate apparatus, based on a result of comparing the first information and the fifth information, a result of comparing the sixth information and the seventh information, or a result of comparing the first information and the eighth information.

(Item A-6)

The confirmation method according to Item A-5, further comprising confirming that the to-be-confirmed apparatus is not legitimate or that the to-be-confirmed apparatus is illegitimate, if the first information and the fifth information do not match, the sixth information and the seventh information do not match, or the first information and the eighth information do not match.

(Item A-7)

The confirmation method according to any one of Item A-1 to Item A-6, wherein

the second information is a public key, and

the fourth information is a private key corresponding to the public key.

(Item A-8)

The confirmation method according to any one of Item A-1 to Item A-7, further comprising:

generating a random number; and

generating the first information based on the random number.

(Item A-9)

The confirmation method according to any one of Item A-1 to Item A-8, wherein

the to-be-confirmed apparatus includes an electricity accumulation apparatus, and
the confirmation apparatus includes a charging apparatus which is configured to be freely attached to and detached from the electricity accumulation apparatus of the to-be-confirmed apparatus and which charges the electricity accumulation apparatus.

(Item A-10)

The confirmation method according to any one of Item A-1 to Item A-9, further comprising:

receiving, by the to-be-confirmed apparatus, the third information from the confirmation apparatus;

generating, by the to-be-confirmed apparatus, the fifth information based on the third information and the fourth information; and

transmitting, by the to-be-confirmed apparatus, the fifth information which has been generated to the confirmation apparatus.

(Item A-11)

The confirmation method according to any one of Item A-1 or Item A-10, further comprising:

(i) obtaining the fourth information from a manufacturer or a transferor of the to-be-confirmed apparatus or from an issuer of the second information and the fourth information or (ii) obtaining the fourth information from a second external apparatus which is configured to be able to wirelessly communicate with the to-be-confirmed apparatus and which has confirmed that the to-be-confirmed apparatus is legitimate; and

storing the fourth information which has been obtained in a second storage apparatus arranged in the to-be-confirmed apparatus.

(Item A-12)

The confirmation method according to Item A-4, further comprising:

(i) obtaining the second information and the fourth information from a manufacturer or a transferor of the to-be-confirmed apparatus or from an issuer of the second information and the fourth information or (ii) obtaining the second information and the fourth information from a second external apparatus which is configured to be able to wirelessly communicate with the to-be-confirmed apparatus and which has confirmed that the to-be-confirmed apparatus is legitimate;

generating the thirteenth information by converting, based on the twelfth information, the second information which has been obtained;

transmitting the thirteenth information which has been generated to the confirmation apparatus; and

transmitting the second information as the eleventh information to the confirmation apparatus.

(Item A-13)

The confirmation method according to any one of Item A-1 to Item A-12, wherein

the confirmation apparatus is a housing apparatus which houses the to-be-confirmed apparatus as a to-be-housed apparatus, and

the housing apparatus has an attachment part to which the to-be-housed apparatus is attached, and

the confirmation method further comprises

deciding not to attach the to-be-housed apparatus to the attachment part, if the first information and the fifth information do not match, the sixth information and the seventh information do not match, or the first information and the eighth information do not match.

(Item A-14)

The confirmation method according to Item A-13, wherein

the housing apparatus is configured to be able to house at least one of a plurality of to-be-housed apparatuses including the to-be-housed apparatus,

the confirmation method further comprises:

obtaining joint use identification information for identifying the to-be-housed apparatus which can be jointly used by a plurality of customers, among the plurality of to-be-housed apparatuses;

determining whether or not the to-be-confirmed apparatus is the to-be-housed apparatus which can be jointly used by the plurality of customers, based on the joint use identification information, if the first information and the fifth information match, the sixth information and the seventh information match, or the first information and the eighth information match; and

deciding not to attach the to-be-housed apparatus to the attachment part, if the to-be-confirmed apparatus is determined not to be the to-be-housed apparatus which can be jointly used by the plurality of customers.

(Item A-15)

The confirmation method according to any one of Item A-1 to Item A-14, wherein

the confirmation apparatus is a first electric power apparatus having a first terminal, and

the to-be-confirmed apparatus is a second electric power apparatus having a second terminal configured to be able to be attached to the first terminal,

the confirmation method further comprises

deciding to prohibit or suppress output and input of electric power between the first electric power apparatus and the second electric power apparatus, if the first information and the fifth information do not match, the sixth information and the seventh information do not match, or the first information and the eighth information do not match.

(Item A-16)

A confirmation apparatus which confirms whether or not a to-be-confirmed apparatus is a legitimate apparatus, the confirmation apparatus comprising:

a third information generation unit which generates third information by converting first information based on second information;

a third information transmission unit which transmits the third information to the to-be-confirmed apparatus;

a response reception unit which receives, from the to-be-confirmed apparatus, (i) fifth information generated by the to-be-confirmed apparatus by inversely converting the third information based on fourth information paired with the second information or (ii) sixth information generated by the to-be-confirmed apparatus by performing information processing on the fifth information in accordance with a predetermined first algorithm; and

a comparison unit which (a) compares the first information with the fifth information if the fifth information is received, or (b) (i) compares seventh information to be generated by performing information processing on the first information in accordance with the first algorithm with the sixth information or (ii) compares the first information with eighth information to be generated by performing information processing on the sixth information in accordance with a predetermined second algorithm, if the sixth information is received.

(Item A-17)

An electricity accumulation apparatus comprising:

an electricity accumulation unit which accumulates electrical energy;

an electrical terminal for transmitting and receiving electric power to and from a first electric power apparatus which charges the electricity accumulation unit or uses electric power discharged by the electricity accumulation unit;

a storage unit which stores fourth information;

a third information obtainment unit which obtains third information from the first electric power apparatus;

a fifth information generation unit which generates fifth information by inversely converting the third information obtained by the third information obtainment unit, based on the fourth information stored in the storage unit; and

a response unit which transmits, to the first electric power apparatus, the fifth information, or sixth information to be generated by performing information processing on the fifth information in accordance with a predetermined first algorithm.

(Item A-18)

A confirmation system comprising:

the electricity accumulation apparatus according to Item A-17; and

an electric power apparatus having the confirmation apparatus according to Item A-16, wherein

the confirmation apparatus confirms that the electricity accumulation apparatus as a to-be-confirmed apparatus to be confirmed by the confirmation apparatus is a legitimate apparatus.

(Item A-19)

A program which causes a computer to execute the confirmation method according to any one of Item A-1 to Item A-8.

(Item A-20)

A computer-readable storage medium having stored thereon the program according to Item A-19.

(Item B-1)

A confirmation method for confirming, by a confirmation apparatus, whether or not a to-be-confirmed apparatus is a legitimate apparatus, the confirmation method comprising:

    generating third information by converting first information based on second information;

    transmitting the third information to the to-be-confirmed apparatus;

    receiving, from the to-be-confirmed apparatus, (i) fifth information generated by the to-be-confirmed apparatus by inversely converting the third information based on fourth information paired with the second information or (ii) sixth information generated by the to-be-confirmed apparatus by performing information processing on the fifth information in accordance with a predetermined first algorithm; and

    (a) comparing the first information with the fifth information if the fifth information is received, or (b) (i) comparing seventh information to be generated by performing information processing on the first information in accordance with the first algorithm with the sixth information or (ii) comparing the first information with eighth information to be generated by performing information processing on the sixth information in accordance with a second algorithm related to the first algorithm, if the sixth information is received, wherein

    the confirmation apparatus includes an electricity accumulation apparatus,

the electricity accumulation apparatus has:

    an electricity accumulation unit which accumulates electrical energy; and

    at least one of a storing unit which stores information or a computer which executes a program,

    the to-be-confirmed apparatus includes an electric power apparatus configured to be able to be electrically connected to the electricity accumulation apparatus of the confirmation apparatus, configured to be able to feed power to the electricity accumulation apparatus of the confirmation apparatus, and/or configured to be able to receive power from the electricity accumulation apparatus of the confirmation apparatus,

    the confirmation method comprises at least one of:

        (a) performing a first decision by deciding whether or not to permit reading processing in which the to-be-confirmed apparatus reads to-be-read information stored in the storing unit of the confirmation apparatus; or

        (b) performing a second decision by deciding whether or not to permit at least one processing of: writing processing in which the to-be-confirmed apparatus writes to-be-written information into the storing unit of the confirmation apparatus; modification processing in which the to-be-confirmed apparatus modifies to-be-modified information stored in the storing unit of the confirmation apparatus; or execution processing in which the to-be-confirmed apparatus causes the computer of the confirmation apparatus to execute a program,

    the performing the first decision has:

        (i) performing first prohibition by deciding to prohibit execution of the reading processing, if the first information and the fifth information do not match, the sixth information and the seventh information do not match, or the first information and the eighth information do not match; or

        (ii) performing first permission by deciding to permit execution of the reading processing, if the first information and the fifth information match, the sixth information and the seventh information match, or the first information and the eighth information match, and

the performing the second decision has:

(iii) performing second prohibition by deciding to prohibit execution of the at least one processing of the writing processing, the modification processing, or the execution processing, if the first information and the fifth information do not match, the sixth information and the seventh information do not match, or the first information and the eighth information do not match; or

(iv) performing second permission by deciding to permit execution of the at least one processing of the writing processing, the modification processing, or the execution processing, if the first information and the fifth information match, the sixth information and the seventh information match, or the first information and the eighth information match.

(Item B-2)

The confirmation method according to Item B-1, wherein

the to-be-confirmed apparatus is a housing apparatus which houses the confirmation apparatus as a to-be-housed apparatus,

the housing apparatus has an attachment part to which the to-be-housed apparatus is attached, and

the confirmation method further comprises:

(i) deciding not to attach the to-be-housed apparatus to the attachment part, if the first information and the fifth information do not match, the sixth information and the seventh information do not match, or the first information and the eighth information do not match; or

(ii) deciding to attach the to-be-housed apparatus to the attachment part, if the first information and the fifth information match, the sixth information and the seventh information match, or the first information and the eighth information match.

(Item B-3)

The confirmation method according to Item B-1 or Item B-2, further comprising:

(i) deciding to prohibit or suppress output and input of electric power between the electricity accumulation apparatus of the confirmation apparatus and the electric power apparatus of the to-be-confirmed apparatus, if the first information and the fifth information do not match, the sixth information and the seventh information do not match, or the first information and the eighth information do not match; or

(ii) deciding not to prohibit or suppress output and input of electric power between the electricity accumulation apparatus of the confirmation apparatus and the electric power apparatus of the to-be-confirmed apparatus, if the first information and the fifth information match, the sixth information and the seventh information match, or the first information and the eighth information match.

(Item B-4)

The confirmation method according to any one of Item B-1 to Item B-3, wherein

the storing unit of the confirmation apparatus stores charging and discharging history which associates (i) one or more pieces of equipment identification information for respectively identifying one or more pieces of equipment electrically connected to the electricity accumulation apparatus of the confirmation apparatus during a target period which is a period before the confirmation apparatus executes processing for confirming whether or not the to-be-confirmed apparatus is a legitimate apparatus, and (ii) information respectively indicating amounts of electric power outputted and inputted between the one or more pieces of equipment and the electricity accumulation apparatus of the confirmation apparatus during the target period, and

the confirmation method further comprises

transmitting the charging and discharging history from the confirmation apparatus to the to-be-confirmed apparatus if it is decided, in the performing the first permission, to permit the execution of the reading processing.

(Item B-5)

The confirmation method according to any one of Item B-1 to Item B-4, further comprising:

receiving, from the to-be-confirmed apparatus, eleventh information, thirteenth information generated by converting the eleventh information based on twelfth information, and the second information;

comparing fifteenth information to be generated by inversely converting the thirteenth information based on fourteenth information paired with the twelfth information with the eleventh information; and

confirming that the second information received from the to-be-confirmed apparatus is the second information which is legitimate, if the eleventh information and the fifteenth information match.

(Item B-6)

The confirmation method according to any one of Item B-1 to Item B-4, further comprising:

receiving, from the to-be-confirmed apparatus, eleventh information and thirteenth information generated by converting the eleventh information based on twelfth information;

comparing fifteenth information to be generated by inversely converting the thirteenth information based on fourteenth information paired with the twelfth information with the eleventh information; and

obtaining the eleventh information as the second information if the eleventh information and the fifteenth information match.

(Item B-7)

The confirmation method according to any one of Item B-1 to Item B-6, further comprising determining whether or not the to-be-confirmed apparatus is the legitimate apparatus, based on a result of comparing the first information and the fifth information, a result of comparing the sixth information and the seventh information, or a result of comparing the first information and the eighth information.

(Item B-8)

The confirmation method according to any one of Item B-1 to Item B-6, further comprising confirming that the to-be-confirmed apparatus is not legitimate or that the to-be-confirmed apparatus is illegitimate, if the first information and the fifth information do not match, the sixth information and the seventh information do not match, or the first information and the eighth information do not match.

(Item B-9)

A confirmation apparatus which confirms whether or not a to-be-confirmed apparatus is a legitimate apparatus, the confirmation apparatus comprising:

a third information generation unit which generates third information by converting first information based on second information;

a third information transmission unit which transmits the third information to the to-be-confirmed apparatus;

a response reception unit which receives, from the to-be-confirmed apparatus, (i) fifth information generated by the to-be-confirmed apparatus by inversely converting the third information based on fourth information paired with the second information or (ii) sixth information generated by the to-be-confirmed apparatus by performing information processing on the fifth information in accordance with a predetermined first algorithm; and

a comparison unit which (a) compares the first information with the fifth information if the fifth information is received, or (b) (i) compares seventh information to be generated by performing information processing on the first information in accordance with the first algorithm with the sixth information or (ii) compares the first information with eighth information to be generated by performing information processing on the sixth information in accordance with a second algorithm related to the first algorithm, if the sixth information is received, and

the confirmation apparatus includes an electricity accumulation apparatus,

the electricity accumulation apparatus has:

an electricity accumulation unit which accumulates electrical energy; and

at least one of a storing unit which stores information or a computer which executes a program,

the to-be-confirmed apparatus includes an electric power apparatus configured to be able to be electrically connected to the electricity accumulation apparatus of the confirmation apparatus, configured to be able to feed power to the electricity accumulation apparatus of the confirmation apparatus, and/or configured to be able to receive power from the electricity accumulation apparatus of the confirmation apparatus,

the confirmation apparatus comprises

an execution control unit which (a) decides whether or not to permit reading processing in which the to-be-confirmed apparatus reads to-be-read information stored in the storing unit of the confirmation apparatus, and/or (b) decides whether or not to permit at least one processing of: writing processing in which the to-be-confirmed apparatus writes to-be-written information into the storing unit of the confirmation apparatus; modification processing in which the to-be-confirmed apparatus modifies to-be-modified information stored in the storing unit of the confirmation apparatus; or execution processing in which the to-be-confirmed apparatus causes the computer of the confirmation apparatus to execute a program, and

the execution control unit:

(i) decides to prohibit execution of the reading processing, if the first information and the fifth information do not match, the sixth information and the seventh information do not match, or the first information and the eighth information do not match, or

(ii) decides to permit execution of the reading processing, if the first information and the fifth information match, the sixth information and the seventh information match, or the first information and the eighth information match; and/or

(iii) decides to prohibit execution of the at least one processing of the writing processing, the modification processing, or the execution processing, if the first information and the fifth information do not match, the sixth information and the seventh information do not match, or the first information and the eighth information do not match, or

(iv) decides to permit execution of the at least one processing of the writing processing, the modification processing, or the execution processing, if the first information and the fifth information match, the sixth information and the seventh information match, or the first information and the eighth information match.

(Item B-10)

An electricity accumulation apparatus comprising:

the confirmation apparatus according to Item B-9; and

an electricity accumulation unit which accumulates electrical energy.

(Item B-11)

A program which causes a computer to execute the confirmation method according to any one of Item B-1 to Item B-8.

(Item B-12)

A computer-readable recording medium having recorded thereon the program according to Item B-11.

(Item C-1)

A confirmation method for confirming, by a confirmation apparatus, whether or not a to-be-confirmed apparatus is a legitimate apparatus, the confirmation method comprising:

transmitting first verification information to the to-be-confirmed apparatus;

generating third verification information by converting the first verification information based on second verification information;

receiving, from the to-be-confirmed apparatus, (i) fifth verification information generated by the to-be-confirmed apparatus by converting the first verification information based on fourth verification information satisfying a first mathematical relationship with the second verification information or (ii) sixth verification information derived by the to-be-confirmed apparatus from the first verification information and the fourth verification information or from the fifth verification information by using a second mathematical relationship to be satisfied by the third verification information and the fifth verification information if the to-be-confirmed apparatus is a legitimate apparatus; and

determining whether or not the to-be-confirmed apparatus is a legitimate apparatus, based on the third verification information and on the fifth verification information or the sixth verification information, wherein

the determining includes:

(a) determining whether or not the third verification information and the fifth verification information satisfy the second mathematical relationship, if the fifth verification information is received; or

(b) determining whether or not the third verification information and the sixth verification information match, if the sixth verification information is received, and

the second mathematical relationship is determined based on the first mathematical relationship.

(Item C-2)

The confirmation method according to Item C-1, wherein

the confirmation apparatus is a first electric power apparatus having a first terminal,

the to-be-confirmed apparatus is a second electric power apparatus having a second terminal configured to be able to be attached to the first terminal, and

the confirmation method further comprises

deciding to prohibit or suppress output and input of electric power between the first electric power apparatus and the second electric power apparatus, if the third verification information and the fifth verification information are determined not to satisfy the second mathematical relationship, or if the third verification information and the sixth verification information are determined not to match.

(Item C-3)

The confirmation method according to Item C-1, further comprising:

receiving, from the to-be-confirmed apparatus, the second verification information encrypted using a first private key; and

decrypting the second verification information encrypted using the first private key, using a first public key corresponding to the first private key.

(Item C-4)

The confirmation method according to Item C-1, further comprising:

obtaining, from the to-be-confirmed apparatus, the second verification information signed using a first private key; and

verifying the signature by using a first public key corresponding to the first private key.

(Item C-5)

A confirmation apparatus which confirms whether or not a to-be-confirmed apparatus is a legitimate apparatus, the confirmation apparatus comprising:

a first verification information transmission unit which transmits first verification information to the to-be-confirmed apparatus;

a third verification information generation unit which generates third verification information by converting the first verification information based on second verification information;

a response reception unit which receives, from the to-be-confirmed apparatus, (i) fifth verification information generated by the to-be-confirmed apparatus by converting the first verification information based on fourth verification information satisfying a first mathematical relationship with the second verification information or (ii) sixth verification information derived by the to-be-confirmed apparatus from the first verification information and the fourth verification information or from the fifth verification information by using a second mathematical relationship to be satisfied by the third verification information and the fifth verification information if the to-be-confirmed apparatus is a legitimate apparatus; and

a determination unit which determines whether or not the to-be-confirmed apparatus is a legitimate apparatus, based on the third verification information and on the fifth verification information or the sixth verification information, wherein

the determination unit:

(a) determines whether or not the third verification information and the fifth verification information satisfy the second mathematical relationship, if the fifth verification information is received; or

(b) determines whether or not the third verification information and the sixth verification information match, if the sixth verification information is received.

(Item C-6)

An electricity accumulation apparatus comprising:

an electricity accumulation unit which accumulates electrical energy; and

an electrical terminal for transmitting and receiving electric power to and from a first electric power apparatus which charges the electricity accumulation unit or uses electric power discharged by the electricity accumulation unit, wherein

the electricity accumulation apparatus further comprises:

a storage unit which stores fourth verification information;

a first verification information obtainment unit which obtains first verification information from the first electric power apparatus; and

a response unit which generates fifth verification information by converting the first verification information obtained by the first verification information obtainment unit, based on the fourth verification information stored in the storage unit, or generates sixth verification information obtained by converting the first verification information, based on second verification information satisfying a first mathematical relationship with the fourth verification information.

EXPLANATION OF REFERENCES

12: electric power system, 14: communication network, 20: mobile battery, 30: electric motorcycle, 40: user, 42: communications terminal, 50: key issuer, 52: communications terminal, 72: authentication private key, 74: authentication public key, 82: signature private key, 84: signature verification public key, 92: private key, 94: public key, 100: battery management system, 120: battery replacement machine, 122: housing unit, 124: slot, 126: communication unit, 128: communication interface, 140: management server, 172: authentication private key, 174: authentication public key, 182: signature private key, 184: signature verification public key, 192: private key, 194: public key, 212: electric power connector, 214: communication connector, 220: electricity accumulation unit, 230: control unit, 232: authentication handling unit, 240: sensing unit, 250: storage unit, 252: battery ID storage unit, 254: authentication private key storage unit, 310: communication line, 312: uninterruptible power system, 314: router, 320: enclosure, 330: mounted equipment, 332: sensing unit, 334: setting storage unit, 336: control unit, 360: enclosure, 370: mounted equipment, 372: user interface, 374: user identification unit, 376: control unit, 378: battery authentication unit, 502: authentication code, 504: hash value, 506: hash value, 512: challenge code, 516: response code, 520: storage unit, 522: public key database, 524: whitelist, 530: battery ID obtainment unit, 540: authentication code generation unit, 550: verification code generation unit, 552: hash function, 560: challenge code generation unit, 562: challenge code transmission unit, 570: response code obtainment unit, 582: comparison unit, 584: determination unit, 620: request reception unit, 630: ID transmission unit, 640: challenge code obtainment unit, 650: challenge code decryption unit, 660: response code generation unit, 662: hash function, 670: response code transmission unit, 710: breaker, 712: electric power line, 714: AC/DC power, 716: distributor, 718: electric power line, 730: main control board, 732: communication hub, 734: communication line, 742: temperature regulation unit, 744: buzzer, 746: sensing unit, 748: maintenance door, 760: AC/DC charger, 762: electric power connector, 770:

slot control board, 772: communication connector, 774: drive unit, 776: shutter, 778: locking unit, 782: temperature regulation unit, 784: state display unit, 786: sensing unit, 814: AC/DC power, 816: service outlet, 820: CPU board, 830: Ethernet interface, 842: NFC reader, 844: camera, 852: touch panel, 854: display, 856: speaker, 920: mobile battery, 955: authentication public key storage unit, 956 : signature private key storage unit, 957: signature verification public key storage unit, 1012: public key transmission unit, 1014: public key obtainment unit, 1352: public key database, 1354: whitelist, 1378: station authentication unit, 1432: authentication handling unit, 1702: authentication code, 1704: hash value, 1706: hash value, 1712: challenge code, 1716: response code, 1730: station ID obtainment unit, 1752: hash function, 1862: hash function, 2012: station authentication public key transmission unit, 2014: station authentication public key obtainment unit, 2162: station signature verification public key database, 2170: certificate storage unit, 2190: electronic certificate, 2192: code, 2194: code, 2352: station ID storage unit, 2354: station authentication private key storage unit, 2355: station authentication public key storage unit, 2356: station signature private key storage unit, 2357: station signature verification public key storage unit, 2362: signature verification public key database, 2370: certificate storage unit, 2390: electronic certificate, 2392: code, 2394: code, 2492: authentication public key, 2502: authentication code, 2692: authentication public key, 2702: authentication code, 2832: history management unit, 2834: access control unit, 2836: request execution unit, 2838: memory, 2852: charging and discharging history storage unit, 2854: authentication history storage unit, 2856: access history storage unit, 2858: firmware storage unit, 2872: data writing unit, 2874: program execution unit, 2876: data reading unit, 2878: history management unit, 2954: access history, 2956: charging and discharging history, 2958: authentication history, 3212: mathematical relationship, 3214: mathematical relationship, 3220: authentication code generation unit, 3222: authentication code, 3230: verification code generation unit, 3232: verification code, 3240: response code generation unit, 3242: response code, 3250: verification unit, 3310: first arithmetic operation unit, 3320: second arithmetic operation unit, 3330: third arithmetic operation unit, 3332: arithmetic operation result, 3350: determination unit, 3440: fourth arithmetic operation unit, 3720: product certificate, 3722: ICID, 3724: electronic signature, 3730: IC manufacturer certificate, 3732: IC manufacturer ID, 3734: electronic signature, 3740: root certificate, 3744: electronic signature, 3812: IC manufacturer, 3814: root certification authority, 3912: IC manufacturer, 3914: root certification authority, 3920: product certificate, 3922: ICID, 3924: electronic signature, 3930: IC manufacturer certificate, 3932: IC manufacturer ID, 3934: electronic signature, 3940: root certificate, 3944: electronic signature, 5000: computer, 5001: DVD-ROM, 5010: host controller, 5012: CPU, 5014: RAM, 5016: GPU, 5018: display device, 5020:

input/output controller, 5022: communication interface, 5024: hard disk drive, 5026: DVD-ROM drive, 5030: ROM, 5040: input/output chip, and 5042: keyboard.

## Claims

1. An information processing method comprising:

   performing first confirmation by confirming, by a first apparatus, whether or not a second apparatus is a legitimate apparatus; and
   performing second confirmation by confirming, by the second apparatus, whether or not the first apparatus is a legitimate apparatus.

2. The information processing method according to claim 1, wherein
   the performing the second confirmation has confirming, by the second apparatus confirmed, in the performing the first confirmation, to be a legitimate apparatus, whether or not the first apparatus which has confirmed, in the performing the first confirmation, that the second apparatus is a legitimate apparatus is a legitimate apparatus.

3. The information processing method according to claim 1 or claim 2, further comprising
   updating to-be-updated information stored in a storing unit of the second apparatus, based on an update request transmitted by the first apparatus, if the first apparatus is confirmed, in the performing the second confirmation, to be a legitimate apparatus.

4. The information processing method according to claim 3, wherein
   the update request includes:

   control software or a control program used to control the second apparatus;
   update software or an update program for updating the control software or the control program; and/or
   an instruction which causes a computer of the second apparatus to execute the update software or the update program.

5. The information processing method according to claim 3 or claim 4, wherein
   the to-be-updated information is control software or a control program used to control the second apparatus.

6. The information processing method according to any one of claim 3 to claim 5, further comprising performing first storage by storing, by the first apparatus, second apparatus identification information for identifying the second apparatus, if the first apparatus, which has transmitted the update request, cannot confirm that processing of updating the to-be-updated information based on the update request has ended normally.

7. The information processing method according to any one of claim 3 to claim 6, further comprising performing second storage by storing, by the second apparatus, first apparatus identification information for identifying the first apparatus which has transmitted the update request.

8. The information processing method according to any one of claim 1 to claim 7, further comprising reading, into the first apparatus, to-be-read information stored in a storing unit of the second apparatus, if the first apparatus is confirmed, in the performing the second confirmation, to be a legitimate apparatus.

9. The information processing method according to any one of claim 1 to claim 8, wherein
   the performing the first confirmation has:

   generating, by the first apparatus, third information by converting first information based on second information;
   transmitting, by the first apparatus, the third information to the second apparatus;
   receiving, by the first apparatus, from the second apparatus, (i) fifth information generated by the second apparatus by inversely converting the third information based on fourth information paired with the second information or (ii) sixth information generated by the second apparatus by performing information processing on the fifth information in accordance with a predetermined first algorithm; and
   (a) comparing, by the first apparatus, the first information with the fifth information if the fifth information is received; or (b) (i) comparing, by the first apparatus, seventh information to be generated by performing information processing on the first information in accordance with the first algorithm with the sixth information or (ii) comparing, by the first apparatus, the first information with eighth information to be generated by performing information processing on the sixth information in accordance with a second algorithm related to the first algorithm, if the sixth information is received.

10. The information processing method according to any one of claim 1 to claim 9, wherein
    the performing the second confirmation has:

    generating, by the second apparatus, third information by converting first information based on second information;

transmitting, by the second apparatus, the third information to the first apparatus;

receiving, by the second apparatus, from the first apparatus, (i) fifth information generated by the first apparatus by inversely converting the third information based on fourth information paired with the second information or (ii) sixth information generated by the first apparatus by performing information processing on the fifth information in accordance with a predetermined first algorithm; and

(a) comparing, by the second apparatus, the first information with the fifth information if the fifth information is received; or (b) (i) comparing, by the second apparatus, seventh information to be generated by performing information processing on the first information in accordance with the first algorithm with the sixth information or (ii) comparing, by the second apparatus, the first information with eighth information to be generated by performing information processing on the sixth information in accordance with a second algorithm related to the first algorithm, if the sixth information is received.

11. The information processing method according to any one of claim 1 to claim 9, wherein the performing the second confirmation has:

obtaining, by the second apparatus, from the first apparatus, first apparatus identification information for identifying the first apparatus; and collating, by the second apparatus, one or more pieces of legitimate apparatus identification information for respectively identifying one or more legitimate apparatuses with the first apparatus identification information obtained from the first apparatus.

12. The information processing method according to any one of claim 1 to claim 11, wherein

the second apparatus includes an electricity accumulation apparatus which accumulates electrical energy, and the first apparatus includes:

a housing apparatus which houses the second apparatus; or an electric power apparatus configured to be able to be electrically connected to the electricity accumulation apparatus of the second apparatus, configured to be able to feed power to the electricity accumulation apparatus of the second apparatus, or configured to be able to receive power from the electricity accumulation apparatus of the second apparatus.

13. An information processing system comprising a first apparatus and a second apparatus, wherein

the first apparatus has first confirmation unit which confirms whether or not the second apparatus is a legitimate apparatus, the second apparatus has second confirmation unit which confirms whether or not the first apparatus is a legitimate apparatus, and if the first confirmation unit confirms that the second apparatus is a legitimate apparatus, the second confirmation unit confirms whether or not the first apparatus is a legitimate apparatus.

14. An information processing method executed by an information processing apparatus configured to be able to transmit and receive information to and from another information processing apparatus, the information processing method comprising:

confirming whether or not the another information processing apparatus is a legitimate apparatus; receiving, from the another information processing apparatus, confirmation information indicating that the another information processing apparatus is executing processing for confirming whether or not the information processing apparatus is a legitimate apparatus; and transmitting, to the another information processing apparatus, certification information indicating that the information processing apparatus is a legitimate apparatus, if the confirmation information is received in the receiving the confirmation information.

15. The information processing method according to claim 14, further comprising:
(i) executing at least one of: processing of writing to-be-written information into a storing unit of the another information processing apparatus; processing of modifying to-be-modified information stored in the storing unit; or processing of executing a program running on the another information processing apparatus; or (ii) causing the another information processing apparatus to execute at least one of: the processing of writing the to-be-written information; the processing of modifying the to-be-modified information; or processing of executing the program.

16. The information processing method according to claim 14, further comprising:

receiving, from the another information processing apparatus, an execution request requesting execution of at least one of: processing of writing to-be-written information into a storing unit of the information processing apparatus; processing of modifying to-be-modified information stored in the storing unit; or processing of executing a program running on the information processing apparatus; and
determining execution by determining, if the execution request is received in the receiving the execution request, whether or not to execute processing requested by the execution request, based on a result of confirmation in the confirming, wherein
the determining the execution has:

> (i) permitting execution of the processing requested by the execution request, if the execution request is received in the receiving the execution request and the another information processing apparatus is confirmed, in the confirming, to be a legitimate apparatus; and/or
> (ii) prohibiting execution of the processing requested by the execution request, if the execution request is received in the receiving the execution request and the another information processing apparatus is not confirmed, in the confirming, to be a legitimate apparatus.

17. The information processing method according to any one of claim 14 to claim 16, wherein
the confirming is executed before the receiving the confirmation information or is executed after the receiving the confirmation information.

18. The information processing method according to any one of claim 14 to claim 17, wherein
the confirming whether or not the another information processing apparatus is a legitimate apparatus has:

> transmitting first verification information to the another information processing apparatus;
> generating third verification information by converting the first verification information based on second verification information;
> receiving, from the another information processing apparatus, (i) fifth verification information generated by the another information processing apparatus by converting the first verification information based on fourth verification information satisfying a first mathematical relationship with the second verification information or (ii) sixth verification information derived by the another information processing apparatus from the first verification information and the fourth verification information or from the fifth verification information by using a second mathematical relationship to be satisfied by the third verification information and the fifth verification information if the another information processing apparatus is a legitimate apparatus; and
determining whether or not the another information processing apparatus is a legitimate apparatus, based on the third verification information and on the fifth verification information or the sixth verification information,
the determining includes:

> (a) determining whether or not the third verification information and the fifth verification information satisfy the second mathematical relationship, if the fifth verification information is received; or
> (b) determining whether or not the third verification information and the sixth verification information match, if the sixth verification information is received, and

the second mathematical relationship is determined based on the first mathematical relationship.

19. The information processing method according to any one of claim 14 to claim 18, wherein

> the information processing apparatus stores a pair of a first private key and a first public key,
> the another information processing apparatus stores a pair of a second private key and a second public key,
> the receiving the confirmation information has receiving the second public key from the another information processing apparatus,
> transmitting certification information has transmitting the first public key to the another information processing apparatus, and
> the confirming has:
>
>> generating a common key based on the first private key and the second public key; and
>> transmitting, to the another information processing apparatus, information encrypted using the common key.

20. The information processing method according to any one of claim **14** to claim 18, wherein

> the information processing apparatus stores a pair of a first private key and a first public key,
> the another information processing apparatus stores a pair of a second private key and a second public key,
> the receiving the confirmation information has receiving the second public key from the another information processing apparatus,
> transmitting certification information has:

generating a common key based on the first private key and the second public key; and transmitting, to the another information processing apparatus, information encrypted using the common key, and

the confirming has receiving, from the another information processing apparatus, information indicating that the information encrypted using the common key has been received by the another information processing apparatus.

21. The information processing method according to claim 19 or claim 20, wherein

the first private key and the first public key are a pair of a private key and a public key used in elliptic curve cryptography,

the second private key and the second public key are a pair of a private key and a public key used in elliptic curve cryptography,

the first private key is one of a pair of parameters representing a specific elliptic curve,

the second private key is another of the pair of parameters,

the first public key is generated based on a base point, which is a specific point on the specific elliptic curve, and the first private key,

the second public key is generated based on the base point and the second private key,

the information processing apparatus further stores information indicating the base point, and

the another information processing apparatus further stores information indicating the base point.

22. An information processing apparatus configured to be able to transmit and receive information to and from another information processing apparatus, the information processing apparatus comprising:

a confirmation unit which confirms whether or not the another information processing apparatus is a legitimate apparatus;

a confirmation information reception unit which receives, from the another information processing apparatus, confirmation information indicating that the another information processing apparatus is executing processing for confirming whether or not the information processing apparatus is a legitimate apparatus; and

a certification information transmission unit which, if the confirmation information reception unit receives the confirmation information, transmits, to the another information processing apparatus, certification information indicating that the information processing apparatus is a legitimate apparatus.

23. An electricity accumulation apparatus comprising:

the information processing apparatus according to claim 22; and

an electricity accumulation unit which accumulates electrical energy.

24. The information processing method according to claim 9 or claim 10, wherein

the first apparatus is an electricity accumulation apparatus having: an electricity accumulation unit which accumulates electrical energy; and at least one of a storing unit which stores information or a computer which executes a program,

the second apparatus is an electric power apparatus configured to be able to be electrically connected to the electricity accumulation apparatus, configured to be able to feed power to the electricity accumulation apparatus, and/or configured to be able to receive power from the electricity accumulation apparatus,

the information processing method comprises at least one of:

(a) performing a first decision by deciding whether or not to permit reading processing in which the electric power apparatus reads to-be-read information stored in the storing unit of the electricity accumulation apparatus; or

(b) performing a second decision by deciding whether or not to permit at least one processing of: writing processing in which the electric power apparatus writes to-be-written information into the storing unit of the electricity accumulation apparatus; modification processing in which the electric power apparatus modifies to-be-modified information stored in the storing unit of the electricity accumulation apparatus; or execution processing in which the electric power apparatus causes the computer of the electricity accumulation apparatus to execute a program,

the performing the first decision has:

(i) performing first prohibition by deciding to prohibit execution of the reading processing, if the first information and the fifth information do not match, the sixth information and the seventh information do not match, or the first information and the eighth information do not match; or

(ii) performing first permission by deciding to permit execution of the reading processing, if the first information and the fifth information match, the sixth information and the seventh information match, or the first information and the eighth information match, and

the performing the second decision has:

(iii) performing second prohibition by deciding to prohibit execution of the at least one processing of the writing processing, the modification processing, or the execution processing, if the first information and the fifth information do not match, the sixth information and the seventh information do not match, or the first information and the eighth information do not match; or
(iv) performing second permission by deciding to permit execution of the at least one processing of the writing processing, the modification processing, or the execution processing, if the first information and the fifth information match, the sixth information and the seventh information match, or the first information and the eighth information match.

25. The information processing method according to claim 24, wherein

the electric power apparatus is a housing apparatus which houses the electricity accumulation apparatus,
the housing apparatus has an attachment part to which the electricity accumulation apparatus is attached, and
the information processing method further comprises:

(i) deciding not to attach the electricity accumulation apparatus to the attachment part, if the first information and the fifth information do not match, the sixth information and the seventh information do not match, or the first information and the eighth information do not match; or
(ii) deciding to attach the electricity accumulation apparatus to the attachment part, if the first information and the fifth information match, the sixth information and the seventh information match, or the first information and the eighth information match.

26. The information processing method according to claim 24 or claim 25, further comprising:

(i) deciding to prohibit or suppress output and input of electric power between the electricity accumulation apparatus and the electric power apparatus, if the first information and the fifth information do not match, the sixth information and the seventh information do not match, or the first information and the eighth information do not match; or
(ii) deciding not to prohibit or suppress output and input of electric power between the electricity accumulation apparatus and the electric power apparatus, if the first information and the fifth information match, the sixth information and the seventh information match, or the first information and the eighth information match.

27. The information processing method according to any one of claim 24 to claim 26, wherein

the storing unit of the electricity accumulation apparatus stores charging and discharging history which associates (i) one or more pieces of equipment identification information for respectively identifying one or more pieces of equipment electrically connected to the electricity accumulation apparatus during a target period which is a period before the electricity accumulation apparatus executes processing for confirming whether or not the electric power apparatus is a legitimate apparatus, and (ii) information respectively indicating amounts of electric power outputted and inputted between the one or more pieces of equipment and the electricity accumulation apparatus during the target period, and
the information processing method further comprises
transmitting the charging and discharging history from the electricity accumulation apparatus to the electric power apparatus if it is decided, in the performing the first permission, to permit the execution of the reading processing.

28. The information processing method according to any one of claim 24 to claim 27, further comprising:

receiving, from the electric power apparatus, eleventh information, thirteenth information generated by converting the eleventh information based on twelfth information, and the second information;
comparing the eleventh information with fifteenth information to be generated by inversely converting the thirteenth information based on fourteenth information paired with the twelfth information; and
confirming that the second information received from the electric power apparatus is the second information which is legitimate, if the eleventh information and the fifteenth information match.

**29.** The information processing method according to any one of claim 24 to claim 28, further comprising:

receiving, from the electric power apparatus, eleventh information, and thirteenth information generated by converting the eleventh information based on twelfth information;

comparing the eleventh information with fifteenth information to be generated by inversely converting the thirteenth information based on fourteenth information paired with the twelfth information; and

obtaining the eleventh information as the second information if the eleventh information and the fifteenth information match.

**30.** The information processing method according to any one of claim 24 to claim 29, further comprising determining whether or not the electric power apparatus is a legitimate apparatus, based on a result of comparing the first information and the fifth information, a result of comparing the sixth information and the seventh information, or a result of comparing the first information and the eighth information.

**31.** The information processing method according to any one of claim 24 to claim 29, further comprising confirming that the electric power apparatus is not legitimate or that the electric power apparatus is illegitimate, if the first information and the fifth information do not match, the sixth information and the seventh information do not match, or the first information and the eighth information do not match.

**32.** An information processing apparatus which confirms whether or not an electric power apparatus is a legitimate apparatus, wherein

the information processing apparatus comprises an electricity accumulation apparatus having: an electricity accumulation unit which accumulates electrical energy; and at least one of a storing unit which stores information or a computer which executes a program,

the electric power apparatus is an apparatus configured to be able to be electrically connected to the electricity accumulation apparatus, an apparatus configured to be able to feed power to the electricity accumulation apparatus, and/or an apparatus configured to be able to receive power from the electricity accumulation apparatus,

the information processing apparatus further comprises:

a third information generation unit which generates third information by converting first information based on second information;

a third information transmission unit which transmits the third information to the electric power apparatus;

a response reception unit which receives, from the electric power apparatus, (i) fifth information generated by the electric power apparatus by inversely converting the third information based on fourth information paired with the second information or (ii) sixth information generated by the electric power apparatus by performing information processing on the fifth information in accordance with a predetermined first algorithm;

a comparison unit which (a) compares the first information with the fifth information if the fifth information is received, or (b) (i) compares seventh information to be generated by performing information processing on the first information in accordance with the first algorithm with the sixth information or (ii) compares the first information with eighth information to be generated by performing information processing on the sixth information in accordance with a second algorithm related to the first algorithm, if the sixth information is received, and

an execution control unit which (c) decides whether or not to permit reading processing in which the electric power apparatus reads to-be-read information stored in the storing unit of the electricity accumulation apparatus, and/or (d) decides whether or not to permit at least one processing of: writing processing in which the electric power apparatus writes to-be-written information into the storing unit of the electricity accumulation apparatus; modification processing in which the electric power apparatus modifies to-be-modified information stored in the storing unit of the electricity accumulation apparatus; or execution processing in which the electric power apparatus causes the computer of the electricity accumulation apparatus to execute a program, and

the execution control unit:

(i) decides to prohibit execution of the reading processing, if the first information and the fifth information do not match, the sixth information and the seventh information do not match, or the first information and the eighth information do not match, or

(ii) decides to permit execution of the reading processing, if the first information and the fifth information match, the sixth information and the seventh information match, or the first information and the eighth information match; and/or

(iii) decides to prohibit execution of the at least one processing of the writing processing, the modification processing, or the execution processing, if the first information and the fifth information do not match, the sixth information and the seventh information do not match, or the first information and the eighth information do not match, or

(iv) decides to permit execution of the at least one processing of the writing processing, the modification processing, or the execution processing, if the first information and the fifth information match, the sixth information and the seventh information match, or the first information and the eighth information match.

33. A program which causes a computer to execute the information processing method according to any one of claim 1 to claim 12, the information processing method according to any one of claim 14 to claim 21, or the information processing method according to any one of claim 24 to claim 31.

34. A computer-readable recording medium having recorded thereon the program according to claim 33.

FIG.1

20

**MOBILE BATTERY**

250

| ELECTRIC POWER CONNECTOR | 212 |

| COMMUNICATION CONNECTOR | 214 |

| ELECTRICITY ACCUMULATION UNIT | 220 |

| CONTROL UNIT | 230 |

| AUTHENTICATION HANDLING UNIT | 232 |

| SENSING UNIT | 240 |

**STORAGE UNIT**

| BATTERY ID STORAGE UNIT | 252 |

| AUTHENTICATION PRIVATE KEY STORAGE UNIT | 254 |

*FIG.2*

120           12        312        314        14

| UNINTERRUPTIBLE POWER SYSTEM | ROUTER |

HOUSING UNIT

122

HOUSING UNIT   320

ENCLOSURE   330

MOUNTED EQUIPMENT

| SLOT | 124 |
| SENSING UNIT | 332 |
| SETTING STORAGE UNIT | 334 |
| CONTROL UNIT | 336 |

126

122

310

COMMUNICATION UNIT   360

ENCLOSURE   370

MOUNTED EQUIPMENT

| COMMUNICATION INTERFACE | 128 |
| USER INTERFACE | 372 |
| USER IDENTIFICATION UNIT | 374 |
| CONTROL UNIT | 376 |
| BATTERY AUTHENTICATION UNIT | 378 |

*FIG.3*

FIG.4

378

FIG.5

232

ID TRANSMISSION
REQUEST

620
REQUEST RECEPTION UNIT

630
ID TRANSMISSION UNIT

AUTHENTICATION
RESPONSE
REQUEST

640
CHALLENGE CODE
OBTAINMENT UNIT

650
CHALLENGE CODE
DECRYPTION UNIT

670
RESPONSE CODE
TRANSMISSION UNIT

RESPONSE CODE

506

660
RESPONSE CODE
GENERATION UNIT

662
HASH FUNCTION

HASH VALUE OF
AUTHENTICATION
CODE

516

512

72

502

CHALLENGE CODE   DECRYPT   AUTHENTICATION CODE

FIG.6

<u>330</u>

FIG.7

<u>370</u>

*FIG.8*

920

| MOBILE BATTERY | | |
|---|---|---|

ELECTRIC POWER CONNECTOR ～212

COMMUNICATION CONNECTOR ～214

ELECTRICITY ACCUMULATION UNIT ～220

CONTROL UNIT ～230

AUTHENTICATION HANDLING UNIT ～232

SENSING UNIT ～240

250

STORAGE UNIT

BATTERY ID STORAGE UNIT ～252

72 AUTHENTICATION PRIVATE KEY STORAGE UNIT ～254

74 AUTHENTICATION PUBLIC KEY STORAGE UNIT ～955

82 SIGNATURE PRIVATE KEY STORAGE UNIT ～956

84 SIGNATURE VERIFICATION PUBLIC KEY STORAGE UNIT ～957

*FIG.9*

PUBLIC KEY TRANSMISSION UNIT 1012     232

PUBLIC KEY OBTAINMENT UNIT 1014     378

S1020    TRANSMIT START-UP SIGNAL

S1022    START UP

S1024    REQUEST TRANSMISSION OF BATTERY ID AND PUBLIC KEY

S1030    ENCRYPT AUTHENTICATION PUBLIC KEY 74 BY USING SIGNATURE PRIVATE KEY 82

S1032    TRANSMIT BATTERY ID, AUTHENTICATION PUBLIC KEY 74 (PLAINTEXT), AND ENCRYPTED AUTHENTICATION PUBLIC KEY 74

S1040    USE SIGNATURE VERIFICATION PUBLIC KEY 84 TO DECRYPT AUTHENTICATION PUBLIC KEY 74 ENCRYPTED WITH SIGNATURE PRIVATE KEY 82

S1042    COMPARE PLAINTEXT AUTHENTICATION PUBLIC KEY 74 WITH DECRYPTED AUTHENTICATION PUBLIC KEY 74

S1044    STORE AUTHENTICATION PUBLIC KEY 74 IF BOTH MATCH

END

END

*FIG.10*

PUBLIC KEY TRANSMISSION UNIT 1012    232

PUBLIC KEY OBTAINMENT UNIT 1014    378

S1020
TRANSMIT START-UP SIGNAL

S1022
START UP

REQUEST TRANSMISSION OF BATTERY ID AND PUBLIC KEY (CERTIFICATE)    S1024

S1030
ENCRYPT AUTHENTICATION PUBLIC KEY 74 BY USING SIGNATURE PRIVATE KEY 82

REQUEST CERTIFICATION AUTHORITY WHICH HAS ISSUED ELECTRONIC CERTIFICATE OF SIGNATURE VERIFICATION PUBLIC KEY 84 TO CONFIRM VALIDITY OF ELECTRONIC SIGNATURE    S1134

S1132
TRANSMIT BATTERY ID, ELECTRONIC CERTIFICATE OF AUTHENTICATION PUBLIC KEY 74 (INCLUDING PLAINTEXT OF AUTHENTICATION PUBLIC KEY 74 AND ENCRYPTED AUTHENTICATION PUBLIC KEY 74), AND ELECTRONIC CERTIFICATE OF SIGNATURE VERIFICATION PUBLIC KEY 84

USE SIGNATURE VERIFICATION PUBLIC KEY 84 TO DECRYPT AUTHENTICATION PUBLIC KEY 74 ENCRYPTED WITH SIGNATURE PRIVATE KEY 82    S1040

COMPARE PLAINTEXT AUTHENTICATION PUBLIC KEY 74 WITH DECRYPTED AUTHENTICATION PUBLIC KEY 74    S1042

STORE AUTHENTICATION PUBLIC KEY 74 IF BOTH MATCH    S1044

END

END

FIG.11

| MOBILE BATTERY 20 | | BATTERY REPLACEMENT MACHINE 120 |
|---|---|---|

STORE AUTHENTICATION PUBLIC KEY 174

STORE AUTHENTICATION PUBLIC KEY 74 — S1214

S1212

TRANSMIT START-UP SIGNAL — S420

START UP

S422

AUTHENTICATE MOBILE BATTERY 20 — S1230

DETERMINE WHETHER OR NOT REPLACEMENT AND/OR CHARGING IS POSSIBLE — S450

S1250

REQUEST ACCESS TO DATA — S1240

AUTHENTICATE BATTERY STATION 120

DECIDE WHETHER OR NOT TO PERMIT ACCESS

S1252

ACCESS DATA OF MOBILE BATTERY 20 — S1260

STORE ACCESS HISTORY

EXECUTE REPLACEMENT AND/OR CHARGING — S1270

END

S1254

END

FIG.12

FIG.13

FIG.14

S1230

MOBILE BATTERY 20

BATTERY REPLACEMENT MACHINE 120

S424 — REQUEST TRANSMISSION OF BATTERY ID

S426 — TRANSMIT BATTERY ID

S430 — GENERATE AUTHENTICATION CODE AND VERIFICATION CODE

S434 — DECRYPT AUTHENTICATION CODE

74 — ENCRYPT
AUTHENTICATION CODE
HASH
VERIFICATION CODE
CHALLENGE CODE

CHALLENGE CODE
* * * *
72 — DECRYPT
AUTHENTICATION CODE

S432 — GENERATE AND TRANSMIT CHALLENGE CODE

HASH
RESPONSE CODE

S438 — COMPARE RESPONSE CODE WITH VERIFICATION CODE

S440 — DETERMINE WHETHER OR NOT PRODUCT IS LEGITIMATE

S436 — GENERATE AND TRANSMIT RESPONSE CODE

END

END

FIG.15

S1250

FIG.16

1378

| | | | |
|---|---|---|---|

STATION ID OBTAINMENT UNIT
1730

AUTHENTICATION CODE GENERATION UNIT
540

AUTHENTICATION CODE
1702

VERIFICATION CODE GENERATION UNIT
1752
HASH FUNCTION
550

HASH VALUE OF AUTHENTICATION CODE
1704

COMPARISON UNIT
582

DETERMINATION UNIT
584

250
1352 1354
STORAGE UNIT

AUTHENTICATION CODE
1702

CHALLENGE CODE GENERATION UNIT
560

AUTHENTICATION CODE
1702
174
CHALLENGE CODE
1712

CHALLENGE CODE TRANSMISSION UNIT
562

HASH VALUE OF AUTHENTICATION CODE
1706

RESPONSE CODE OBTAINMENT UNIT
570 1706

RESPONSE CODE
1716
HASH VALUE OF AUTHENTICATION CODE
1706

*FIG.17*

<u>1432</u>

FIG.18

| MOBILE BATTERY 20 | | BATTERY REPLACEMENT MACHINE 120 | |
|---|---|---|---|
| | | TRANSMIT START-UP SIGNAL | S420 |
| START UP | | | |
| S422 | | OBTAIN AUTHENTICATION PUBLIC KEY 74 | S1912 |
| | | AUTHENTICATE MOBILE BATTERY 20 | S1230 |
| | | DETERMINE WHETHER OR NOT REPLACEMENT AND/OR CHARGING IS POSSIBLE | S450 |
| S1914 | | REQUEST ACCESS TO DATA | S1240 |
| OBTAIN AUTHENTICATION PUBLIC KEY 174 | | | |
| AUTHENTICATE BATTERY STATION 120 | S1250 | | |
| DECIDE WHETHER OR NOT TO PERMIT ACCESS | S1252 | | |
| | | ACCESS DATA OF MOBILE BATTERY 20 | S1260 |
| STORE ACCESS HISTORY | | EXECUTE REPLACEMENT AND/OR CHARGING | S1270 |
| END | S1262 | END | |

FIG.19

92

<u>20</u>

MOBILE BATTERY

STATION
AUTHENTICATION UNIT

1378                    232

ELECTRIC
POWER CONNECTOR ～212

AUTHENTICATION
HANDLING UNIT

COMMUNICATION
CONNECTOR ～214

ELECTRICITY
ACCUMULATION UNIT ～220

(BATTERY AUTHENTICATION)
PUBLIC KEY TRANSMISSION
UNIT

CONTROL UNIT ～230

1012                    2014

SENSING UNIT ～240

STATION AUTHENTICATION
PUBLIC KEY OBTAINMENT
UNIT

STORAGE UNIT ～250

FIG.20

## 250

STORAGE UNIT

BATTERY ID STORAGE UNIT — 252

72 (BATTERY) AUTHENTICATION PRIVATE KEY STORAGE UNIT — 254

74 (BATTERY) AUTHENTICATION PUBLIC KEY STORAGE UNIT — 955

174 STATION AUTHENTICATION PUBLIC KEY DATABASE

1352 1354

STATION AUTHENTICATION WHITE LIST

82 (BATTERY) SIGNATURE PRIVATE KEY STORAGE UNIT

956 957

84 (BATTERY) SIGNATURE VERIFICATION PUBLIC KEY STORAGE UNIT

184 STATION SIGNATURE VERIFICATION PUBLIC KEY DATABASE

2190

2192 2194

CODE * * * *

2162 2170

CERTIFICATE STORAGE UNIT

FIG.21

<u>370</u>

FIG.22

520

STORAGE UNIT

STATION ID STORAGE UNIT — 2352

172

STATION AUTHENTICATION PRIVATE KEY STORAGE UNIT — 2354

174

STATION AUTHENTICATION PUBLIC KEY STORAGE UNIT — 2355

74

(BATTERY AUTHENTICATION) PUBLIC KEY DATABASE

522

524

(BATTERY AUTHENTICATION) WHITELIST

182

STATION SIGNATURE PRIVATE KEY STORAGE UNIT

2356

2357

184

STATION SIGNATURE VERIFICATION PUBLIC KEY STORAGE UNIT

84

(BATTERY) SIGNATURE VERIFICATION PUBLIC KEY DATABASE

2362

2370

2390

2392

CODE

2394

* * * *

CERTIFICATE STORAGE UNIT

*FIG.23*

FIG.24

S1230

MOBILE BATTERY 20

BATTERY REPLACEMENT MACHINE 120

512

CHALLENGE CODE
TRANSMISSION PROCESSING

S2522

* * * *

S2524

RESPONSE CODE
TRANSMISSION PROCESSING

AUTHENTICATION
CODE

502

74

ENCRYPT

512

* * * *

512

* * * *

CHALLENGE CODE

72

DECRYPT

2502

DECRYPTED
AUTHENTICATION
CODE

DECRYPTED
AUTHENTICATION CODE

2502

DETERMINATION
PROCESSING

S2526

END

END

FIG.25

*FIG.26*

S1250

BATTERY REPLACEMENT MACHINE 120

MOBILE BATTERY 20

1712

🔒 * * * *

CHALLENGE CODE
TRANSMISSION PROCESSING

S2722

S2724

RESPONSE CODE
TRANSMISSION PROCESSING

AUTHENTICATION
CODE

1702

174

ENCRYPT

1712

🔒 * * * *

1712

🔒 * * * *

CHALLENGE CODE

172

DECRYPT

2702

🔓 DECRYPTED
AUTHENTICATION CODE

DECRYPTED
AUTHENTICATION
CODE

2702

DETERMINATION
PROCESSING

S2726

END

END

FIG.27

MOBILE BATTERY

20

| HISTORY MANAGEMENT UNIT | MEMORY |
|---|---|

2832　　　2834　　2838　　　2836

230

| ACCESS CONTROL UNIT | REQUEST EXECUTION UNIT |
|---|---|

120

BATTERY STATION

376

| DATA WRITING UNIT | 2872 |
|---|---|
| PROGRAM EXECUTION UNIT | 2874 |
| DATA READING UNIT | 2876 |
| HISTORY MANAGEMENT UNIT | 2878 |

| CHARGING AND DISCHARGING HISTORY STORAGE UNIT | ACCESS HISTORY STORAGE UNIT |
|---|---|

2852　　　2854　　2856　　　2858

250

| AUTHENTICATION HISTORY STORAGE UNIT | FIRMWARE STORAGE UNIT |
|---|---|

*FIG.28*

250

2954

| BATTERY ID | TIME | TYPE OF CONNECTION EQUIPMENT | EQUIPMENT ID OF CONNECTION EQUIPMENT | ACCESS STATUS |
|---|---|---|---|---|

2956

| BATTERY ID | PERIOD | TYPE OF CONNECTION EQUIPMENT | EQUIPMENT ID OF CONNECTION EQUIPMENT | AMOUNT OF CHARGING AND DISCHARGING ELECTRIC POWER (kWh) |
|---|---|---|---|---|

2958

| BATTERY ID | TIME | TYPE OF CONNECTION EQUIPMENT | EQUIPMENT ID OF CONNECTION EQUIPMENT | AUTHENTICATION STATUS |
|---|---|---|---|---|

*FIG.29*

START

S3012 — USER REGISTRATION PROCESSING

S3014 — ENABLEMENT PROCESSING FOR CERTIFICATE AUTHENTICATION

S3020 — PROCESSING OF ATTACHING MOBILE BATTERY 20 TO ELECTRIC MOTORCYCLE 30

S3022 — INTERACTIVE AUTHENTICATION PROCESSING BETWEEN MOBILE BATTERY 20 AND ELECTRIC MOTORCYCLE 30

S3024 — PROCESSING OF OBTAINING VEHICLE ID BY MOBILE BATTERY 20

S3026 — PROCESSING OF GENERATING CHARGING AND DISCHARGING HISTORY

PROCESSING OF ATTACHING MOBILE BATTERY 20 TO BATTERY STATION 120 — S3030

INTERACTIVE AUTHENTICATION PROCESSING BETWEEN MOBILE BATTERY 20 AND BATTERY STATION 120 — S3032

PROCESSING OF OBTAINING CHARGING AND DISCHARGING HISTORY BY BATTERY STATION 120 — S3034

PROCESSING OF DISPENSING MOBILE BATTERY 20 — S3042

PROCESSING OF CHARGING MOBILE BATTERY 20 — S3044

PROCESSING OF CHARGING USAGE FEE — S3050

END

*FIG.30*

| MOBILE BATTERY 20 | | BATTERY REPLACEMENT MACHINE 120 |
|---|---|---|

S420 — TRANSMIT START-UP SIGNAL

S422 — START UP

S424 — REQUEST TRANSMISSION OF BATTERY ID

S426 — TRANSMIT BATTERY ID

S3130 — GENERATE AND TRANSMIT AUTHENTICATION CODE (CHALLENGE CODE)

S3134 — GENERATE RESPONSE CODE BY USING AUTHENTICATION CODE AND AUTHENTICATION PRIVATE KEY 72

S3132 — GENERATE VERIFICATION CODE BY USING AUTHENTICATION CODE AND AUTHENTICATION PUBLIC KEY 74

S3136 — TRANSMIT RESPONSE CODE

S3138 — VERIFY WHETHER OR NOT RESPONSE CODE AND VERIFICATION CODE HAVE PREDETERMINED MATHEMATICAL RELATIONSHIP

S440 — DETERMINE WHETHER OR NOT PRODUCT IS LEGITIMATE

S450 — DETERMINE WHETHER OR NOT REPLACEMENT AND/ OR CHARGING IS POSSIBLE

END          END

FIG.31

104

AUTHENTICATION CODE
GENERATION UNIT
(RANDOM NUMBER GENERATOR)
3220

AUTHENTICATION CODE
(RANDOM NUMBER)
3222

3240

RESPONSE CODE
GENERATION UNIT

AUTHENTICATION
PRIVATE KEY
(ORDER: n)

MATHEMATICAL
RELATIONSHIP
3212

AUTHENTICATION
PUBLIC KEY
(POINT nG OBTAINED BY
SCALAR MULTIPLICATION
OF BASE POINT G ON
ELLIPTIC CURVE BY n)

VERIFICATION CODE
GENERATION UNIT
3230

3242

RESPONSE CODE

MATHEMATICAL
RELATIONSHIP
3214

VERIFICATION CODE
3232

3250

VERIFICATION UNIT

FIG.32

*FIG.33*

RESPONSE CODE GENERATION UNIT

72    3222

AUTHENTICATION CODE

3440

FOURTH ARITHMETIC OPERATION UNIT

3242

RESPONSE CODE (SAME AS VERIFICATION CODE)

74    3222    VERIFICATION CODE GENERATION UNIT

AUTHENTICATION CODE

FIRST ARITHMETIC OPERATION UNIT    3310

VERIFICATION CODE    3232

3240

3230    3250

DETERMINATION UNIT    3350

VERIFICATION UNIT

*FIG.34*

S1230

MOBILE BATTERY 20

BATTERY REPLACEMENT MACHINE 120

S3520

CHALLENGE CODE
TRANSMISSION PROCESSING

AUTHENTICATION
CODE

3222

S3540

RESPONSE CODE
TRANSMISSION PROCESSING

VERIFICATION CODE
GENERATION PROCESSING

S3530

72    3222

AUTHENTICATION
CODE

3242

RESPONSE CODE

RESPONSE CODE

3242

74    3222

AUTHENTICATION
CODE

3232

VERIFICATION CODE

DETERMINATION
PROCESSING

S3550

END

END

FIG.35

S1250

BATTERY REPLACEMENT MACHINE 120

MOBILE BATTERY 20

CHALLENGE CODE
TRANSMISSION PROCESSING — S3620

AUTHENTICATION
CODE

3222

VERIFICATION CODE
GENERATION PROCESSING — S3630

S3640

RESPONSE CODE
TRANSMISSION PROCESSING

174    3222

172    3222

AUTHENTICATION
CODE

AUTHENTICATION
CODE

3232

RESPONSE CODE

VERIFICATION CODE

3242

3242

RESPONSE CODE

DETERMINATION
PROCESSING — S3650

END

END

*FIG.36*

PUBLIC KEY TRANSMISSION UNIT 1012    232

PUBLIC KEY OBTAINMENT UNIT 1014    378

S1020
TRANSMIT START-UP SIGNAL

S1022
START UP

S1024
REQUEST TRANSMISSION OF BATTERY ID AND ELECTRONIC CERTIFICATE OF PUBLIC KEY

S3732
TRANSMIT ELECTRONIC CERTIFICATE OF AUTHENTICATION PUBLIC KEY 74 (PRODUCT CERTIFICATE 3720) AND ELECTRONIC CERTIFICATE OF SIGNATURE VERIFICATION PUBLIC KEY 84 (IC MANUFACTURER CERTIFICATE 3730)

S3734
CONFIRM AUTHENTICITY OF SIGNATURE VERIFICATION PUBLIC KEY 84 BY USING PUBLIC KEY 94 OF ROOT CERTIFICATION AUTHORITY INCLUDED IN ROOT CERTIFICATE 3740

S1040
USE SIGNATURE VERIFICATION PUBLIC KEY 84 TO DECRYPT AUTHENTICATION PUBLIC KEY 74 ENCRYPTED WITH SIGNATURE PRIVATE KEY 82

S1042
COMPARE PLAINTEXT AUTHENTICATION PUBLIC KEY 74 WITH DECRYPTED AUTHENTICATION PUBLIC KEY 74

S1044
STORE AUTHENTICATION PUBLIC KEY 74 IF BOTH MATCH

END

END

FIG.37

110

*FIG.38*

*FIG.39*

MOBILE BATTERY 20

STORE AUTHENTICATION PUBLIC KEY 174

S1212

START UP

S422

BATTERY REPLACEMENT MACHINE 120

STORE AUTHENTICATION PUBLIC KEY 74 — S1214

TRANSMIT START-UP SIGNAL — S420

EXCHANGE PUBLIC KEYS (AND VARIETY OF CERTIFICATES) — S4022

GENERATE COMMON KEY USED AS SESSION KEY, BASED ON ITS OWN PRIVATE KEY AND ANOTHER PARTY'S PUBLIC KEY — S4024

START CRYPTOGRAPHIC COMMUNICATION USING SESSION KEY — S4026

ACCESS DATA OF MOBILE BATTERY 20 — S1260

STORE ACCESS HISTORY

EXECUTE REPLACEMENT AND/OR CHARGING — S1270

END

S1254

END

*FIG.40*

5000

5000

5012

CPU

5018          5016                    5010      5014

| DISPLAY DEVICE | GRAPHICS CONTROLLER | HOST CONTROLLER | RAM |

5024

HARD DISK DRIVE

5022                    5020

| COMMUNICATION INTERFACE | INPUT/OUTPUT CONTROLLER |

NETWORK

5026      5001

DVD-ROM DRIVE

5042                    5040      5030

| KEYBOARD | INPUT/OUTPUT CHIP | ROM |

*FIG.41*

## INTERNATIONAL SEARCH REPORT

International application No.

**PCT/JP2023/023439**

### A. CLASSIFICATION OF SUBJECT MATTER

*G06F 21/44*(2013.01)i; *G06F 8/65*(2018.01)i; *H04L 9/32*(2006.01)i
FI:  G06F21/44 350; H04L9/32 200F; G06F8/65; H04L9/32 200B

According to International Patent Classification (IPC) or to both national classification and IPC

### B. FIELDS SEARCHED

Minimum documentation searched (classification system followed by classification symbols)

G06F21/44; G06F8/65; H04L9/32

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2017-102537 A (DAINIPPON PRINTING CO LTD) 08 June 2017 (2017-06-08)<br>paragraphs [0014]-[0037] | 1-8, 13-15, 17, 22-23, 33-34 |
| Y | paragraphs [0014]-[0037] | 9-10, 18-21 |
| A | | 11-12, 16, 24-32 |
| Y | JP 2020-198483 A (HONDA MOTOR CO LTD) 10 December 2020 (2020-12-10)<br>paragraphs [0008]-[0072], fig. 4, 7, 13 | 1, 3, 9-10, 18-21, 24, 26, 30-34 |
| X | JP 2002-366938 A (MATSUSHITA ELECTRIC IND CO LTD) 20 December 2002 (2002-12-20)<br>paragraphs [0036]-[0051], [0077]-[0086] | 1, 11-12, 33-34 |
| Y | JP 2007-195155 A (MATSUSHITA ELECTRIC IND CO LTD) 02 August 2007 (2007-08-02)<br>paragraphs [0048]-[0126] | 1, 3, 10, 24, 26, 30-34 |
| A | | 25, 27-29 |
| Y | JP 2016-192840 A (RENESAS ELECTRONICS CORP) 10 November 2016 (2016-11-10)<br>paragraphs [0043]-[0070] | 1, 3, 10, 24, 26, 30-34 |

☐ Further documents are listed in the continuation of Box C.        ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/023439**

| Patent document cited in search report | | | Publication date (day/month/year) | Patent family member(s) | | | Publication date (day/month/year) |
|---|---|---|---|---|---|---|---|
| JP | 2017-102537 | A | 08 June 2017 | (Family: none) | | | |
| JP | 2020-198483 | A | 10 December 2020 | US | 2020/0382313 | A1 | |
| | | | | paragraphs [0020]-[0084], fig. 4, 7, 13 | | | |
| | | | | CN | 112019340 | A | |
| JP | 2002-366938 | A | 20 December 2002 | (Family: none) | | | |
| JP | 2007-195155 | A | 02 August 2007 | US | 2009/0292918 | A1 | |
| | | | | paragraphs [0039]-[0117] | | | |
| | | | | WO | 2007/072746 | A1 | |
| | | | | EP | 1965539 | A1 | |
| | | | | CN | 101331707 | A | |
| JP | 2016-192840 | A | 10 November 2016 | US | 2016/0294206 | A1 | |
| | | | | paragraphs [0051]-[0078] | | | |
| | | | | CN | 106026219 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019181661 A

- WO 2020059833 A